# EUROPEAN PATENT APPLICATION

(11) **EP 2 451 166 A1**
(43) Date of publication of application: **09.05.2012**
(21) Application number: 10794022.3
(22) Date of filing: 22.06.2010
(51) Int. Cl.: H04N 13/00, G06F 9/445, G09G 5/00, G09G 5/36, G09G 5/377, G09G 5/38, H04N 7/173

(54) **IMAGE DATA TRANSMISSION DEVICE, CONTROL METHOD AND PROGRAM**

(30) Priority: 29.06.2009 JP 2009153686; 13.11.2009 JP 2009260367
(71) Applicant: Sony Corporation, Tokyo 108-0075 (JP)
(72) Inventor: TSUKAGOSHI, Ikuo, Tokyo 108-0075 (JP)
(74) Representative: Thévenet, Jean-Bruno
(86) International application number: PCT/JP2010/060580
(87) International publication number: WO 2011/001852

(57) **Abstract**

[Object] To enable the necessity of transmission of 3D image data via a digital interface to be dealt with.

[solution] The initial version of an HDMI transmitting unit 206A is set to HDMI 1.3. When a power-on state is set and when a connection of a monitor device (TV) is confirmed using an HPD line, a CPU 211A determines the necessity of an update. When received image data is 3D image data and when the monitor device is 3D-compatible, an update process is performed. An update manager 271 is connected to a download server 243, and downloads update digital interface control software from the download server 243 to install it into an HDMI controller 273. Accordingly, the version of the HDMI transmitting unit 206A is set to HDMI 1.4, so that the 3D image data can be handled.

## Description

### Technical Field

The present invention relates to an image data transmitting apparatus, a control method, and a program, and more specifically to an image data transmitting apparatus and the like that transmit image data to an external device using a digital interface.

### Background Art

For example, in PTL 1, a transmission method of stereo image data using television broadcast airwaves is proposed. In this case, stereo image data including left-eye image data and right-eye image data is transmitted, and a television receiver performs stereo image display utilizing binocular disparity.

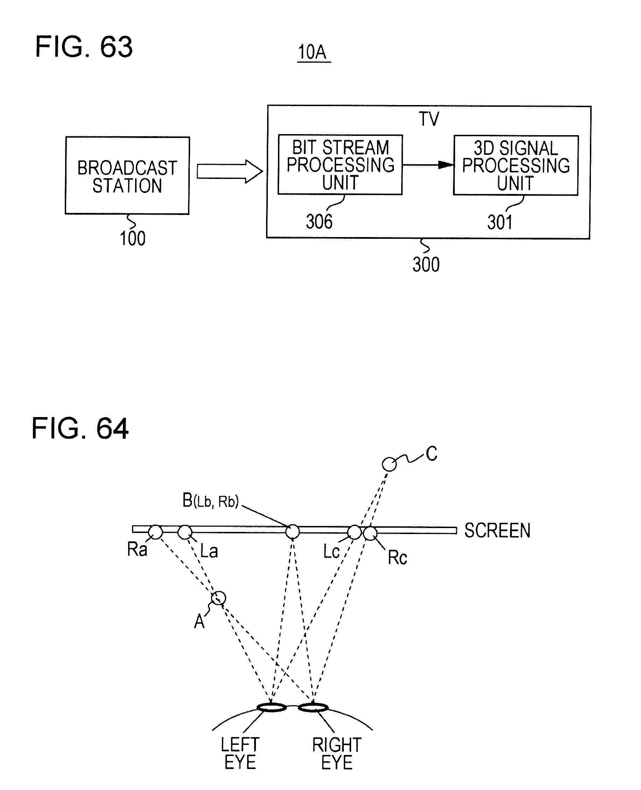

Fig. 64 illustrates a relationship in stereo image display utilizing binocular disparity between display positions of left and right images of an object on a screen and a reproduction position of a stereoscopic image. For example, for an object A of which a left image La and a right image Ra are displayed shifted to the right and to the left, respectively, on a screen in the manner as illustrated in the figure, the reproduction position of a stereoscopic image is located in front of the surface of the screen because left and right lines of sight intersect in front of the surface of the screen.

Also, for example, for an object B of which a left image Lb and a right image Rb are displayed at the same position on the screen in the manner as illustrated in the figure, the reproduction position of a stereoscopic image is located on the surface of the screen because left and right lines of sight intersect on the surface of the screen. Furthermore, for example, for an object C of which a left image Lc and a right image Rc are displayed shifted to the left and to the right, respectively, on the screen in the manner as illustrated in the figure, the reproduction position of a stereoscopic image is located behind the surface of the screen because left and right lines of sight intersect behind the surface of the screen.

In recent years, for example, interfaces such as HDMI (High Definition Multimedia Interface) interfaces have been increasingly widespread as communication interfaces for high-speed transmission of image and audio data from a source device to a sink device. The source device is, for example, a game console, a DVD (Digital Versatile Disc) recorder, a set-top box, or any other AV source (Audio Visual source). The sink device is, for example, a television receiver, a projector, or any other display. For example, NPL 1 and NPL 2 describe the details of the HDMI standard.

### Citation List

### Patent Literature

PTL 1: Japanese Unexamined Patent Application Publication No. 2005-6114

### Non Patent Literature

NPL 1: High-Definition Multimedia Interface Specification Version 1.3a, November 10 2006
NPL 2: High-Definition Multimedia Interface Specification Version 1.4, June 5 2009

### Summary of Invention

### Technical Problem

For example, it is conceivable that a set-top box and a television receiver (monitor device) are connected using an HDMI cable and that image data received by the set-top box is transmitted to the television receiver via an HDMI digital interface. In this case, in a case where the set-top box receives stereo image data, the stereo image data may not be satisfactorily transmitted to the television receiver even if the television receiver is capable of handling stereo image data. That is, in this case, an HDMI transmitting unit of the set-top box has a version of HDMI 1.3 or less and is not capable of handling stereo image data.

It is an object of the present invention to enable the necessity of transmission of stereo image data via a digital interface to be favorably dealt with.

### Solution to Problem

A concept of the present invention lies in
an image data transmitting apparatus including:
a digital interface unit that transmits image data to an external device; and
a state changing unit that changes a state of the digital interface unit at a predetermined timing from a state of being incapable of handling stereo image data to a state of being capable of handling the stereo image data.

In the present invention, a digital interface unit transmits image data to an external device. The image data is received image data, reproduced image data, or the like. For example, received image data is received from a streaming server via a network. Also, for example, received image data is received from a broadcast signal. A state changing unit changes the state of the digital interface unit at a predetermined timing from a state of being incapable of handling stereo image data to a state of being capable of handling the stereo image data.

The predetermined timing is, for example, a time when the necessity of transmission of stereo image data to an external device occurs. Therefore, the necessity of transmission of stereo image data via a digital interface can be favorably dealt with. For example, when image data received by a data receiving unit is stereo image data and when the external device is capable of handling stereo image data, the state of the digital interface unit is changed from a state of being incapable of handling stereo image data to a state of being capable of handling it.

For example, the state of the digital interface unit is changed by installing update digital interface control software into a digital interface unit that controls the digital interface unit. For example, the update digital interface control software is obtained by being downloaded from a download server via a network interface unit. Also, for example, the update digital interface control software is obtained from an external memory.

For example, when the state of the digital interface unit is changed to a state of being capable of handling stereo image data and when stereo image data is transmitted as image data, identification information indicating stereo image data is inserted into a blanking period (for example, Vendor Specific InfoFrame) of the image data.

### Advantageous Effects of Invention

According to the present invention, a digital interface unit is configured such that its state is changed at a predetermined timing from a state of being incapable of handling stereo image data to a state of being capable of handling it, and the necessity of transmission of stereo image data via a digital interface can be favorably dealt with.

### Brief Description of Drawings

[Fig. 1] Fig. 1 is a block diagram illustrating an example configuration of a stereo image display system as an embodiment of the present invention.
[Fig. 2] Fig. 2 is a block diagram illustrating an example configuration of a transmission data generation unit in a broadcast station.
[Fig. 3] Fig. 3 is a diagram illustrating image data of a 1920 x 1080p pixel format.
[Fig. 4] Fig. 4 includes diagrams describing the "Top & Bottom" method, the "Side By Side" method, and the "Frame Sequential" method that are transmission methods of stereo image data (3D image data).
[Fig. 5] Fig. 5 is a diagram describing an example of detecting a disparity vector of a right-eye image with respect to a left-eye image.
[Fig. 6] Fig. 6 is a diagram describing that a disparity vector is determined using a block matching method.
[Fig. 7] Fig. 7 includes diagrams illustrating an example of a disparity vector VV at a predetermined position in an image, which is detected by a disparity vector detection unit.
[Fig. 8] Fig. 8 is a diagram illustrating the transmission content of disparity vectors.
[Fig. 9] Fig. 9 includes diagrams illustrating an example of disparity detection blocks and the transmission content of disparity vectors in this case.
[Fig. 10] Fig. 10 includes diagrams describing an example of the timing for detecting and transmitting disparity vectors.
[Fig. 11] Fig. 11 is a diagram describing an example of the timing for detecting and transmitting disparity vectors.
[Fig. 12] Fig. 12 is a diagram illustrating an example of data streams that are multiplexed in a transmission data generation unit.
[Fig. 13] Fig. 13 is a block diagram illustrating another example configuration of the transmission data generation unit in the broadcast station.
[Fig. 14] Fig. 14 includes diagrams describing superimposed positions and the like of left-eye graphics information and right-eye graphics information in a case where the transmission method is a first transmission method ("Top & Bottom" method).
[Fig. 15] Fig. 15 includes diagrams describing a method for generating left-eye graphics information and right-eye graphics information in a case where the transmission method is the first transmission method ("Top & Bottom" method).
[Fig. 16] Fig. 16 is a diagram describing a method for generating left-eye graphics information and right-eye graphics information in a case where the transmission method is a second transmission method ("Side By Side" method).
[Fig. 17] Fig. 17 is a diagram describing a method for generating left-eye graphics information and right-eye graphics information in a case where the transmission method is the second transmission method ("Side By Side" method).
[Fig. 18] Fig. 18 is a block diagram illustrating another example configuration of the transmission data generation unit in the broadcast station.
[Fig. 19] Fig. 19 is a block diagram illustrating another example configuration of the transmission data generation unit in the broadcast station.
[Fig. 20] Fig. 20 is a diagram describing information of "Location" and "Region size".
[Fig. 21] Fig. 21 is a block diagram illustrating an example configuration of a Z data unit that outputs disparity information for each piece of superimposition information.
[Fig. 22] Fig. 22 is a diagram schematically illustrating an example structure of video elementary stream.
[Fig. 23] Fig. 23 includes diagrams illustrating an example configuration of user data in the MPEG2, H.264 AVC, and VC-1 encoding methods.
[Fig. 24] Fig. 24 is a diagram illustrating an example configuration of "user_structure" including disparity information (disparity vectors).
[Fig. 25] Fig. 25 is a block diagram illustrating another example configuration of the transmission data generation unit in the broadcast station.
[Fig. 26] Fig. 26 is a block diagram illustrating another example configuration of the transmission data generation unit in the broadcast station.
[Fig. 27] Fig. 27 includes diagrams illustrating superimposed positions of left-eye graphics information and right-eye graphics information in a case where the transmission method is the second transmission method ("Side By Side" method).
[Fig. 28] Fig. 28 includes diagrams illustrating a state where a graphics image that is based on graphics data extracted from bit stream data and transmitted using a conventional method is superimposed as it is on a left-eye image and a right-eye image.
[Fig. 29] Fig. 29 includes diagrams illustrating disparity vectors (View Vectors) at three object positions at times T0, T1, T2, and T3.
[Fig. 30] Fig. 30 is a diagram illustrating a display example of a subtitle (graphics information) on an image, and the perspective of a background, a foreground object, and the subtitle.
[Fig. 31] Fig. 31 includes diagrams illustrating a display example of a subtitle (graphics information) on an image, and left-eye graphics information LGI and right-eye graphics information RGI for displaying the subtitle.
[Fig. 32] Fig. 32 includes diagrams describing that a disparity vector corresponding to its superimposed position among disparity vectors detected at a plurality of positions in an image is used as a disparity vector.
[Fig. 33] Fig. 33 includes diagrams illustrating that objects A, B, and C are present in an image and that text information indicating the annotation of each object is superimposed at a position near the object.
[Fig. 34] Fig. 34 is a block diagram illustrating an example configuration of a set-top box included in a stereo image display system.
[Fig. 35] Fig. 35 is a block diagram illustrating an example configuration of a bit stream processing unit included in the set-top box.
[Fig. 36] Fig. 36 is a diagram illustrating an example of speaker output control in a case where a video object on the left-hand side when viewed in the direction of a television display has a large disparity vector W1.
[Fig. 37] Fig. 37 is a block diagram illustrating another example configuration of the bit stream processing unit included in the set-top box.
[Fig. 38] Fig. 38 is a block diagram illustrating another example configuration of the bit stream processing unit included in the set-top box.
[Fig. 39] Fig. 39 is a block diagram illustrating another example configuration of the bit stream processing unit included in the set-top box.
[Fig. 40] Fig. 40 is a block diagram illustrating another example configuration of the bit stream processing unit included in the set-top box.
[Fig. 41] Fig. 41 is a block diagram illustrating another example configuration of the bit stream processing unit included in the set-top box.
[Fig. 42] Fig. 42 is a block diagram illustrating an example configuration of a television receiver included in the stereo image display system.
[Fig. 43] Fig. 43 is a block diagram illustrating an example configuration of an HDMI transmitting unit (HDMI source) and an HDMI receiving unit (HDMI sink).
[Fig. 44] Fig. 44 is a block diagram illustrating an example configuration of an HDMI transmitter included in the HDMI transmitting unit and an HDMI receiver included in the HDMI receiving unit.
[Fig. 45] Fig. 45 is a diagram illustrating an example structure of TMDS transmission data (in a case where image data having 1920 pixels in the horizontal direction and 1080 lines in the vertical direction is transmitted).
[Fig. 46] Fig. 46 is a pin array (type A) of HDMI terminals of the source device and the sink device between which an HDMI cable is connected.
[Fig. 47] Fig. 47 is a diagram illustrating the 3D video format of the frame packing method that is one TMDS transmission data structure of stereo image data.
[Fig. 48] Fig. 48 is a diagram illustrating the 3D video format of the line alternative method that is one TMDS transmission data structure of stereo image data.
[Fig. 49] Fig. 49 is a diagram illustrating the 3D video format of the side-by-side (Full) method that is one TMDS transmission data structure of stereo image data.
[Fig. 50] Fig. 50 is a diagram illustrating an example structure of an HDMI Vendor Specific InfoFrame packet.
[Fig. 51] Fig. 51 is a diagram illustrating an example data structure of E-EDID.
[Fig. 52] Fig. 52 is a diagram illustrating an example structure of data in a Vender Specific area (HDMI Vendor Specific Data Block).
[Fig. 53] Fig. 53 is a block diagram illustrating an example configuration of a set-top box.
[Fig. 54] Fig. 54 is a diagram illustrating a connection relationship between the set-top box and a download server or the like.
[Fig. 55] Fig. 55 is a diagram describing a digital interface control software update process in an on-line state.
[Fig. 56] Fig. 56 is a diagram describing a digital interface control software update process in an off-line state.
[Fig. 57] Fig. 57 is a flowchart illustrating an example of an update-related process in a CPU of the set-top box.
[Fig. 58] Fig. 58 is a flowchart illustrating another example of the update-related process in the CPU of the set-top box.
[Fig. 59] Fig. 59 is a flowchart illustrating an example of an update process in the CPU of the set-top box.
[Fig. 60] Fig. 60 is a flowchart illustrating an example of an update digital interface control software download process in a PC.
[Fig. 61] Fig. 61 is a block diagram illustrating another example configuration of the bit stream processing unit included in the set-top box.
[Fig. 62] Fig. 62 is a block diagram illustrating another example configuration of the bit stream processing unit included in the set-top box.
[Fig. 63] Fig. 63 is a block diagram illustrating another example configuration of the stereo image display system.
[Fig. 64] Fig. 64 is a diagram illustrating a relationship in stereo image display utilizing binocular disparity between display positions of left and right images of an object on a screen and a reproduction position of a stereoscopic image.

### Description of Embodiments

Hereinafter, a mode for carrying out the invention (hereinafter, referred to as an "embodiment") will be described. Note that the description will be given in the following order.
1. Embodiment
2. Example modifications

### < 1. Embodiment>

### [Example Configuration of Stereo Image Transmitting and Receiving System]

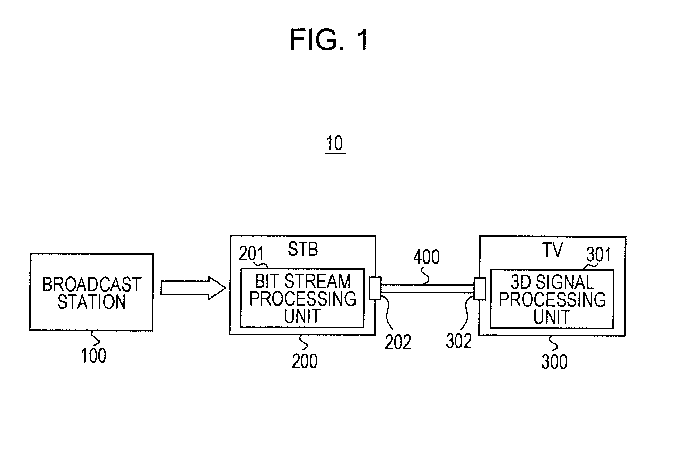

Fig. 1 illustrates an example configuration of a stereo image transmitting and receiving system 10 as an embodiment. The stereo image transmitting and receiving system 10 includes a broadcast station 100, a set-top box (STB: Set Top Box) 200, and a television receiver 300.

The set-top box 200 and the television receiver 300 are connected to each other via an HDMI (High Definition Multimedia Interface) cable 400. The set-top box 200 is provided with an HDMI terminal 202. The television receiver 300 is provided with an HDMI terminal 302. One end of the HDMI cable 400 is connected to the HDMI terminal 202 of the set-top box 200, and the other end of the HDMI cable 400 is connected to the HDMI terminal 302 of the television receiver 300.

[Description of Broadcast Station]

The broadcast station 100 transmits bit stream data carried on a broadcast wave. The bit stream data contains stereo image data including left-eye image data and right-eye image data, audio data, and superimposition information data, and also contains disparity information (disparity vectors) and the like. Here, the superimposition information data is closed caption data, subtitle data, graphics data, text data, or the like.

### "Example Configuration of Transmission Data Generation Unit"

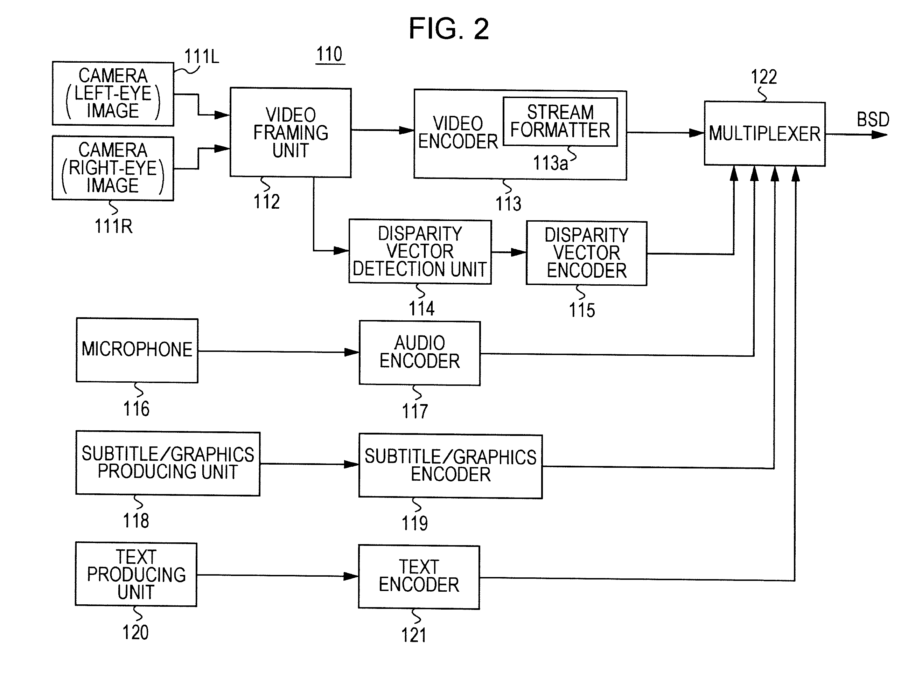

Fig. 2 illustrates an example configuration of a transmission data generation unit 110 in the broadcast station 100 that generates the bit stream data described above. This example configuration is an example of transmitting a disparity vector as numerical information. The transmission data generation unit 110 includes cameras 111L and 111R, a video framing unit 112, a video encoder 113, a video encoder 113, a disparity vector detection unit 114, and a disparity vector encoder 115. Also, the transmission data generation unit 110 includes a microphone 116 and an audio encoder 117. Furthermore, the transmission data generation unit 110 includes a subtitle/graphics producing unit 118, a subtitle/graphic encoder 119, a text producing unit 120, a text encoder 121, and a multiplexer 122.

The camera 111L captures a left-eye image and obtains left-eye image data for stereo image display. The camera 111R captures a right-eye image and obtains right-eye image data for stereo image display. The video framing unit 112 modifies and processes the left-eye image data obtained by the camera 111L and the right-eye image data obtained by the camera 111R into a state according to the transmission method.

### [Example of Transmission Method of Stereo Image Data]

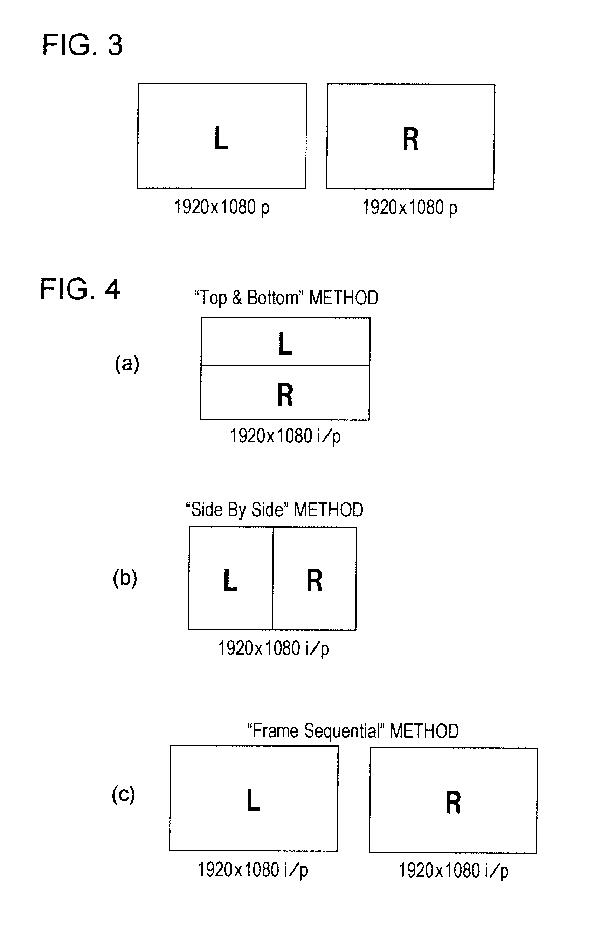

While the following first to third methods are given here as transmission methods of stereo image data (3D image data), any other transmission method may be used. The description will be given here in the context of a case where, as illustrated in Fig. 3, image data for each of the left eye (L) and the right eye (R) is image data having a determined resolution, for example, a 1920 x 1080p pixel format, by way of example.

A first transmission method is the "Top & Bottom" method that is a method in which, as illustrated in Fig. 4(a), data of each line of the left-eye image data is transmitted in the first half in the vertical direction and data of each line of the left-eye image data is transmitted in the second half in the vertical direction. In this case, since the lines of the left-eye image data and right-eye image data are decimated to 1/2, the vertical resolution is one half of that of the original signal.

A second transmission method is the "Side By Side" method that is a method in which, as illustrated in Fig. 4(b), pixel data of the left-eye image data is transmitted in the first half in the horizontal direction and pixel data of the right-eye image data is transmitted in the second half in the horizontal direction. In this case, the pixel data in the horizontal direction of each of the left-eye image data and the right-eye image data is decimated to 1/2. The horizontal resolution is one half of the current signal.

A third transmission method is the "Frame Sequential" method that is a method in which, as illustrated in Fig. 4(c), the left-eye image data and the right-eye image data are transmitted while being sequentially switched every field.

Referring back to Fig. 2, the video encoder 113 performs encoding using MPEG4-AVC, MPEG2, VC-1, or the like on the stereo image data modified and processed by the video framing unit 112 to obtain encoded video data. Also, the video encoder 113 includes a stream formatter 113a in the rear stage thereof. The stream formatter 113 allows the generation of an elementary stream of video including the encoded video data in the payload portion.

The disparity vector detection unit 114 detects a disparity vector that is disparity information about one of a left-eye image and a right-eye image with respect to the other at a predetermined position in an image on the basis of the left-eye image data and the right-eye image data. Here, a predetermined position in an image includes all pixel positions, a representative position of each area formed of a plurality of pixels, a representative position of an area where superimposition information, here, graphic information, or text information, is to be superimposed, or the like.

### [Detection of Disparity Vector]

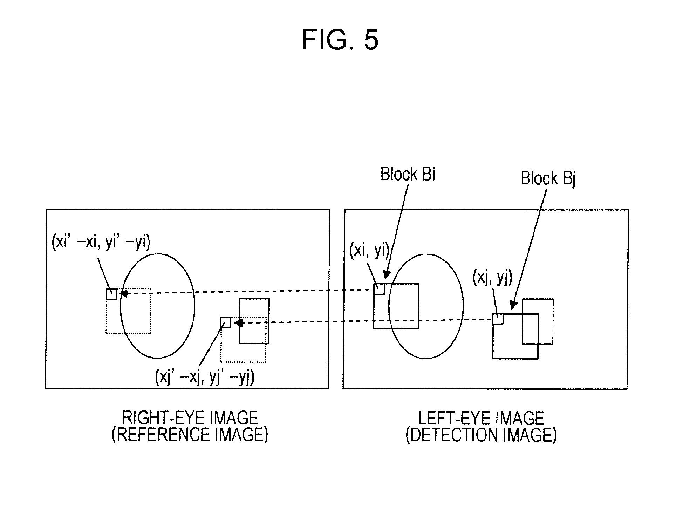

An example of detection of a disparity vector will be described. The description will be given here of an example of detecting a disparity vector of a right-eye image with respect to a left-eye image. As illustrated in Fig. 5, it is assumed that the left-eye image is a detection image and the right-eye image is a reference image. In this example, disparity vectors at positions (xi, yi) and (xj, yj) are detected.

A case where a disparity vector at the position (xi, yi) is detected will be described by way of example. In this case, for example, an 8 x 8 or 16 x 16 pixel block (disparity detection block) Bi whose upper left pixel is at the position (xi, yi) is set in the left-eye image. Then, a pixel block that matches the pixel block Bi is searched for in the right-eye image.

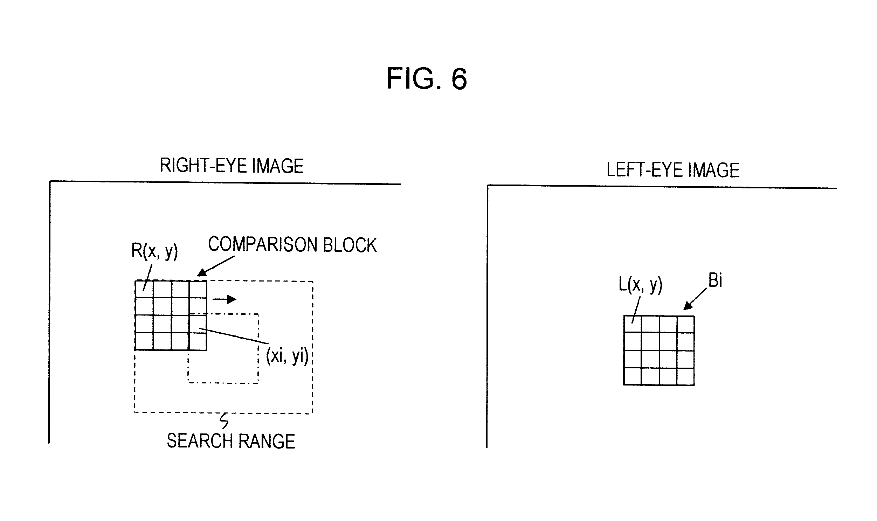

In this case, a search range centered on the position (xi, yi) is set in the right-eye image, and, for example, an 8 x 8 or 16 x 16 comparison block, which is similar to the pixel block Bi described above, is sequentially set using each of the pixels in the search range as the pixel of interest. The sum total of the absolute difference values between the pixel block Bi and each of the comparison blocks sequentially set is determined for each corresponding pixel. Here, as illustrated in Fig. 6, when a pixel value of the pixel block Bi is denoted by L(x, y) and a pixel value of a comparison block is denoted by R(x, y), the sum total of the absolute difference value between the pixel block Bi and a certain comparison block is represented by ∑|L(x, y) - R (x, y)|.

When a search range set in the right-eye image includes n pixels, n sum totals S1 to Sn are finally determined, and the minimum sum total Smin among them is selected. Then, the position of (xi', yi') the upper left pixel of the comparison block for which the sum total Smin is obtained is obtained. Accordingly, the disparity vector at the position (xi, yi) is detected in a manner such as (xi'-xi, yi'-yi). The disparity vector at the position (xj, yj) is also detected using similar processing steps by setting in the left-eye image, for example, an 8 x 8 or 16 x 16 pixel block Bj whose upper left pixel is at the position (xj, yj) although the detailed description is omitted.

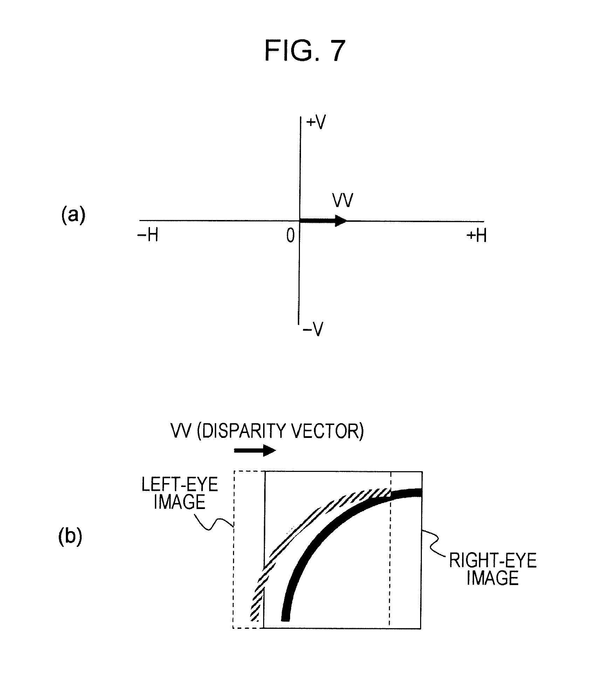

Fig. 7(a) illustrates an example of a disparity vector VV at a predetermined position in an image, which is detected by the disparity vector detection unit 114. This case means that, as illustrated in Fig. 7(b), at the predetermined position in the image, the left-eye image (detection image) which is shifted by the disparity vector W overlaps the right-eye image (reference image).

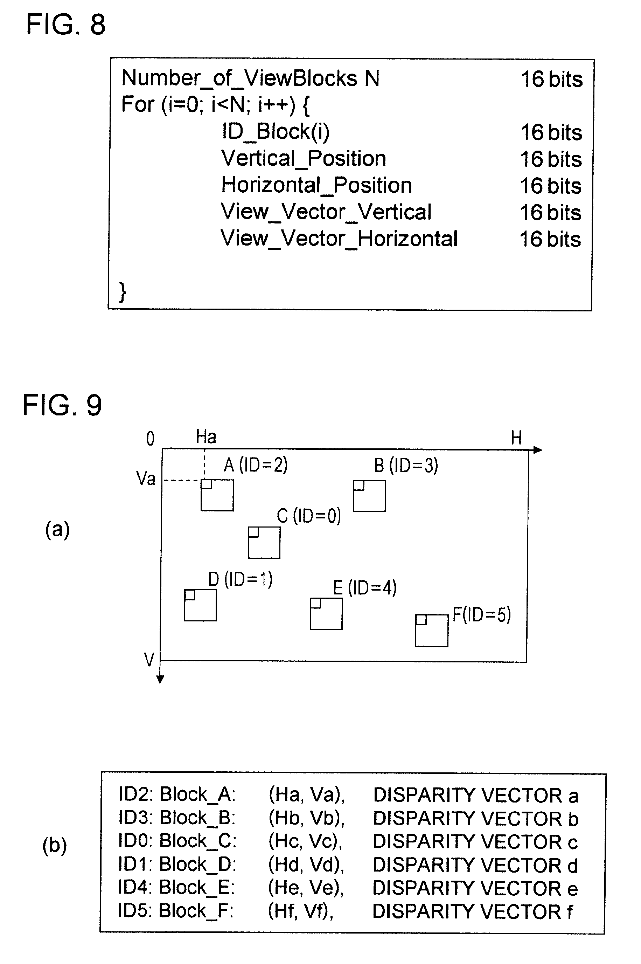

Referring back to Fig. 2, the disparity vector encoder 115 generates an elementary stream of disparity vectors including the disparity vector detected by the disparity vector detection unit 114 and the like. Here, an elementary stream of disparity vectors includes the following content. That is, an ID (ID_Block), vertical position information (Vertical_Position), horizontal position information (Horizontal_Position), and a disparity vector (View_Vector) are set as one set. Then, this set is repeated N times, the number of which is equal to the number of disparity detection blocks. Fig. 8 illustrates the transmission content of disparity vectors. A disparity vector includes a vertical direction component (View_Vector_Verticai) and a horizontal direction component (View_Vector_Horizontal).

Note that the vertical and horizontal positions of a disparity detection block are offset values in the vertical direction and the horizontal direction from the upper left origin of the image to the upper left pixel of the block. The ID of a disparity detection block is assigned to the transmission of each disparity vector in order to ensure a link to the pattern of superimposition information to be superimposed and displayed on the image, such as subtitle information, graphics information, or text information.

For example, as illustrated in Fig. 9(a), when disparity detection blocks A to F are present, as illustrated in Fig. 9(b), the transmission content includes the IDs of the disparity detection blocks A to F, vertical and horizontal position information, and disparity vectors. For example, in Fig. 9(b), for the disparity detection block A, ID 2 indicates the ID of the disparity detection block A, (Ha, Va) indicates the vertical and horizontal position information of the disparity detection block A, and disparity vector a indicates the disparity vector of the disparity detection block A.

Here, the timing for detecting and transmitting disparity vectors will be described. Regarding the timing, for example, the following first to fourth examples are conceivable.

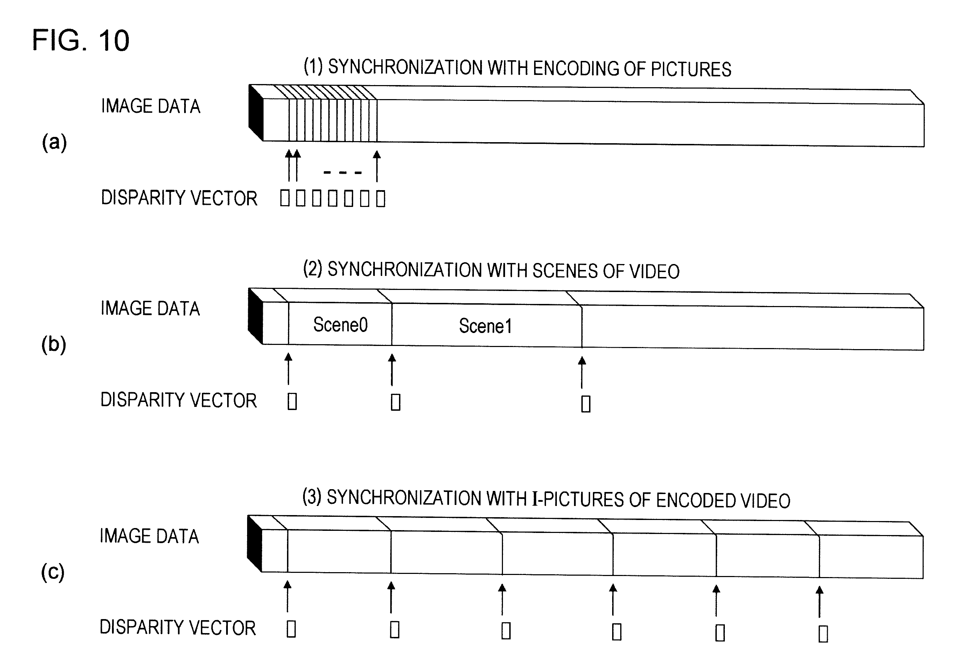

In the first example, as illustrated in Fig. 10(a), the timing is synchronized with the encoding of pictures. In this case, the disparity vectors are transmitted in units of pictures. The unit of picture is the smallest unit for the transmission of disparity vectors. In the second example, as illustrated in Fig. 10(b), the timing is synchronized with the scenes of video. In this case, the disparity vectors are transmitted in units of scenes.

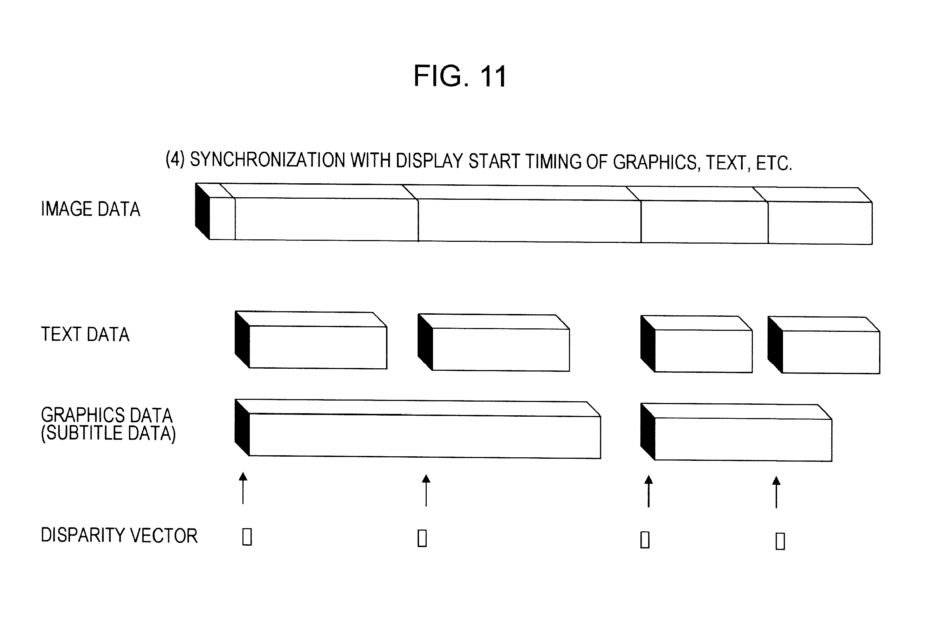

In the third example, as illustrated in Fig. 10(c), the timing is synchronized with the I-pictures (Intra pictures) or GOPs (Groups Of Pictures) of encoded video. In the fourth example, as illustrated in Fig. 11, the timing is synchronized with the timing at which the display of subtitle information, graphics information, text information, or the like to be superimposed and displayed on an image is started.

Referring back to Fig. 2, the microphone 116 detects audio corresponding to images photographed using the cameras 111L and 111R, and obtains audio data. The audio encoder 117 performs encoding using MPEG-2 Audio AAC or the like on the audio data obtained by the microphone 116, and generates an elementary stream of audio.

The subtitle/graphics producing unit 118 produces data of subtitle information or graphics information (subtitle data, graphics data) to be superimposed on the image. The subtitle information is, for example, a subtitle. Also, the graphics information is, for example, a logo or the like. The subtitle data and the graphics data are bitmap data. The subtitle data and the graphics data are added with idling offset information indicating the superimposed position on the image.

The idling offset information indicates offset values in the vertical direction and horizontal direction from, for example, the upper left origin of the image to the upper left pixel at the superimposed position of the subtitle information or the graphics information. Note that the standard by which subtitle data is transmitted as bitmap data has been standardized as DVB_Subtitling by DVB, which is a digital broadcast standard in Europe, and is in operation.

The subtitle/graphic encoder 119 receives, as an input, the data of subtitle information or graphics information (subtitle data, graphics data) produced by the subtitle/graphics producing unit 118. Then, the subtitle/graphic encoder 119 generates an elementary stream including these pieces of data in the payload portion.

The text producing unit 120 produces data of text information (text data) to be superimposed on an image. The text information is, for example, an electronic program guide, the content of broadcast teletext, or the like. Similarly to the graphics data described above, the text data is added with idling offset information indicating the superimposed position on the image. The idling offset information indicates, for example, offset values in the vertical direction and horizontal direction from the upper left origin of the image to the upper left pixel at the superimposed position of the text information. Note that examples of the transmission of text data include EPG that is in operation for program reservation, and CC_data (Closed Caption) in ATSC, which is a digital terrestrial standard in the U.S.

The text encoder 121 receives, as an input, the text data text produced by the producing unit 120. Then, the text encoder 121 generates an elementary stream including these pieces of data in the payload portion.

The multiplexer 122 multiplexes packetized elementary streams output from the encoders 113, 115, 117, 119, and 121. Then, the multiplexer 122 outputs bit stream data (transport stream) BSD as transmission data.

The operation of the transmission data generation unit 110 illustrated in Fig. 2 will be described briefly. In the camera 111L, a left-eye image is photographed. Left-eye image data for stereo image display, which is obtained by the camera 111L, is supplied to the video framing unit 112. Also, in the camera 111R, a right-eye image is photographed. Right-eye image data for stereo image display, which is obtained by the camera 111R, is supplied to the video framing unit 112. In the video framing unit 112, the left-eye image data and the right-eye image data are modified and processed into a state according to the transmission method, and stereo image data is obtained (see Figs. 4(a) to 4(c)).

The stereo image data obtained by the video framing unit 112 is supplied to the video encoder 113. In the video encoder 113, encoding using MPEG4-AVC, MPEG2, VC-1, or the like is performed on the stereo image data, and a video elementary stream including the encoded video data is generated. The video elementary stream is supplied to the multiplexer 122.

Also, the left-eye image data and the right-eye image data obtained by the cameras 111L and 111R are supplied to the disparity vector detection unit 114 through the video framing unit 112. In the disparity vector detection unit 114, a disparity detection block is set at a predetermined position in an image on the basis of the left-eye image data and the right-eye image data, and a disparity vector that is disparity information about one of a left-eye image and a right-eye image with respect to the other is detected.

A disparity vector at a predetermined position in an image, which is detected by the disparity vector detection unit 114, is supplied to the disparity vector encoder 115. In this case, the ID of a disparity detection block, the vertical position information of the disparity detection block, the horizontal position information of the disparity detection block, and a disparity vector are passed as one set. In the disparity vector encoder 115, a disparity vector elementary stream including the transmission content of disparity vectors (see Fig. 8) is generated. The disparity vector elementary stream is supplied to the multiplexer 122.

Also, in the microphone 116, audio corresponding to the images photographed using the cameras 111L and 111R is detected. Audio data obtained by the microphone 116 is supplied to the audio encoder 117. In the audio encoder 117, encoding using MPEG-2 Audio AAC or the like is performed on the audio data, and an audio elementary stream including the encoded audio data is generated. The audio elementary stream is supplied to the multiplexer 122.

Also, in the subtitle/graphics producing unit 118, data of subtitle information or graphics information (subtitle data, graphics data) to be superimposed on an image is produced. This data (bitmap data) is supplied to the subtitle/graphic encoder 119. The subtitle/graphics data is added with idling offset information indicating the superimposed position on the image. In the subtitle/graphic encoder 119, predetermined encoding is performed on the graphics data, and an elementary stream including the encoded data is generated. The elementary stream is supplied to the multiplexer 122.

Also, in the text producing unit 120, data of text information (text data) to be superimposed on an image is produced. The text data is supplied to the text encoder 121. Similarly to the graphics data described above, the text data is added with idling offset information indicating the superimposed position on the image. In the text encoder 121, predetermined encoding is performed on the text data, and an elementary stream including the encoded data is generated. The elementary stream is supplied to the multiplexer 122.

In the multiplexer 122, the packets of the elementary streams supplied from the respective encoders are multiplexed, and bit stream data (transport stream) BSD serving as transmission data is obtained.

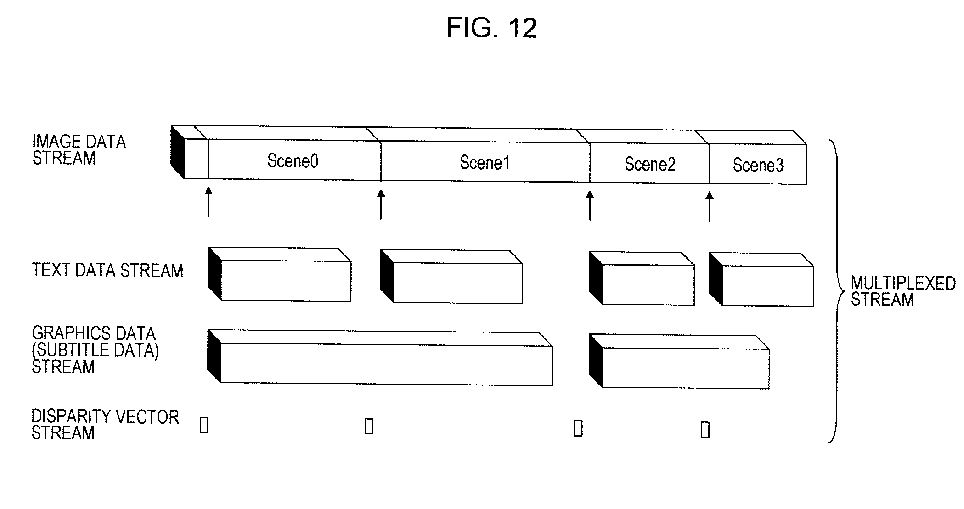

Fig. 12 illustrates an example of the respective data streams to be multiplexed in the transmission data generation unit 110 illustrated in Fig. 2. Note that this example indicates a case where disparity vectors are detected in units of scenes of video and are transmitted (see Fig. 10(b)). Note that a time stamp for synchronized display is added to the packets of each stream, and it is possible to control, on the receiving side, the timing at which subtitle information, graphics information, text information, or the like is superimposed on an image.

### "Another Example Configuration of Transmission Data Generation Unit"

Note that the transmission data generation unit 110 illustrated in Fig. 2 described above is configured to transmit the transmission content of disparity vectors (see Fig. 8) to the receiving side as an independent elementary stream. However, it is also conceivable that the transmission content of disparity vectors is transmitted in a state of being embedded in another stream. For example, the transmission content of disparity vectors is transmitted in a state of being embedded in a stream of video as user data. Also, for example, the transmission content of disparity vectors is transmitted in a state of being embedded in a stream of subtitle, graphics, or text.

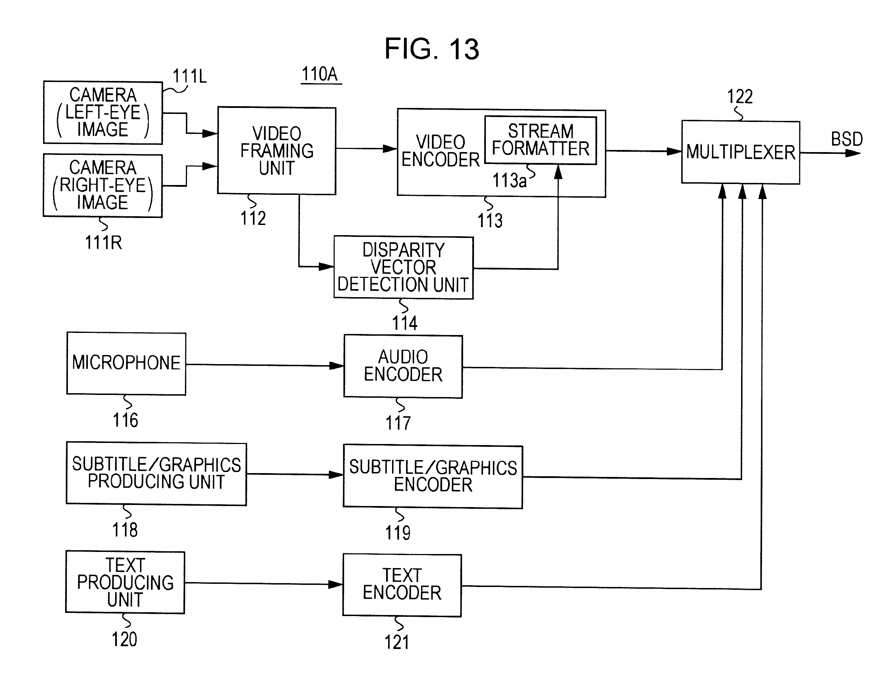

Fig. 13 illustrates an example configuration of a transmission data generation unit 110A. This example is also an example of transmitting a disparity vector as numerical information. The transmission data generation unit 110A is configured to transmit the transmission content of disparity vectors in a state of embedding it in a stream of video as user data. In Fig. 13, portions corresponding to those in Fig. 2 are assigned the same numerals, and the detailed description thereof is omitted.

In the transmission data generation unit 110A, a disparity vector at a predetermined position in an image detected by the disparity vector detection 114 is supplied to the stream formatter 113a in the video encoder 113. In this case, the ID of a disparity detection block, the vertical position information of the disparity detection block, the horizontal position information of the disparity detection block, and a disparity vector are passed as one set. In the stream formatter 113a, the transmission content of disparity vectors (see Fig. 8) is embedded in a stream of video as user data.

The other elements of the transmission data generation unit 110A illustrated in Fig. 13 are configured in a manner similar to that of the transmission data generation unit 110 illustrated in Fig. 2, and operate in a similar manner although the detailed description is omitted.

### "Another Example Configuration of Transmission Data Generation Unit"

Also, the transmission data generation unit 110 illustrated in Fig. 2 described above and the transmission data generation unit 110A illustrated in Fig. 13 described above transmit a disparity vector as numerical information (see Fig. 8). However, instead of a disparity vector being transmitted as numerical information, disparity information is transmitted on the transmitting side while being reflected in advance in data of superimposition information (such as, for example, subtitle information, graphics information, or text information) to be superimposed on an image.

For example, in a case where disparity information is reflected in data of graphics information, graphics data corresponding to both left-eye graphics information to be superimposed on a left-eye image and right-eye graphics information to be superimposed on a right-eye image is generated on the transmitting side. In this case, the left-eye graphics information and the right-eye graphics information are the same graphics information. However, the display position of, for example, the right-eye graphics information in the image is configured to be shifted in the horizontal direction by the horizontal direction component of the disparity vector corresponding to the display position with respect to the left-eye graphics information.

For example, a disparity vector corresponding to its superimposed position among disparity vectors detected at a plurality of positions in an image is used as a disparity vector. Also, for example, a disparity vector at the position recognized to be the closest in terms of perspective among disparity vectors detected at a plurality of positions in an image is used as a disparity vector. Note that a similar operation is performed in a case where disparity information is reflected in data of subtitle information or graphics information although the detailed description is omitted.

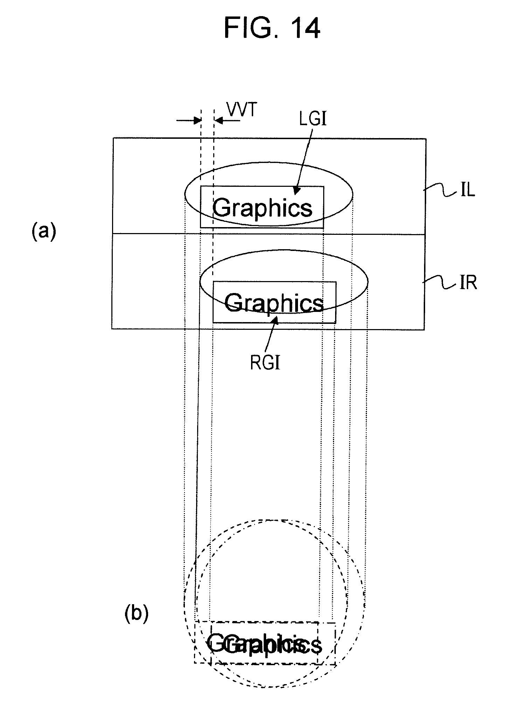

Fig. 14(a) illustrates superimposed positions of left-eye graphics information and right-eye graphics information in a case where the transmission method is the first transmission method described above ("Top & Bottom" method). The left-eye graphics information and the right-eye graphics information are the same information. However, right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL.

As illustrated in Fig. 14(a), graphics data is generated so that the pieces of graphics information LGI and RGI are superimposed on the images IL and IR, respectively. Accordingly, as illustrated in Fig. 14(b), a viewer can observe the pieces of graphics information LGI and RGI with disparity, together with the images IL and IR, and is able to also perceive the perspective of the graphics information.

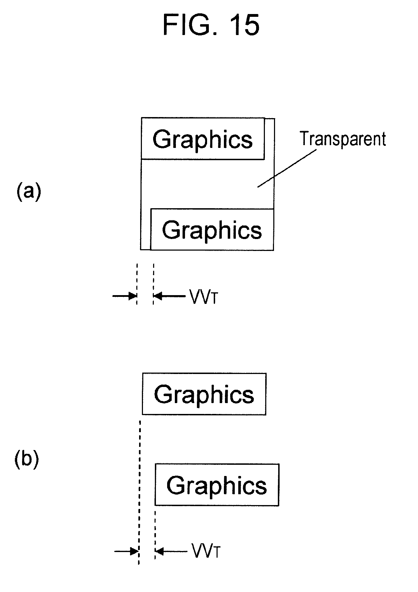

For example, as illustrated in Fig. 15(a), graphics data of the pieces of graphics information LGI and RGI are generated as data of a single area. In this case, data in the portion other than the pieces of graphics information LGI and RGI may be generated as transparent data. Also, for example, as illustrated in, Fig. 15(b), the graphics data of the pieces of graphics information LGI and RGI are generated as data of different areas.

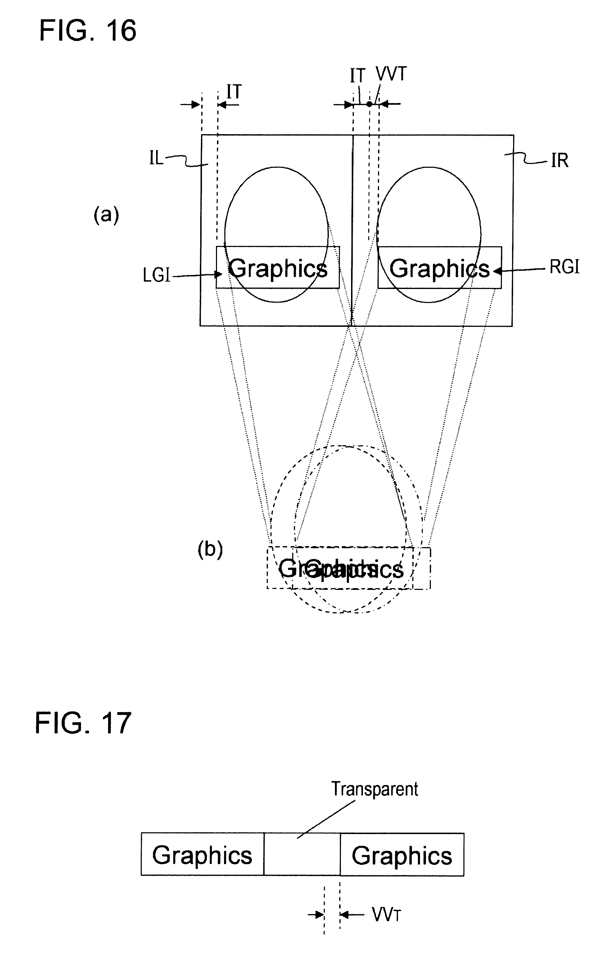

Fig. 16(a) illustrates superimposed positions of left-eye graphics information and right-eye graphics information in a case where the transmission method is the second transmission method described above ("Side By Side" method). The left-eye graphics information and the right-eye graphics information are the same information. However, right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL. Note that IT is an idling offset value.

Graphics data is generated so that, as illustrated in Fig. 16(a), the pieces of graphics information LGI and RGI are superimposed on the images IL and IR, respectively. Accordingly, as illustrated in Fig. 16(b), a viewer can observe the pieces of graphics information LGI and RGI with disparity, together with the images IL and IR, and is able to also perceive the perspective of the graphics information.

For example, as illustrated in Fig. 17, graphics data of the pieces of graphics information LGI and RGI are generated as data of a single area. In this case, data in the portion other than the pieces of graphics information LGI and RGI may be generated as transparent data.

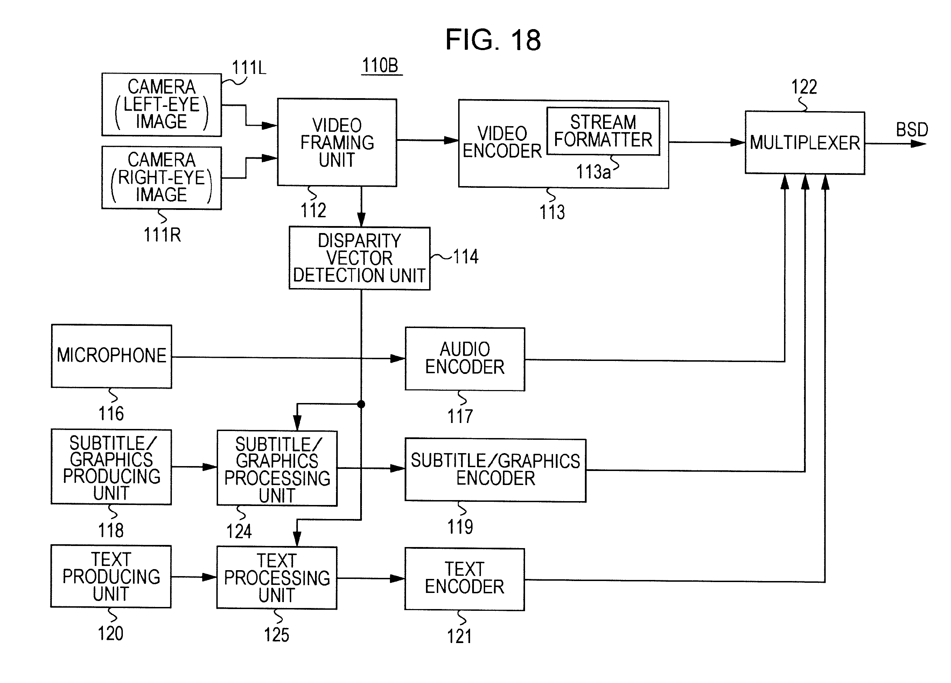

Fig. 18 illustrates an example configuration of a transmission data generation unit 110B. The transmission data generation unit 110B is configured to transmit disparity information while reflecting it in data of subtitle information, graphics information, or text information. In Fig. 18, portions corresponding to those in Fig. 2 are assigned the same numerals, and the detailed description thereof is omitted.

In the transmission data generation unit 1108, a subtitle/graphics processing unit 124 is inserted between the subtitle/graphics producing unit 118 and the subtitle/graphic encoder 119. Also, in the transmission data generation unit 110B, a text processing unit 125 is inserted between the text producing unit 120 and the text encoder 121. Then, a disparity vector at a predetermined position in an image, which is detected by the disparity vector detection unit 114, is supplied to the subtitle/graphics processing unit 124 and the text processing unit 125.

In the subtitle/graphics processing unit 124, data of left-eye and right-eye subtitle or graphics information items LGI and RGI to be superimposed on a left-eye image IL and a right-eye image IR are generated. In this case, the subtitle or graphics information items are produced on the basis of subtitle data or graphics data produced by the subtitle/graphics producing unit 118. The left-eye and right-eye subtitle information items or graphics information items are the same information. However, the superimposed position of, for example, the right-eye subtitle information or graphics information in the image is configured to be shifted in the horizontal direction by the horizontal direction component VVT of the disparity vector with respect to the left-eye subtitle information or graphics information (see Figs. 14(a) and 16(a)).

In this manner, the subtitle data or graphics data generated by the subtitle/graphics processing unit 124 is supplied to the subtitle/graphic encoder 119. Note that the subtitle data or graphics data is added with idling offset information indicating the superimposed position on the image. In the subtitle/graphic encoder 119, an elementary stream of the subtitle data or graphics data generated by the subtitle/graphics processing unit 124 is generated.

Also, in the text processing unit 125, data of left-eye text information to be superimposed on the left-eye image and data of right-eye text information to be superimposed on the right-eye image are generated on the basis of the text data produced by the text producing unit 120. In this case, the left-eye text information and the right-eye text information are the same text information. However, the superimposed position of, for example, the right-eye text information in the image is configured to be shifted in the horizontal direction by the horizontal direction component VVT of the disparity vector with respect to the left-eye text information.

In this manner, the text data generated by the text processing unit 125 is supplied to the text encoder 121. Note that the text data is added with idling offset information indicating the superimposed positions on the image. In the text encoder 121, an elementary stream of the text s data generated by the text processing unit is generated.

The other elements of the transmission data generation unit 110B illustrated in Fig. 18 are configured in a manner similar to that of the transmission data generation unit 110 illustrated in Fig. 2, and operate in a similar manner although the detailed description is omitted.

### "Another Example Configuration of Transmission Data Generation Unit"

The transmission data generation unit 110 illustrated in Fig. 2 is configured to transmit the transmission content (see Fig. 8) that is based on disparity vectors detected by the disparity vector detection unit 114 to the receiving side as it is without associating it with each piece of superimposition information data. However, it is also conceivable that disparity information associated with each piece of superimposition information data is transmitted.

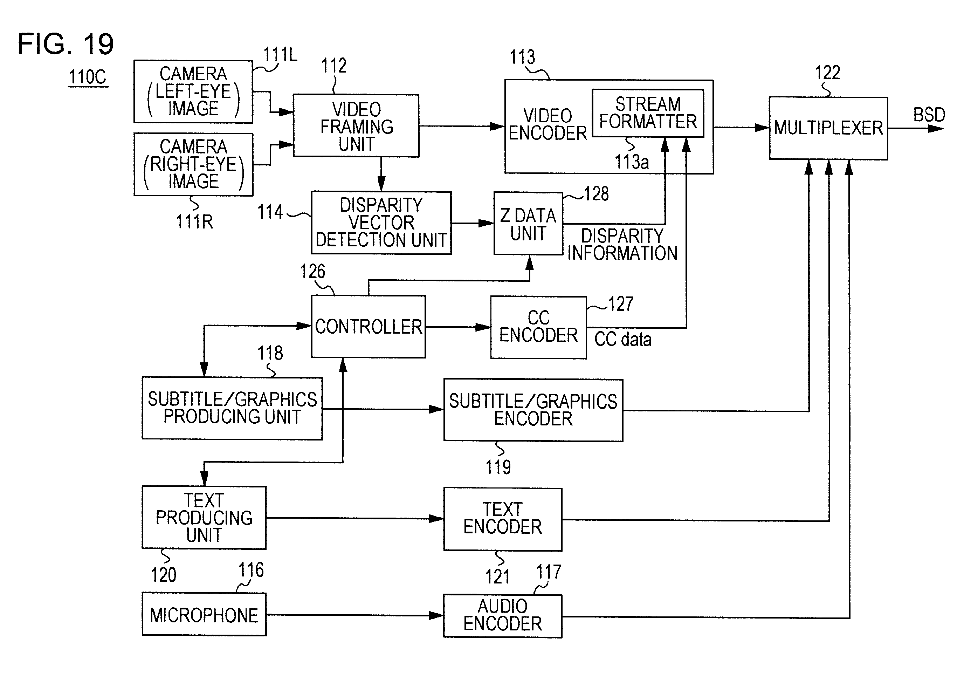

Fig. 19 illustrates an example configuration of a transmission data generation unit 110C. The transmission data generation unit 110C is configured to transmit disparity information associated with each piece of superimposition information data. In Fig. 19, portions corresponding to those in Fig. 2 are assigned the same numerals, and the detailed description thereof is omitted. The transmission data generation unit 110C includes a controller 126, a CC (Closed Caption) encoder 127, and a Z data unit 128.

The CC encoder 127 is an encoder complying with CEA-708, and outputs CC data (data of closed caption information) for displaying a caption with a closed caption. The controller 126 controls the CC encoder 127. For example, an information set formed of "Region_ID (WindowID)", "Location (AnchorID)", and "Region size (SetPenAttribute)" is supplied from the controller 126 to the CC encoder 127.

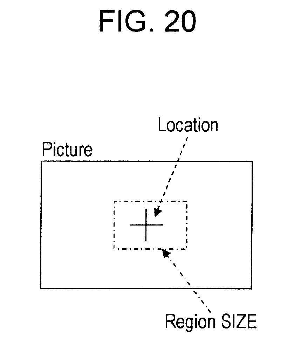

Here, as illustrated in Fig. 20, the information "Location (AnchorID)" indicates the position of an image (Picture) at which a caption with a displayed closed caption is to be displayed, which is identified by the "Region_ID (WindowID)". Also, as illustrated in Fig. 20, the information "Region size (SetPenAttribute)" indicates the size of the area where a caption displayed with a closed caption is to be displayed, which is identified by the "Region_ID (WindowID)".

The Z data unit 128 outputs disparity information (disparity vector) associated with each piece of superimposition information data. That is, for closed caption information, the Z data unit 128 outputs associated disparity information for each Window ID included in the CC data output from the CC encoder 127. Also, with regard to superimposition information such as subtitle information, graphics information, or text information, the Z data unit 128 outputs disparity information associated with each piece of superimposition information data.

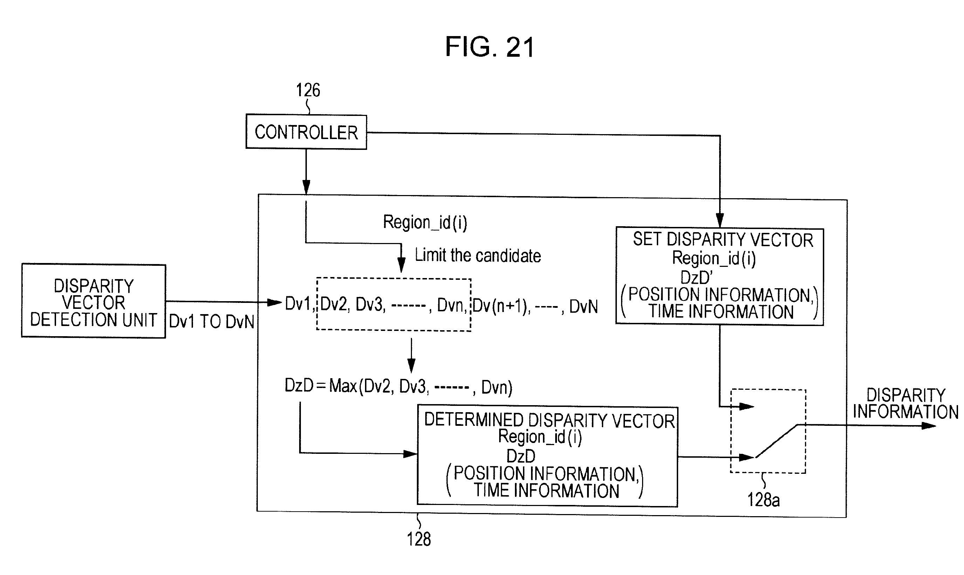

Fig. 21 illustrates an example configuration of the Z data unit 128. The Z data unit 128 outputs disparity information for each Region_id specified by the controller 126. Here, Region_id will be described. The Region_id serves as an identifier for associating each piece of superimposition information such as closed caption information, subtitle information, graphics information, text information with disparity information.

For example, 0 to 7 of Region_id are assigned for identifying the disparity information corresponding to Windows 0 to 7 of CC data specified in CEA-708. Also, 8 to 15 of Region_id are reserved for future extension. Also, 16 and the following values of Region_id are assigned for identifying the disparity information corresponding to superimposition information (such as subtitle information, graphics information, or text information) other than closed caption information.

Note that subtitle data and graphics data produced by the subtitle/graphics producing unit 118, and text data produced by the text producing unit 120 are assigned identifiers corresponding to the Region_id described above. Here, the term identifiers corresponding to Region_id means the same identifiers as the Region_id or identifiers associated with the Region_id. Thus, it is possible to associate, on the receiving side, each piece of superimposition information, i.e., subtitle information, graphics information, or text information, with disparity information to be used with the corresponding superimposition information.

As described above, the Z data unit 128 outputs disparity information for each Region_id. The Z data unit 128 selectively outputs, as disparity information, a determined disparity vector or a set disparity vector by, for example, the switching control of the controller 126 based on a user operation. The determined disparity vector is a disparity vector that is determined on the basis of a plurality of disparity vectors detected by the disparity vector detection unit 114. The set disparity vector is, for example, a disparity vector that is set through a predetermined program process or a manual operation of a user.

First, a case where a determined disparity vector is output as disparity information will be described. In this case, in connection with closed caption information, the information set of "Region_ID (WindowID)", "Location (AnchorID)", and "Region size (SetPenAttribute)", described above, is supplied from the controller 126 to the Z data unit 128. Also, in connection with each piece of superimposition information such as subtitle information, graphics information, or text information, an information set of "Region_ID", "Location", and "Region size" is supplied from the controller 126 to the Z data unit 128.

Also, a plurality of, here, N, disparity vectors Dv0 to DvN are input from the disparity vector detection unit 114 to the Z data unit 114. The N disparity vectors Dv0 to DvN are disparity vectors detected by the disparity vector detection unit 114 at N positions in an image on the basis of left-eye image data and right-eye image data.

The Z data unit 128 extracts a disparity vector relating to a display area of the superimposition information determined by the information "Location" and "Region size", for each Region_id, from the N disparity vectors Dv0 to DvN. For example, if one or a plurality of disparity vectors for which detected positions are located in the display area are present, the disparity vector or disparity vectors are selected as a disparity vector relating to the display area. Also, for example, if one or a plurality of disparity vectors for which the detected position is located in the display area are not present, one or a plurality of disparity vectors positioned near the display area are selected as disparity vectors relating to the display area. In the example illustrated in the figure, Dv2 to Dvn are selected as disparity vectors relating to the display area.

Then, the Z data unit 128 selects, for example, a maximum signed value from the disparity vectors relating to the display area, and sets it as determined disparity vector DzD. As described above, a disparity vector is formed of a vertical direction component (View Vector Vertical) and a horizontal direction component (View_Vector _Horizontal). However, for example, only the value of the horizontal direction component is used as the signed value here. The reason is that a process for shifting superimposition information such as closed caption information to be superimposed on a left-eye image and a right-eye image, in the horizontal direction on the basis of disparity information is performed on the receiving side, and the horizontal direction component is important.

Note that, as described above, the determined disparity vector DzD determined for each Region_id, which is the one corresponding to other superimposition information other than closed caption information, is added with information indicating the superimposed position and information indicating the display time under control of the controller 126. The information indicating the superimposed position is, for example, vertical direction position information (Vertical_Position) and horizontal direction position information (Horizontal_Position). Also, the information indicating the display time is, for example, information about the number of frames (Duration_Counter) corresponding to the display duration time. In the case of closed caption information, since the CC data contains control data of the superimposed position and the display time, there is no need to further send information about them.

Next, a case where a set disparity vector is output as disparity information will be described. In this case, the controller 126 sets a disparity vector for each Region_id through a predetermined program process or a manual operation of a user. For example, different disparity vectors are set in accordance with the superimposed position of superimposition information, or common disparity information is set regardless of the superimposed position. Alternatively, a different piece of disparity information is set for each type of superimposition information. The Z data unit 128 sets the disparity vector set in this manner for each Region_id as a set disparity vector DzD'. Here, the type of superimposition information is, for example, a type such as closed caption information, subtitle information, graphics information, or text information. Also, the type of superimposition information is, for example, a type categorized by superimposed position, superimposition duration, or the like.

Note that a disparity vector may be set by the controller 126 for each Region_id by setting substantially only the horizontal direction component. The reason is that, as described above, a process for shifting superimposition information such as closed caption information to be superimposed on a left-eye image and a right-eye image, in the horizontal direction on the basis of disparity information is configured to be performed on the receiving side, and the horizontal direction component is important. Also, similarly to the determined disparity vector DzD described above, the set disparity vector DzD', which is the one corresponding to other superimposition information other than closed caption information, is also added with information indicating the superimposed position and information indicating the display time under control of the controller 126.

Referring back to Fig. 19, the CC data output from the CC encoder 127 and the disparity information (DzD/DzD', including superimposed position information and display time information, in accordance with necessity) output from the Z data unit 128 are sent to the stream formatter 113a of the video encoder 113. In the stream formatter 113a, the CC data and the disparity information are embedded as user data in the video elementary stream.

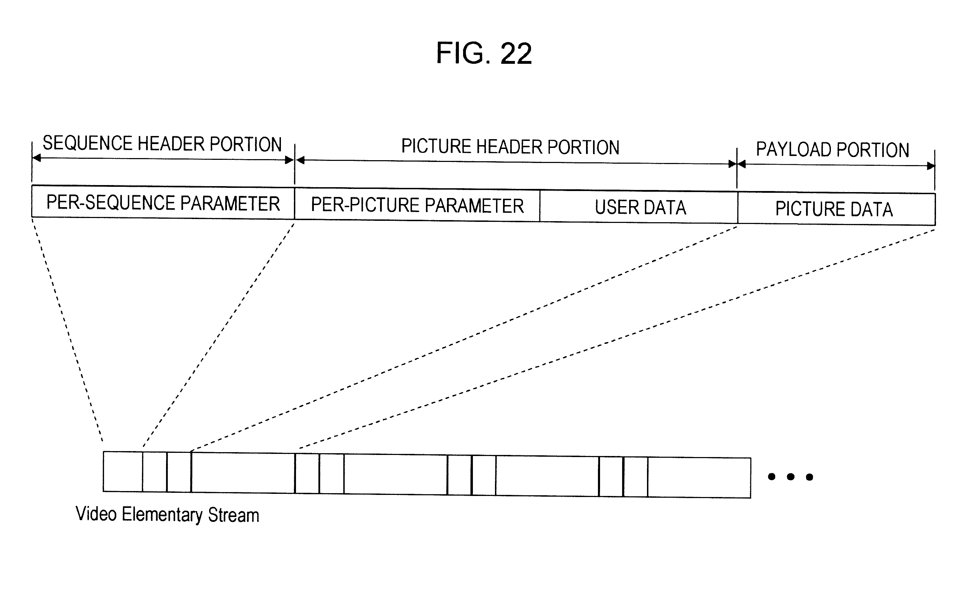

Fig. 22 schematically illustrates an example structure of a video elementary stream (Video Elementary Stream). A sequence header portion including a per-sequence parameter is arranged at the beginning of the video elementary stream. A picture header including a per-picture parameter and user data is arranged subsequent to the sequence header portion. A payload portion including picture data is arranged subsequent to the picture header portion. Subsequently, the picture header portion and the payload portion are repeatedly arranged.

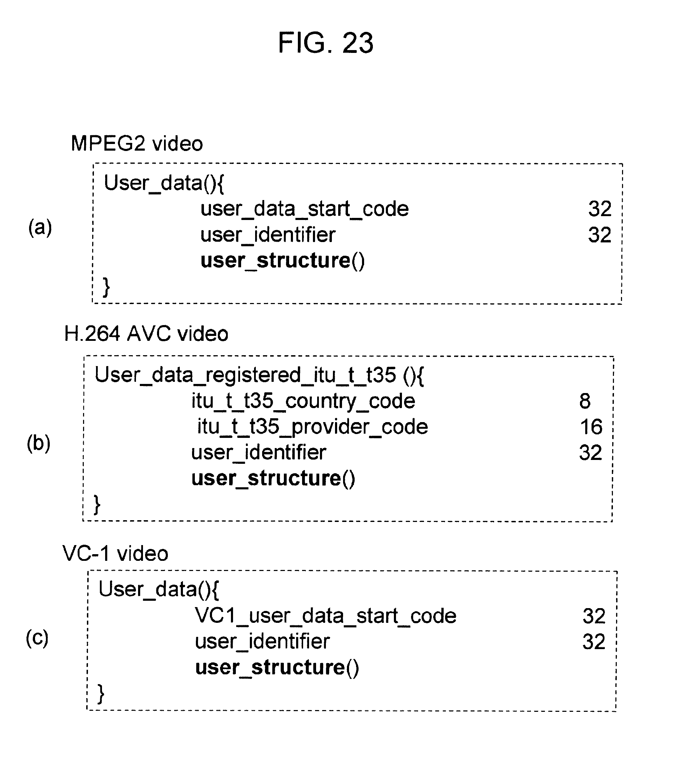

As described above, the CC data and the disparity information are embedded in the user data area of the picture header portion. Fig. 23 illustrates example configurations of the user data. Fig. 23(a) illustrates the configuration of the user data in a case where the encoding method is MPEG2. Fig. 23(b) illustrates the configuration of the user data in a case where the encoding method is H.264 AVC (MPEG4-AVC). Furthermore, Fig. 23(c) illustrates the configuration of the user data in a case where the encoding method is VC-1.

The configurations of the user data in the respective methods are configured to be substantially similar configuration although detailed descriptions are omitted. That is, first, a code indicating the start of the user data is arranged, the identifier "user identifier" indicating the type of the data is arranged thereafter, and furthermore the data body "user structure" is arranged thereafter.

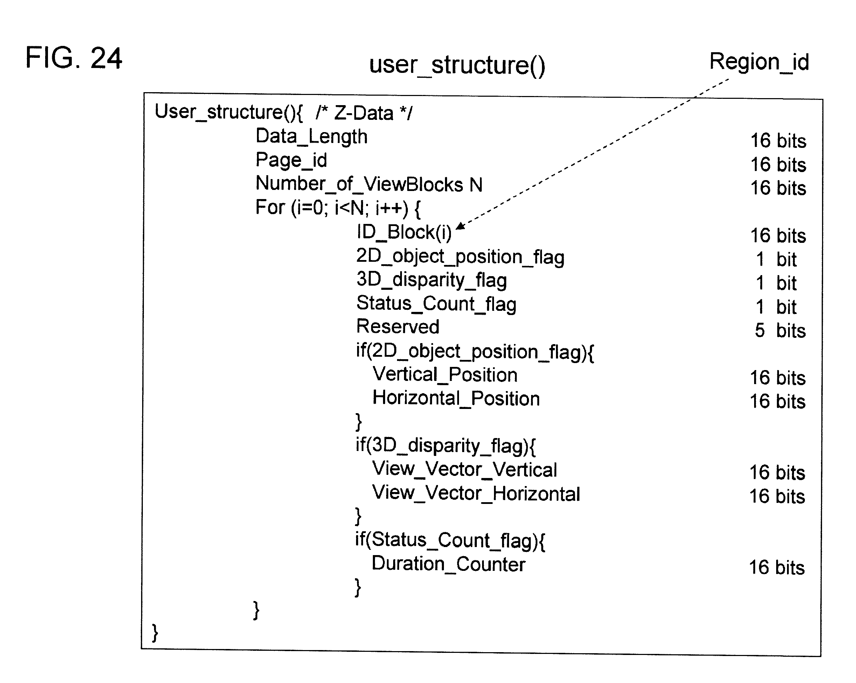

Fig. 24 illustrates an example configuration of "user_structure". "Data_Length" indicates the data size of the "user_structure". "Page_id" is configured to correspond to the pattern of caption data, which may also be used as a data group ID for identifying a caption language, and is an identifier for identifying the page of the "user structure". "Number of ViewBlocks N" indicates that the "user_structure" contains disparity information or the like of N pieces of Region_id.

"ID_Block(i)" indicates Region_id(i). "2D_object_posion_flag" is a flag indicating whether or not superimposed position information (information about a display position of 2D superimposition information) included as information about ID_Block(i) is to be referred to. In a case where the flag is on, it is indicated that the superimposed position information is to be referred to. In this case, superimposed position information ("Vertical_Position", "Horizontal_Position") is included as information about ID₋Block(i). "Vertical_Position" indicates the vertical direction position of the 2D superimposition information. "Horizontal_Position" indicates the horizontal direction position of the 2D superimposition information.

The CC data output from the CC encoder 127 described above contains control data of the superimposed position. Thus, for example, in a case where ID_Block(i) corresponds to closed caption information, "2D object_posion flag" is not on. Then, superimposed position information ("Vertical_Position", "Horizontal_Position") is not included as information about ID_Block(i).

"3D_disparity_flag" indicates whether or not disparity information (disparity vector) is included as information about ID₋Block(i). In a case where the flag is on, it is indicated that disparity information is included. "View_Vector Vertical" indicates the vertical direction component of a disparity vector. "View_Vector _Horizontal" indicates the horizontal direction component of a disparity vector. Note that in this example, both "View Vector Vertical" and "View_Vector_Horizontal" are included. However, when only the horizontal direction component is used, only "View_Vector_Horizontal" may be included.

"Status Count flag" is a flag indicating whether or not display time information in superimposition information is to be referred to as information about ID₋Block(i). In a case where the flag is on, it is indicated that the display time information is to be referred to. In this case, for example, information "Duration_Counter" indicating the number of frames corresponding to the display duration time is included as information bout ID₋Block(i). On the receiving side, while the display of the superimposition information is started in accordance with a time stamp in the system layer, the display of the superimposition information (including the effect of the disparity information) is reset after the number of frames corresponding to the display duration time has elapsed. Therefore, no need exists for repeated transmission of the same information on a picture-by-picture basis.

The CC data output from the CC encoder 127 described above contains control data of the display time. Thus, in a case where ID_Block(i) corresponds to closed caption information, "Status Count flag" is not on, and information "Duration_Counter" is not included as information about [0102]
The other elements of the transmission data generation unit 110C illustrated in Fig. 19 are configured in a manner similar to that of the transmission data generation unit 110 illustrated in Fig. 2, and operate in a similar manner although the detailed description is omitted.

### ID₋Block(i).

### "Another Example Configuration of Transmission Data Generation Unit"

The transmission data generation unit 110C illustrated in Fig. 19 transmits the disparity information obtained from the Z data unit 128 in the state of embedding it in the video elementary stream as user data. However, it is also conceivable that the disparity information obtained from the Z data unit 128 is transmitted to the receiving side as an independent elementary stream.

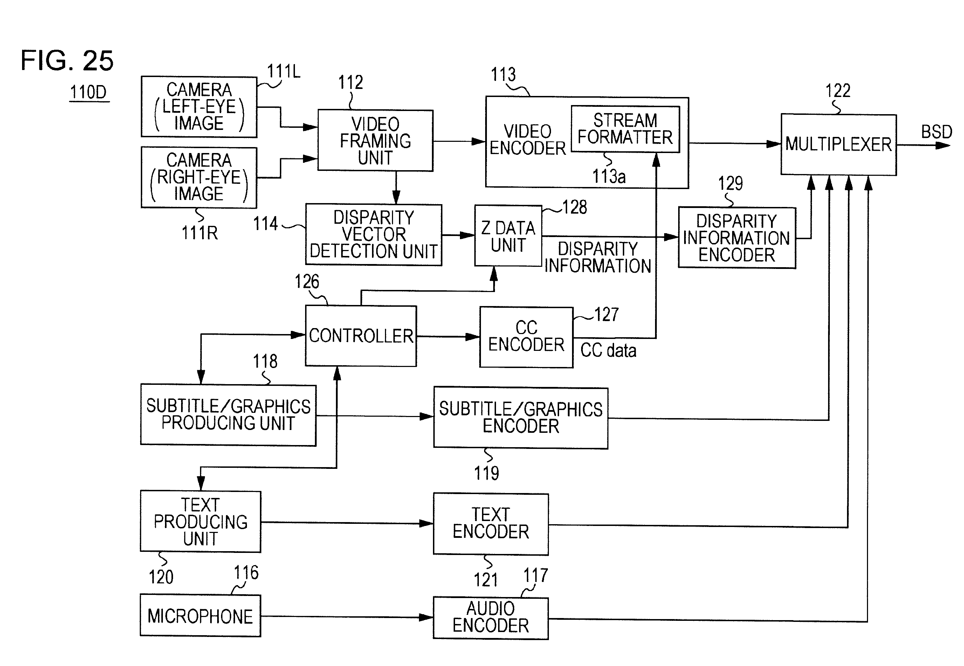

Fig. 25 illustrates an example configuration of a transmission data generation unit 110D. In Fig. 25, portions corresponding to those in Fig. 19 are assigned the same numerals, and the detailed description thereof is omitted. The transmission data generation unit 110D includes a disparity information encoder 129. The disparity information (DzD/DzD', including position information and time information, in accordance with necessity) output from the Z data unit 128 for each Region_id is sent to the disparity information encoder 129.

In the disparity information encoder 129, a disparity information elementary stream including disparity information is generated. The disparity information elementary stream is supplied to the multiplexer 122. Then, in the multiplexer 122, the packets of the elementary streams supplied from the respective encoders including the disparity information encoder 129 are multiplexed, and bit stream data (transport stream) BSD serving as transmission data is obtained.

The other elements of the transmission data generation unit 110D illustrated in Fig. 25 are configured in a manner similar to that of the transmission data generation unit 110 illustrated in Fig. 19, and operate in a similar manner although the detailed description is omitted.

### "Another Example Configuration of Transmission Data Generation Unit"

The transmission data generation unit 110B illustrated in Fig. 18 handles subtitle information, graphics information, and text information as superimposition information. A configuration that is similar to the configuration of the transmission data generation unit 110B illustrated in Fig. 18 and that further handles closed caption information is also conceivable.

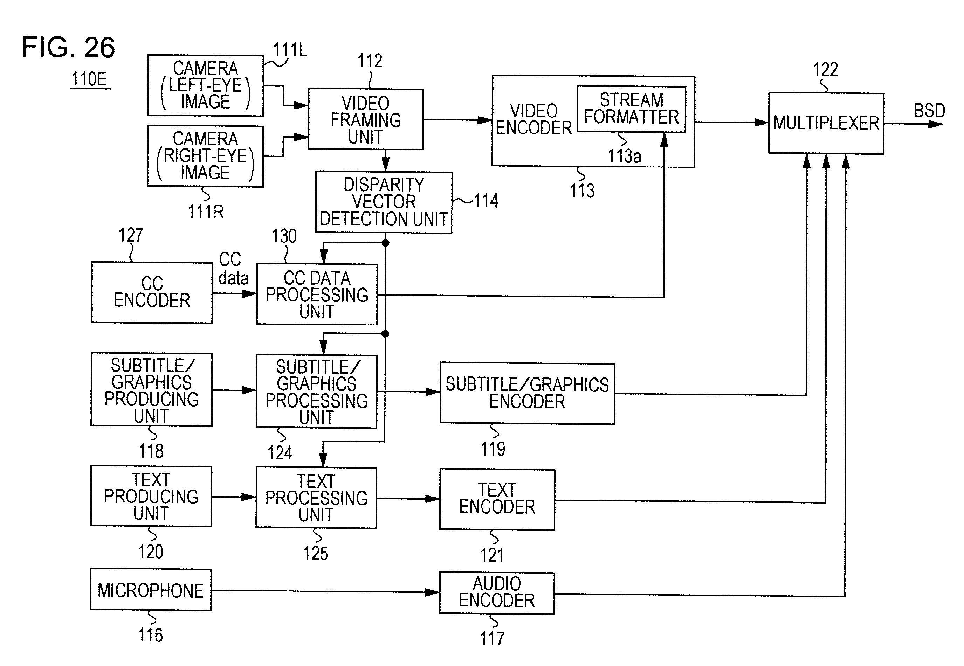

Fig. 26 illustrates an example configuration of a transmission data generation unit 110E. This example is configured to transmit disparity information while reflecting it in data of superimposition information (such as, for example, closed caption information, subtitle information, graphics information, or text information) to be superimposed on an image instead of transmitting a disparity vector as numerical information. In Fig. 26, portions corresponding to those in Figs. 18 and 19 are assigned the same numerals, and the detailed description thereof is omitted.

In the transmission data generation unit in Fig. 26, a CC data processing unit 130 is inserted between the CC encoder 127 and the stream formatter 113a. Then, the disparity vector at a predetermined position in an image detected by the disparity vector detection unit 114 is supplied to the CC data processing unit 130.

In the CC data processing unit 130, data of left-eye closed caption information to be superimposed on the left-eye image and data of right-eye closed caption information to be superimposed on the right-eye image are generated on the basis of the CC data produced by the CC encoder 127. In this case, the left-eye close caption information and the right-eye close caption information are the same information. However, the superimposed position of, for example, the right-eye closed caption information in the image is configured to be shifted in the horizontal direction by the horizontal direction component VVT of the disparity vector with respect to the left-eye closed caption information.

The CC data that has been processed by the CC data processing unit 130 in the above manner is supplied to the stream formatter 113a of the video encoder 113. In the stream formatter 113a, the CC data obtained from the CC data processing unit 130 is embedded as user data in the video elementary stream.

The other elements of the transmission data generation unit 110E illustrated in Fig. 26 are configured in a manner similar to that of the transmission data generation unit 110B illustrated in Fig. 18, and operate in a similar manner although the detailed description is omitted.

### [Description of Set-Top Box]

Referring back to Fig. 1, the set-top box 200 receives bit stream data (transport stream) carried on a broadcast wave and transmitted from the broadcast station 100. The bit stream data contains stereo image data including left-eye image data and right-eye image data, audio data, and superimposition information data, and also contains disparity information (disparity vector). Here, the superimposition information data is, for example, closed caption data, subtitle data, graphics data, text data, or the like.

The set-top box 200 includes a bit stream processing unit 201. The bit stream processing unit 201 extracts stereo image data, audio data, superimposition information data, disparity vectors, and the like from the bit stream data. The bit stream processing unit 201 generates data of a left-eye image and a right-eye image on which the superimposition information has been superimposed using the stereo image data, the superimposition information data (subtitle data, the graphics data, the text data, CC (Closed Caption) data), or the like.

Here, in a case where disparity vectors are transmitted as numerical information, left-eye superimposition information and right-eye superimposition information to be superimposed on the left-eye image and the right-eye image, respectively, are generated on the basis of the disparity vectors and the superimposition information data. In this case, the left-eye superimposition information and the right-eye superimposition information are the same superimposition information. However, the superimposed position of, for example, the right-eye superimposition g information in the image is configured to be shifted in the horizontal direction by the horizontal direction component of the disparity vector with respect to the left-eye superimposition information.

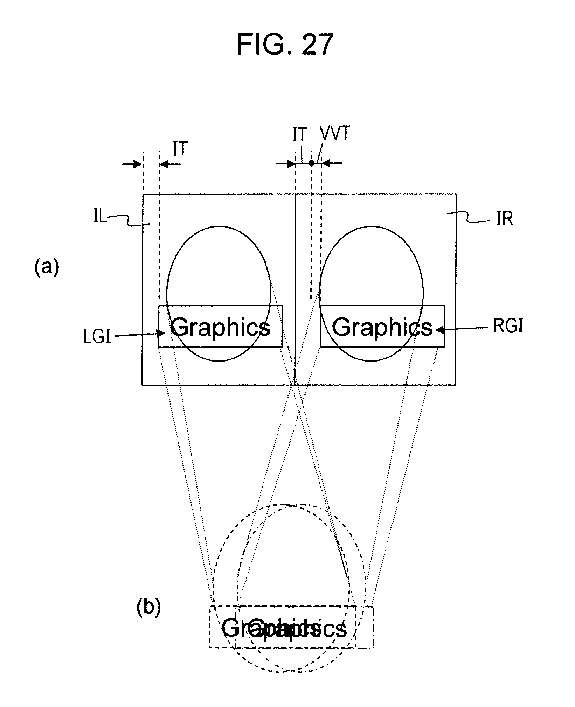

Fig. 27(a) illustrates superimposed positions of left-eye graphics information and right-eye graphics information in a case where the transmission method is the second transmission method described above ("Side By Side" method). Right-eye graphics information RGI to be superimposed on a right-eye image IR is configured to be at a position shifted in the horizontal direction by a horizontal direction component VVT of a disparity vector with respect to left-eye graphics information LGI to be superimposed on a left-eye image IL. Note that IT is an idling offset value.

In the bit stream processing unit 201, graphics data is generated so that the pieces of graphics information LGI and RGI are superimposed on the images IL and IR in the manner as illustrated in Fig. 27(a). The bit stream processing unit 201 combines the generated left-eye graphics data and right-eye graphics data with the stereo image data (left-eye image data, right-eye image data) extracted from the bit stream data, and acquires processed stereo image data. According to the stereo image data, as illustrated in Fig. 27(b), a viewer can observe the pieces of graphics information LGI and RGI with disparity, together with the images IL and IR, and is able to also perceive the perspective of the graphics information.

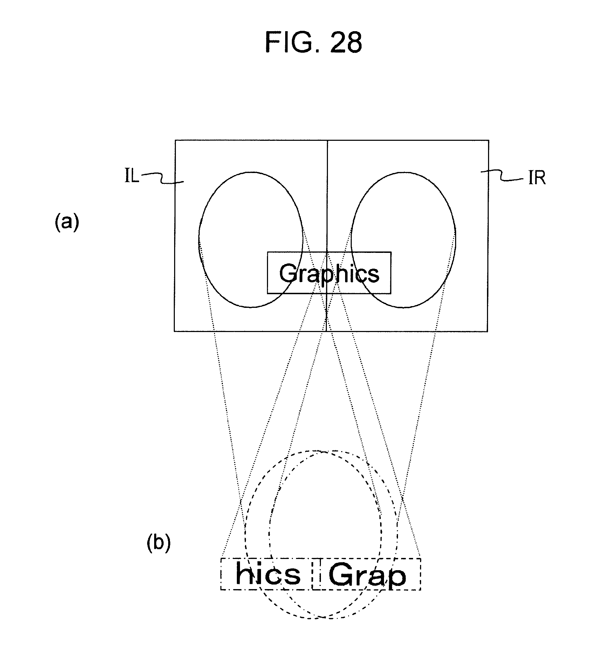

Note that Fig. 28(a) illustrates a state where a graphics image based on the graphics data extracted from the bit stream data is superimposed on the images IL and IR as it is. In this case, as illustrated in Fig. 28(b), a viewer observes the left half of the graphics information together with the left-eye image IL and the right half of the graphics information together with the right-eye image IR. Thus, the graphics information is not made correctly recognizable.

While Fig. 27 illustrates the case of graphics information, a similar operation is performed on other superimposition information (such as closed caption information, subtitle information or text information). That is, in a case where disparity vectors are transmitted as numerical information, left-eye superimposition information and right-eye superimposition information to be superimposed on the left-eye image and the right-eye image, respectively, are generated on the basis of the disparity vectors and the superimposition information data data. In this case, the left-eye superimposition information and the right-eye superimposition information are the same superimposition information. However, the superimposed position of, for example, the right-eye superimposition information in the image is configured to be shifted in the horizontal direction by the horizontal direction component of the disparity vector with respect to the left-eye superimposition information.

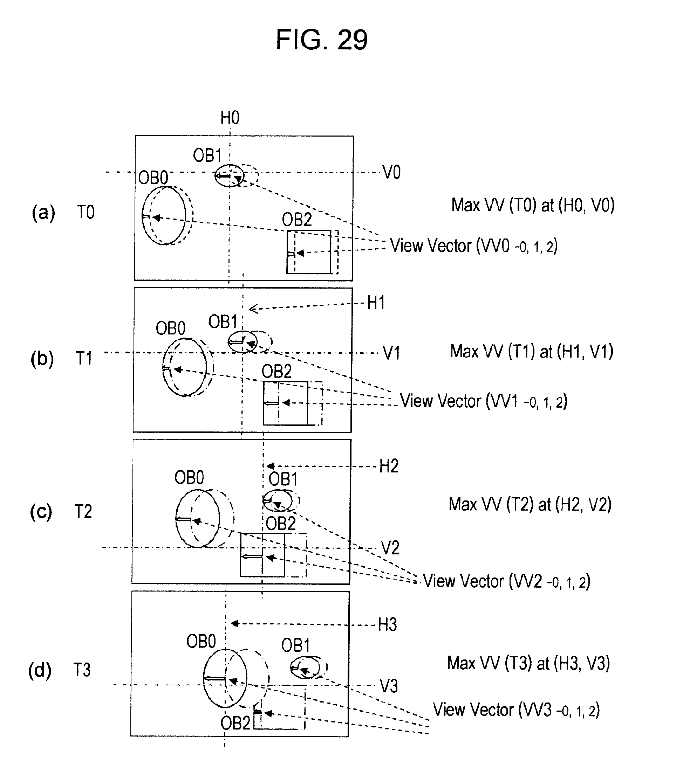

Here, it is conceivable that the following disparity vectors are used as disparity vectors that give disparity between left-eye superimposition information and right-eye superimposition information. For example, it is conceivable that a disparity vector at the position recognized to be the closest in terms of perspective among disparity vectors detected at a plurality of positions in an image is used as a disparity vector. Figs. 29(a), 29(b), 29(c), and 29(d) illustrate disparity vectors (View Vectors) at three object positions at times T0, T1, T2, and T3.

At time T0, a disparity vector VV0-1 at the position (H0, V0) corresponding to an object 1 is the maximum disparity vector Max W(T0). At time T1, a disparity vector VV1-1 at the position (H1, V1) corresponding to the object 1 is the maximum disparity vector Max VV(T1). At time T2, a disparity vector VV2-2 at the position (H2, V2) corresponding to an object 2 is the maximum disparity vector Max VV(T2). At time T3, a disparity vector VV3-0 at the position (H3, V3) corresponding to the object 1 is the maximum disparity vector Max VV(T3).

In this manner, the disparity vector at the position recognized to be the closest in terms of perspective among disparity vectors detected at a plurality of positions in an image is used as a disparity vector, thus allowing superimposition information to be displayed in front of the object in the image closest in terms of perspective.

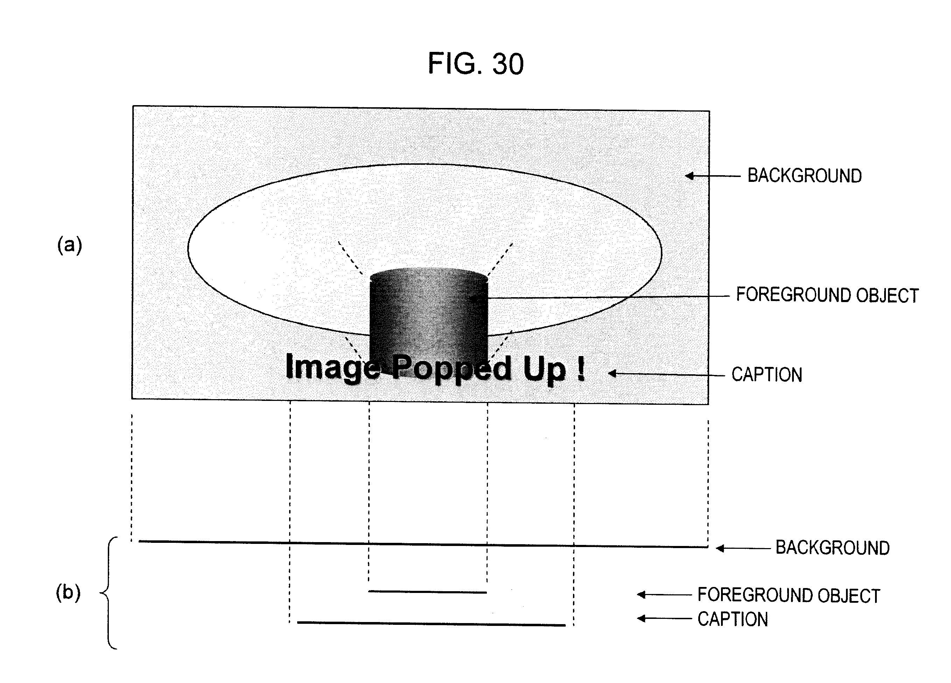

Fig. 30(a) illustrates a display example of a subtitle (for example, closed caption information, subtitle information) on an image. In this display example, a subtitle is superimposed on an image formed of a background and a foreground object, by way of example. Fig. 30(b) illustrates the perspective of the background, the foreground object, and the subtitle, and illustrates that the subtitle is recognized to be located closest.

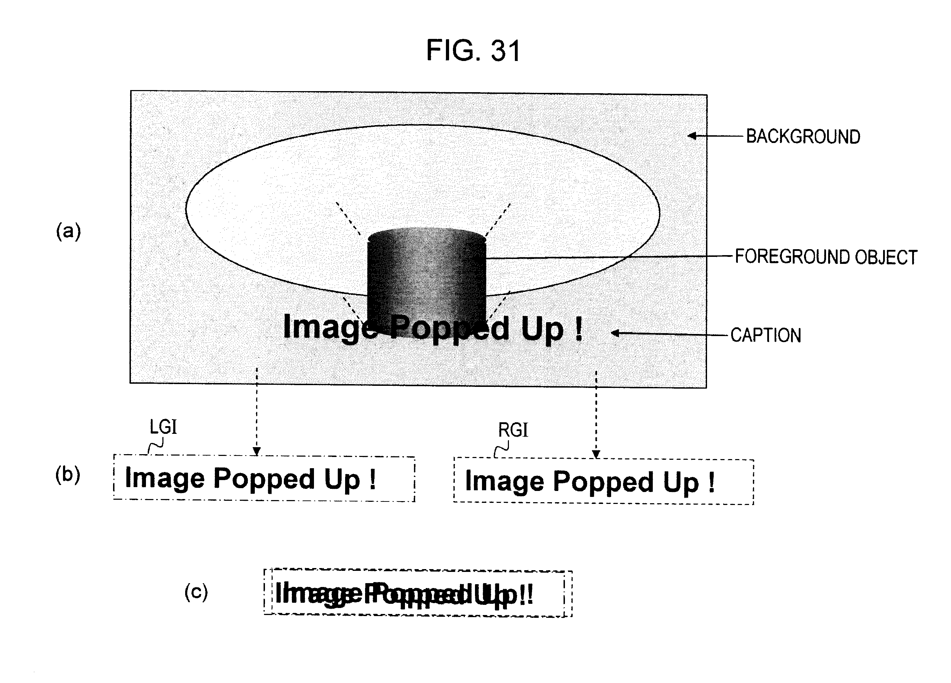

Fig. 31(a) illustrates a display example of a subtitle (for example, closed caption information, subtitle information) on an image, which is the same as that in Fig. 30(a). Fig. 31(b) illustrates left-eye subtitle information LGI and right-eye subtitle information RGI for displaying the subtitle. Fig. 31(c) illustrates that disparity is given to the pieces of subtitle information LGI and RGI in order to allow the subtitle to be recognized to be located closest.

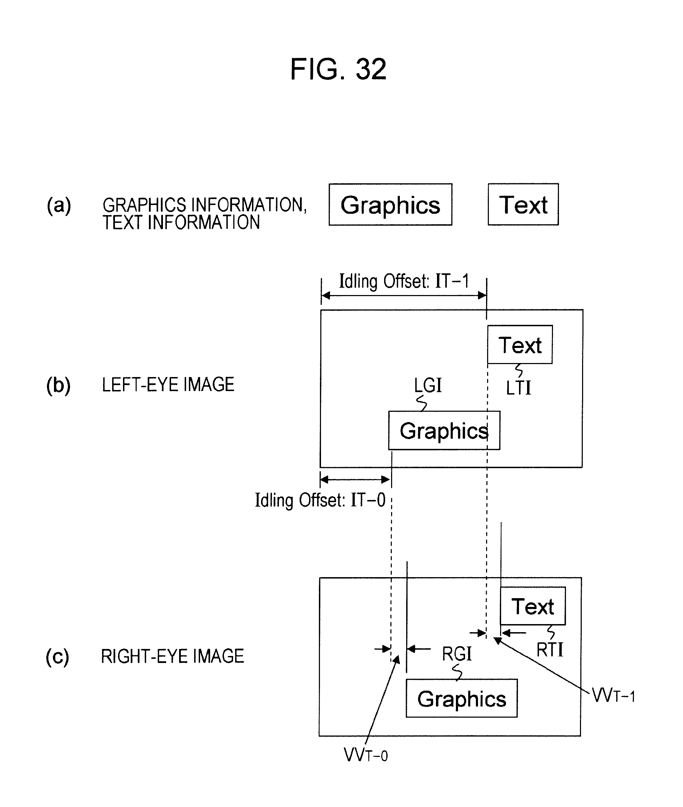

Also, it is conceivable that a disparity vector corresponding to its superimposed position among disparity vectors detected at a plurality of positions in an image is used as a disparity vector. Fig. 32(a) illustrates graphic information that is based on graphic data extracted from bit stream data, and text information that is based on text data extracted from the bit stream data.

Fig. 32(b) illustrates a state where left-eye graphics information LGI and left-eye text information LTI have been superimposed on a left-eye image. In this case, the superimposed position of the left-eye graphics information LGI is regulated by an idling offset value (IT-0) in the horizontal direction. Also, the superimposed position of the left-eye text information LTI is regulated by an idling offset value (IT-1) in the horizontal direction.

Fig. 32(c) illustrates a state where right-eye graphics information RGI and right-eye text information RTI have been superimposed on a right-eye image. In this case, the superimposed position of the right-eye graphics information RGI is regulated by an idling offset value (IT-0) in the horizontal direction, and is further shifted with respect to the superimposed position of the left-eye graphics information LGI by the horizontal direction component WT-0 of the disparity vector corresponding to the superimposed position. Also, the superimposed position of the right-eye text information RTI is regulated by an idling offset value (IT-1) in the horizontal direction, and is further shifted with respect to the superimposed position of the left-eye text information LTI by the horizontal direction component VVT-1 of the disparity vector corresponding to the superimposed position.

The foregoing description has been given of a case where graphics information that is based on graphics data extracted from bit stream data or text information that is based on text data extracted from the bit stream data is superimposed on a left-eye image and a right-eye image. In addition to this, a case is also conceivable where graphics data or text data is produced in the set-top box 200 and where information that is based on the data is superimposed on a left-eye image and a right-eye image.

Even in this case, disparity can be introduced between left-eye graphics information and right-eye graphics information or between left-eye text information and right-eye text information by utilizing a disparity vector at a predetermined position in an image extracted from the bit stream data. Accordingly, appropriate perspective can be given in the display of graphics information or text information in order to maintain the consistency in perspective between the information and each object in the image.

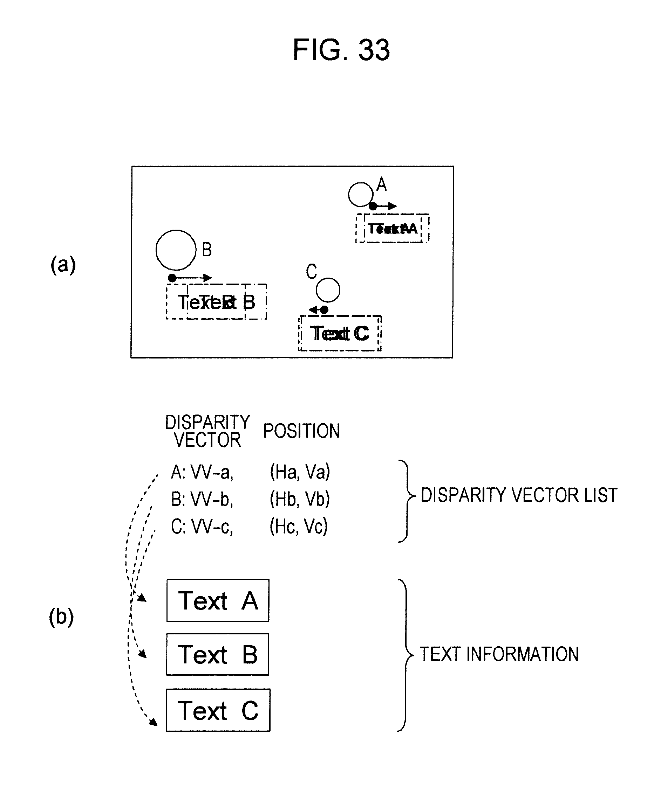

Fig. 33(a) illustrates the presence of objects A, B, and C in an image and the superimposition of text information indicating the annotation of each object at, for example, a position near the object. Fig. 33(b) illustrates that a disparity vector list indicating the correspondence between the positions of the objects A, B, and C and the disparity vectors at the positions, and the respective disparity vectors are utilized in a case where disparity is given to the text information indicating the annotation of the objecs A, B, and C. For example, while text information "Text" is superimposed near the object A, the disparity corresponding to a disparity vector VV-a at the position (Ha, Va) of the object A is given between the left-eye text information and the right-eye text information. Note that a similar operation is performed on text information to be superimposed near the objects B and C.

Note that Fig. 32 illustrates a case where the superimposition information includes graphics information and text information. Also, Fig. 33 illustrates a case where the imposition information includes text information. A similar operation is performed in the case of other superimposition information (such as closed caption information or subtitle information) although the detailed description is omitted.

Next, a case will be described where a disparity vector is transmitted while being reflected in advance in data of superimposition information (such as closed caption information, subtitle information, graphics information, or text information). In this case, superimposition information data extracted from bit stream data contains data of left-eye superimposition information and right-eye superimposition information to which disparity has been given using the disparity vector.

Thus, the bit stream processing unit 201 simply combines the superimposition information data extracted from the bit stream data on stereo image data (left-eye image data, right-eye image data) extracted from the bit stream data, and acquires processed stereo image data. Note that a process such as converting character code into bitmap data is necessary for closed caption data or text data.

### [Example Configuration of Set-Top Box]

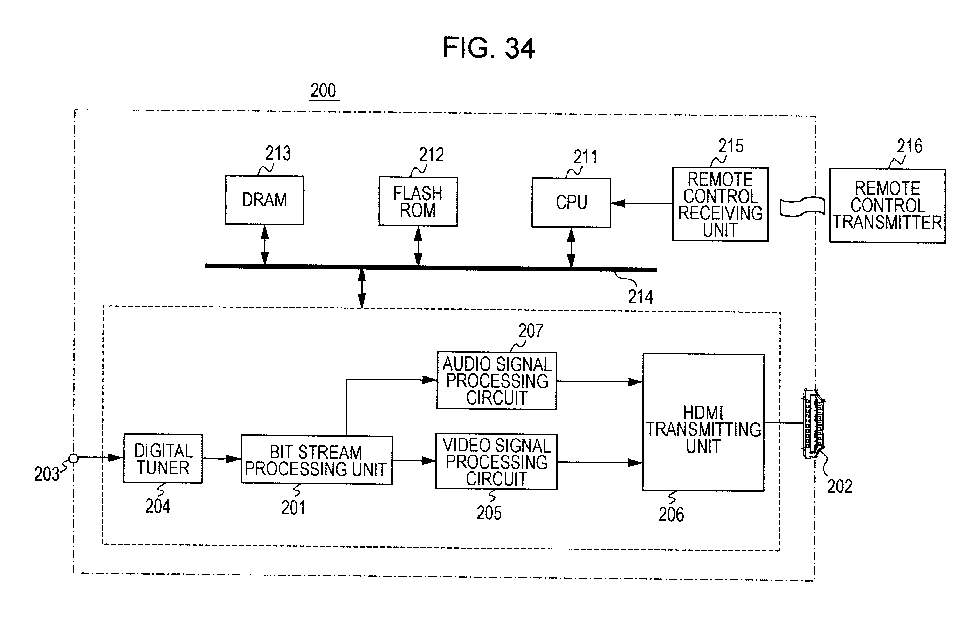

An example configuration of the set-top box 200 will be described. Fig. 34 illustrates an example configuration of the set-top box 200. The set-top box 200 includes a bit stream processing unit 201, an HDMI terminal 202, an antenna terminal 203, a digital tuner 204, a video signal processing circuit 205, an HDMI transmitting unit 206, and an audio signal processing circuit 207. Also, the set-top box 200 includes a CPU 211, a flash ROM 212, a DRAM 213, an internal bus 214, a remote control receiving unit 215, and a remote control transmitter 216.

The antenna terminal 203 is a terminal to which a television broadcast signal received by a receiving antenna (not illustrated) is input. The digital tuner 204 processes the television broadcast signal input to the antenna terminal 203, and outputs predetermined bit stream data (transport stream) corresponding to a channel selected by the user.

As described above, the bit stream processing unit 201 extracts stereo image data (left-eye image data, right-eye image data), audio data, superimposition information data, disparity information (disparity vectors), and the like from the bit stream data. The superimposition information data includes closed caption data, subtitle data, graphics data, text data, and the like. As described above, the bit stream processing unit 201 combines data of superimposition information (such as closed caption information, subtitle information, graphics information, or text information) with the stereo image data, and acquires display stereo image data. Also, the bit stream processing unit 201 outputs audio data. The detailed configuration of the bit stream processing unit 201 will be described below.

The video signal processing circuit 205 performs an image quality adjustment process and the like, in accordance with necessity, on the stereo image data output from the bit stream processing unit 201, and supplies processed stereo image data to the HDMI transmitting unit 206. The audio signal processing circuit 207 performs an audio quality adjustment process and the like, in accordance with necessity, on the audio data output from the bit stream processing unit 201, and supplies processed audio data to the HDMI transmitting unit 206.

The HDMI transmitting unit 206 delivers data of a baseband image (video) and audio from the HDMI terminal 202 using HDMI-compliant communication. In this case, the data of the image and audio is packed, and is output from the HDMI transmitting unit 206 to the HDMI terminal 202 for transmission through an HDMI TMDS channel. It is assumed that the HDMI transmitting unit 206 has a version of, for example, HDMI 1.4, and is in the state of being capable of handling stereo image data. The details of the HDMI transmitting unit 206 will be described below.

The CPU 211 controls the operation of each unit of the set-top box 200. The flash ROM 212 stores control software and holds data. The DRAM 213 forms a work area for the CPU 211. The CPU 211 expands the software and data read from the flash ROM 212 onto the DRAM 213 to start the software, and controls each unit of the set-top box 200.

The remote control receiving unit 215 receives a remote control signal (remote control code) transmitted from the remote control transmitter 216, and supplies the remote control signal to the CPU 211. The CPU 211 controls each unit of the set-top box 200 on the basis of the remote control code. The CPU 211, the flash ROM 212, and the DRAM 213 are connected to the internal bus 214.

The operation of the set-top box 200 will be described briefly. The television broadcast signal input to the antenna terminal 203 is supplied to the digital tuner 204. In the digital tuner 204, the television broadcast signal is processed, and predetermined bit stream data (transport stream) corresponding to a channel selected by the user is output.

The bit stream data output from the digital tuner 204 is supplied to the bit stream processing unit 201. In the bit stream processing unit 201, stereo image data (left-eye image data, right-eye image data), audio data, graphics data, text data, disparity vectors, and the like are extracted from the bit stream data. Also, in the bit stream processing unit 201, data of superimposition information (such as closed caption information, subtitle information, graphics information, or text information) is combined with the stereo image data, and display stereo image data is generated.

The display stereo image data generated by the bit stream processing unit 201 is subjected to an image quality adjustment process and the like in accordance with necessity by the video signal processing circuit 205, and is thereafter supplied to the HDMI transmitting unit 206. Also, the audio data obtained by the bit stream processing unit 201 is subjected to an audio quality adjustment process and the like in accordance with necessity by the audio signal processing circuit 207, and is thereafter supplied to the HDMI transmitting unit 206. The stereo image data and audio data supplied to the HDMI transmitting unit 206 are delivered from the HDMI terminal 202 to the HDMI cable 400 through the HDMI TMDS channel.

### "Example Configuration of Bit Stream Processing Unit"

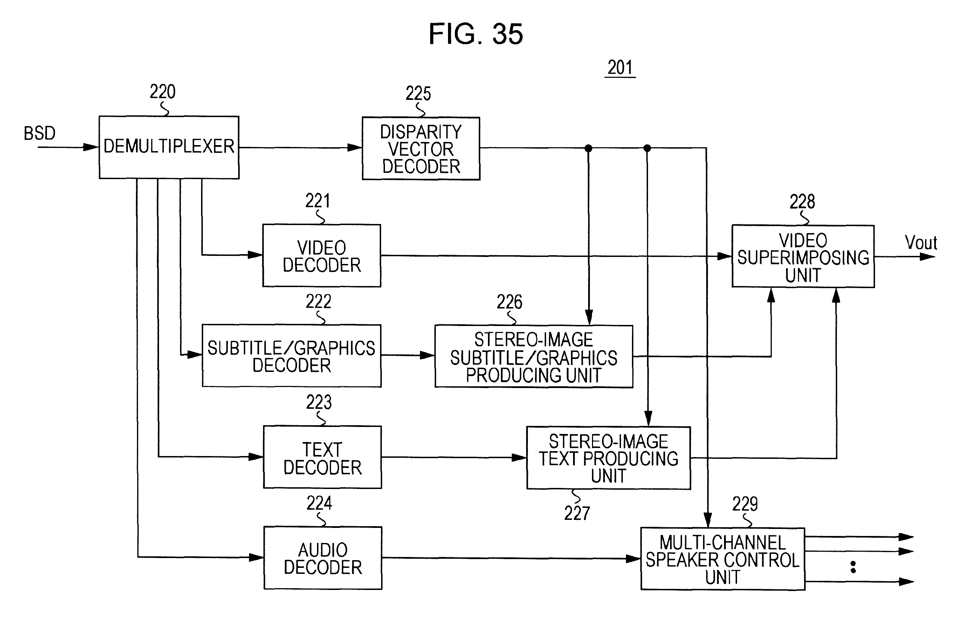

Fig. 35 illustrates an example configuration of the bit stream processing unit 201. The bit stream processing unit 201 has a configuration that is made to correspond to that of the transmission data generation unit 110 described above illustrated in Fig. 2. The bit stream processing unit 201 includes a demultiplexer 220, a video decoder 221, a subtitle/graphics decoder 222, a text decoder 223, an audio decoder 224, and a disparity vector decoder 225. Also, the bit stream processing unit 201 includes a stereo-image subtitle/graphics producing unit 226, a stereo-image text producing unit 227, a video superimposing unit 228, and a multi-channel speaker control unit 229.

The demultiplexer 220 extracts packets of video, audio, disparity vectors, subtitle, graphics, and text from bit stream data BSD, and sends the packets to the respective decoders.

The video decoder 221 performs a process reverse to that of the video encoder 113 of the transmission data generation unit 110 described above. That is, the video decoder 221 reconfigures the elementary stream of video from the packets of video extracted by the demultiplexer 220, performs a decoding process, and obtains stereo image data including left-eye image data and right-eye image data. Examples of the transmission method of the stereo image data include the first transmission method ("Top & Bottom" method), the second transmission method ("Side By Side" method), the third transmission method ("Frame Sequential" method), and the like described above (see Figs. 4(a) to 4(c)).

The subtitle/graphics decoder 222 performs a process reverse to that of the subtitle/graphic encoder 119 of the transmission data generation unit 110 described above. That is, the subtitle/graphics decoder 222 reconfigures the elementary stream of subtitle or graphics from the packets of subtitle or graphics extracted by the demultiplexer 220. Then, the subtitle/graphics decoder 222 further performs a decoding process to obtain subtitle data or graphics data.

The text decoder 223 performs a process reverse to that of the text encoder 121 of the transmission data generation unit 110 described above. That is, the text decoder 223 reconfigures the elementary stream of text from the packets of text extracted by the demultiplexer 220, and performs a decoding process to obtain text data.

The audio decoder 224 performs a process reverse to that of the audio encoder 117 of the transmission data generation unit 110 described above. That is, the audio decoder 224 reconfigures the elementary stream of audio from the packets of audio extracted by the demultiplexer 220, and performs a decoding process to obtain audio data.

The disparity vector decoder 225 performs a process reverse to that of the disparity vector encoder 115 of the transmission data generation unit 110 described above. That is, the disparity vector decoder 225 reconfigures the elementary stream of disparity vectors from the packets of disparity vectors extracted by the demultiplexer 220, and performs a decoding process to obtain a disparity vector at a predetermined position in an image.

The stereo-image subtitle/graphics producing unit 226 generates left-eye and left-eye subtitle information or graphics information to be superimposed on the left-eye image and the right-eye image, respectively. This generation process is performed on the basis of the subtitle data or graphics data obtained by the decoder 222 and the disparity vectors obtained by the decoder 225. In this case, the left-eye and left-eye subtitle information or graphics information is the same information. However, the superimposed position of, for example, the right-eye btitle information or graphics information in the image is configured to be shifted in the horizontal direction by the horizontal direction component of the disparity vector with respect to the left-eye subtitle information or graphics information. Then, the stereo-image subtitle/graphics producing unit 226 outputs data (bitmap data) of the generated left-eye and left-eye subtitle information or graphics information.

The stereo-image text producing unit 227 generates left-eye text information and right-eye text information to be superimposed on the left-eye image and the right-eye image, respectively, on the basis of the text s data obtained by the decoder 223 and the disparity vectors obtained by the decoder 225. In this case, the left-eye text information and the right-eye text information are the same text information. However, the superimposed position of, for example, the right-eye text information in the image is configured to be shifted in the horizontal direction by the horizontal direction component of the disparity vector with respect to the left-eye text information. Then, the stereo-image text producing unit 227 outputs data (bitmap data) of the generated left-eye text information and right-eye text information.

The video superimposing unit 228 superimposes the data produced by the producing units 226 and 227 on the stereo image data (left-eye image data, right-eye image data) obtained by the video decoder 221, and obtains display stereo image data Vout. Note that the superimposition of the superimposition information data on the stereo image data (left-eye image data, right-eye image data) is started using a time stamp in the system layer.

The multi-channel speaker control unit 229 performs a process for generating audio data of a multi-channel speaker to implement, for example, 5.1-ch surround or the like, a process for giving predetermined sound field characteristics, and the like on the audio data obtained by the audio decoder 224. Also, the multi-channel speaker control unit 229 controls the output of the multi-channel speaker on the basis of the disparity vectors obtained by the decoder 225.

There is an effect that the higher the magnitude of the disparity vector is, the more noticeable the stereoscopic effect is. The output of the multi-channel speaker is controlled in accordance with the stereoscopic degree, thus making feasible further provision of the stereoscopic experience.

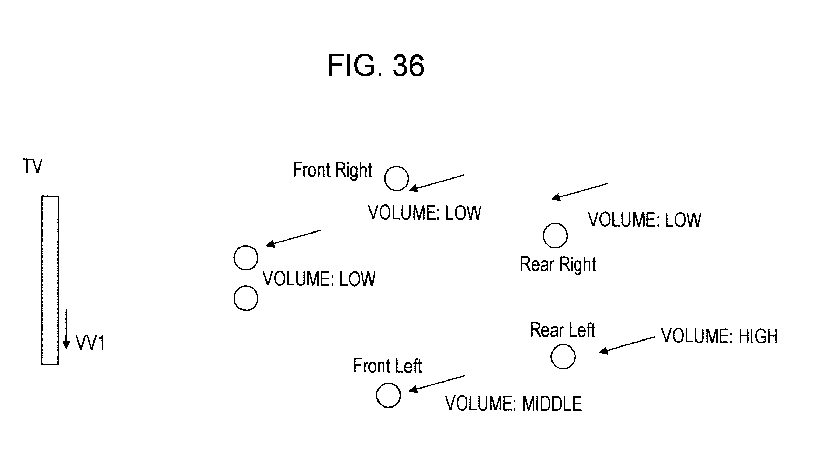

Fig. 36 illustrates an example of speaker output control in a case where a video object on the left-hand side when viewed in the direction of a television display has a large disparity vector VV1. In this control example, the volume of the Rear Left speaker of the multi-channel speaker is set high, the volume of the Front Left speaker is set about middle, and further the volume of the Front Right and Rear Right speakers are set low. In this manner, the disparity vector of video content (stereo image data) is applied to other media data such as audio data on the receiving side, thus making it possible to allow the viewer to experience the overall stereoscopic effect.

The operation of the bit stream processing unit 201 illustrated in Fig. 35 will be described briefly. The bit stream data BSD output from the digital tuner 204 (see Fig. 34) is supplied to the demultiplexer 220. In the demultiplexer 220, packets of video, audio, disparity vectors, subtitle or graphics, and text are extracted from the bit stream data BSD, and are supplied to the respective decoders.

In the video decoder 221, an elementary stream of video is reconfigured from the packets of video extracted from the demultiplexer 220, and a decoding process is further performed to obtain stereo image data including left-eye image data and right-eye image data. The stereo image data is supplied to the video superimposing unit 228. Also, in the disparity vector decoder 225, an elementary stream of disparity vectors is reconfigured from the packets of disparity vectors extracted by the demultiplexer 220, and a decoding process is further performed to obtain a disparity vector at a predetermined position in an image (see Fig. 8).

In the subtitle/graphics decoder 222, an elementary stream of subtitle or graphics is reconfigured from the packets of subtitle or graphics extracted by the demultiplexer 220. In the subtitle/graphics decoder 222, a decoding process is further performed on the elementary stream of subtitle or graphics, and subtitle data or graphics data is obtained. The subtitle data or graphics data is supplied to the stereo-image subtitle/graphics producing unit 226. The disparity vectors obtained by the disparity vector decoder 225 are also supplied to the stereo-image subtitle/graphics producing unit 226.

In the stereo-image subtitle/graphics producing unit 226, data of left-eye and right-eye subtitle information items or graphics information items to be superimposed respectively on the left-eye image and the right-eye image is generated. This generation process is performed on the basis of the subtitle data or graphics data obtained by the decoder 222 and the disparity vectors obtained by the decoder 225. In this case, the superimposed position of, for example, the right-eye subtitle information or graphics information in the image is configured to be shifted in the horizontal direction by the horizontal direction component of the disparity vector with respect to the left-eye subtitle information or left-eye graphics information. The data (bitmap data) of the generated left-eye and right-eye subtitle information items or graphics information items is output from the stereo-image subtitle/graphics producing unit 226.

Also, in the text decoder 223, an elementary stream of text is reconfigured from the packets of text extracted by the demultiplexer 220, and a decoding process is further performed to obtain text data. The text data is supplied to the stereo-image text producing unit 227. The disparity vectors obtained by the disparity vector decoder 225 are also supplied to the stereo-image text producing unit 227.

In the stereo-image text producing unit 227, left-eye text information and right-eye text information to be superimposed on the left-eye image and the right-eye image, respectively, are generated on the basis of the text s data obtained by the decoder 223 and the disparity vectors obtained by the decoder 225. In this case, the left-eye text information and the right-eye text information are the same text information. However, the superimposed position of, for example, the right-eye text information in the image is configured to be shifted in the horizontal direction by the horizontal direction component of the disparity vector with respect to the left-eye text information. The data (bitmap data) of the generated left-eye text information and right-eye text information is output from the stereo-image text producing unit 227.

In addition to the stereo image data (left-eye image data, right-eye image data) from the video decoder 221 described above, the data output from the subtitle/graphics producing unit 226 and the text producing unit 227 is supplied to the video superimposing unit 228. In the video superimposing unit 228, the data produced by the subtitle/graphics producing unit 226 and the text producing unit 227 is superimposed on the stereo image data (left-eye image data, right-eye image data), and display stereo image data Vout is obtained. The display stereo image data Vout is supplied as transmission image data to the HDMI transmitting unit 206 (see Fig. 34) via the video signal processing circuit 205.

Also, in the audio decoder 224, an elementary stream of audio is reconfigured from the packets of audio extracted by the demultiplexer 220, and a decoding process is further performed to obtain audio data. The audio data is supplied to the multi-channel speaker control unit 229. In the multi-channel speaker control unit 229, a process for generating audio data of the multi-channel speaker to implement, for example, 5.1-ch surround or the like, a process for giving predetermined sound field characteristics, and the like are performed on the audio data.

The disparity vectors obtained by the disparity vector decoder 225 are also supplied to the multi-channel speaker control unit 229. Then, in the multi-channel speaker control unit 229, the output of the multi-channel speaker is controlled on the basis of the disparity vector. The multi-channel audio data obtained by the multi-channel speaker control unit 229 is supplied as transmission audio data to the HDMI transmitting unit 206 (see Fig. 34) via the audio signal processing circuit 207.

### "Another Example Configuration of Bit Stream Processing Unit"

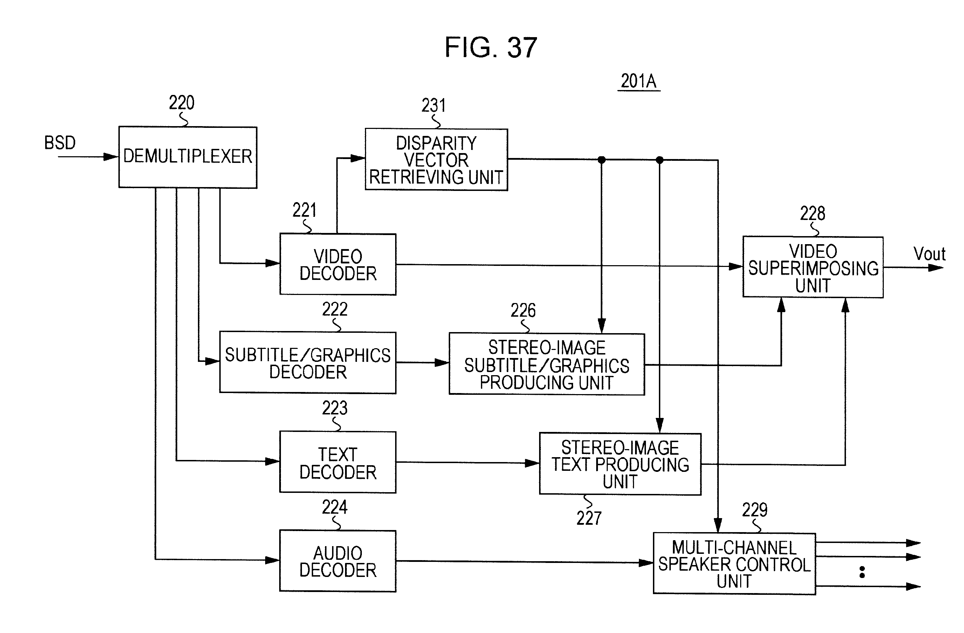

A bit stream processing unit 201A illustrated in Fig. 37 has a configuration that is made to correspond to that of the transmission data generation unit 110A described above illustrated in Fig. 13. In Fig. 37, portions corresponding to those in Fig. 35 are assigned the same numerals, and the detailed description thereof is omitted.

The bit stream processing unit 201A is provided with a disparity vector retrieving unit 231 in place of the disparity vector decoder 225 of the bit stream processing unit 201 illustrated in Fig. 35. The disparity vector retrieving unit 231 retrieves from the stream of video obtained through the video decoder 221 the disparity vector embedded in the user data area thereof. Then, the disparity vector retrieving unit 231 supplies the retrieved disparity vector to the stereo-image subtitle/graphics producing unit 226, the stereo-image text producing unit 227, and the multi-channel speaker control unit 229.

The other elements of the bit stream processing unit 201A illustrated in Fig. 37 are configured in a manner similar to that of the bit stream processing unit 201 illustrated in Fig. 35, and operate in a similar manner although the detailed description is omitted.

### "Another Example Configuration of Bit Stream Processing Unit"

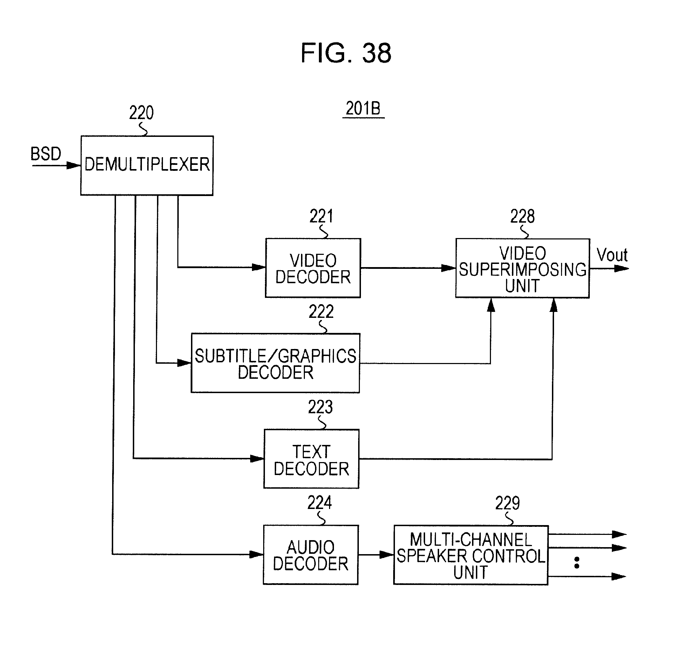

Also, a bit stream processing unit 201B illustrated in Fig. 38 has a configuration that is made to correspond to that of the transmission data generation unit 110B described above illustrated in Fig. 18. In Fig. 38, portions corresponding to those in Fig. 35 are assigned the same numerals, and the detailed description thereof is omitted.

The bit stream processing unit 201B is configured such that the disparity vector decoder 225, the stereo-image subtitle/graphics producing unit 226, and the stereo-image text producing unit 227 are removed from the bit stream processing unit 201 illustrated in Fig. 35. In this case, the disparity vector is reflected in advance in the data of the subtitle information, graphics information, and text information.

As described above, the subtitle data or graphics data that is transmitted contains data of left-eye subtitle information or graphics information to be superimposed on the left-eye image, and data of right-eye subtitle information or graphics information to be superimposed on the right-eye image. Similarly, as described above, the text data that is transmitted contains data of left-eye text information to be superimposed on the left-eye image and data of right-eye text information to be superimposed on the right-eye image. Therefore, the disparity vector decoder 225, the stereo-image subtitle/graphics producing unit 226, and the stereo-image text producing unit 227 are not necessary.

Note that since the text data obtained by the text decoder 223 is code data (character code), a process for converting it into bitmap data is necessary. This process is performed in, for example, the last stage of the text decoder 223 or the input stage of the video superimposing unit 228.

### "Another Example Configuration of Bit Stream Processing Unit"

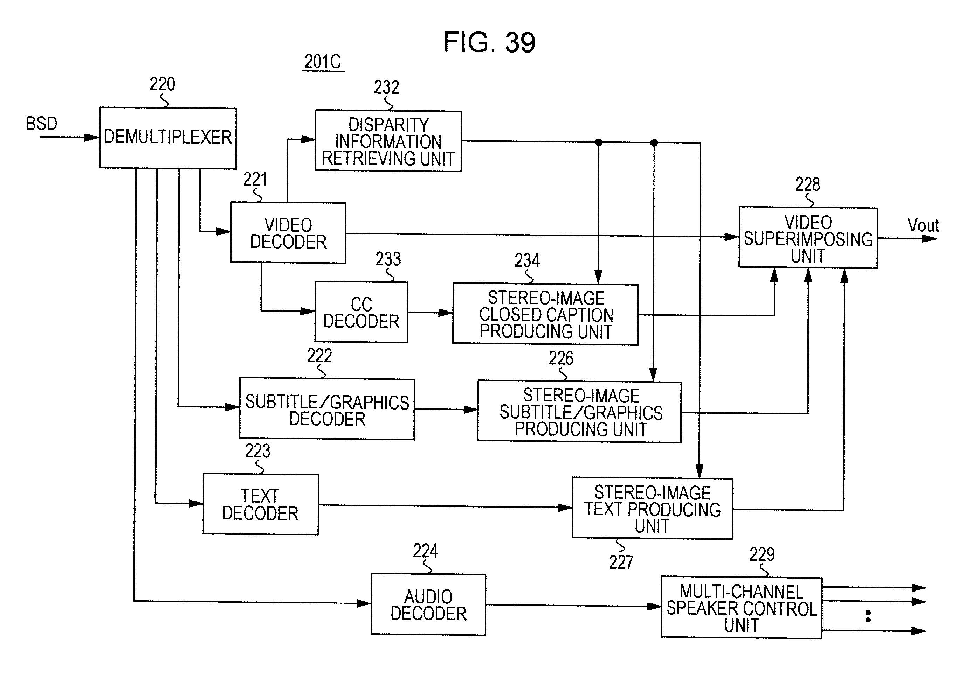

Also, a bit stream processing unit 201C illustrated in Fig. 39 has a configuration that is made to correspond to that of the transmission data generation unit 110C described above illustrated in Fig. 19. In Fig. 39, portions corresponding to those in Fig. 35 are assigned the same numerals, and the detailed description thereof is omitted.

The bit stream processing unit 201C includes a disparity information retrieving unit 232, a CC decoder 233, and a stereo-image closed caption producing unit 234. As described above, the video elementary stream output from the video encoder 113 of the transmission data generation unit 110C illustrated in Fig. 19 has embedded therein CC (closed caption) data and disparity information for each Region_id as user data.

In the disparity information retrieving unit 232, the disparity information for each Region_id is retrieved from the video elementary stream obtained through the video decoder 221. Disparity information (which does not include superimposed position information or display time information) corresponding to closed caption information within the retrieved disparity information for each Region_id is supplied from the disparity information retrieving unit 232 to the stereo-image closed caption producing unit 234.

Also, disparity information (which includes superimposed position information and display time information) corresponding to subtitle information and graphics information within the retrieved disparity information for each Region_id is supplied from the disparity information retrieving unit 232 to the stereo-image subtitle/graphics producing unit 226. Furthermore, disparity information (which includes superimposed position information and display time information) corresponding to text information within the retrieved disparity information for each Region_id is supplied from the disparity information retrieving unit 232 to the stereo-image text producing unit 227.

In the CC decoder 233, CC data (closed caption data) is retrieved from the video elementary stream obtained through the video decoder 233. Furthermore, in the CC decoder 233, closed caption data (character code of the caption) for each Window, and further control data of the superimposed position and the display time are acquired from the CC data. Then, the closed caption data and the control data of the superimposed position and the display time are supplied from the CC decoder 233 to the stereo-image closed caption producing unit 234.

In the stereo-image closed caption producing unit 234, data of left-eye closed caption information (caption) and right-eye closed caption information (caption) to be superimposed on the left-eye image and the right-eye image, respectively, is generated for each Window. This generation process is performed on the basis of the closed caption data and superimposed position control data obtained by the CC decoder 233 and the disparity information (disparity vector) supplied from the disparity information retrieving unit 232. In this case, the left-eye and right-eye closed caption information items are the same information. However, the superimposed position of, for example, the right-eye closed caption information in the image is configured to be shifted in the horizontal direction by the horizontal direction component of the disparity vector with respect to the left-eye closed caption information.

In this manner, data (bitmap data) of the left-eye and right-eye closed caption information generated by the stereo-image closed caption producing unit 234 for each Window is supplied to the video superimposing unit 228 together with the control data of the display time.

Also, in the stereo-image subtitle/graphics producing unit 226, left-eye and left-eye subtitle information or graphics information to be superimposed on the left-eye image and the right-eye image, respectively, are generated. This generation process is performed on the basis of the subtitle data or graphics data obtained by the subtitle/graphics decoder 222 and the disparity information (disparity vectors) supplied from the disparity information retrieving unit 232. In this case, the left-eye and left-eye subtitle information items or graphics information items are the same information. However, the superimposed position of, for example, the right-eye btitle information or graphics information in the image is configured to be shifted in the horizontal direction by the horizontal direction component of the disparity vector with respect to the left-eye subtitle information or graphics information.

In this manner, the data (bitmap data) of the left-eye and right-eye subtitle information items or graphics information items generated by the stereo-image subtitle/graphics producing unit 234 is supplied to the video superimposing unit 228 together with the display time information (number-of-frames information).

Also, in the stereo-image text producing unit 227, left-eye and left-eye text information items to be superimposed respectively on the left-eye image and the right-eye image are generated. This generation process is performed on the basis of the text data obtained by the text decoder 223 and the disparity information (disparity vectors) supplied from the disparity information retrieving unit 232. In this case, the left-eye and left-eye text information items are the same information. However, the superimposed position of, for example, the right-eye text information in the image is configured to be shifted in the horizontal direction by the horizontal direction component of the disparity vector with respect to the left-eye text information.

In this manner, data (bitmap data) of the left-eye and right-eye text information items generated by the stereo-image text producing unit 227 is supplied to the video superimposing unit 228 together with the display time information (number-of-frames information).

In the video superimposing unit 228, superimposition information data supplied from the respective decoders is superimposed on the stereo image data (left-eye image data, right-eye image data) obtained by the video decoder 221, and display stereo image data Vout is obtained. Note that the superimposition of the superimposition information data on the stereo image data (left-eye image data, right-eye image data) is started in accordance with a time stamp in the system layer. Also, the superimposition duration time is controlled on the basis of the control data of the display time for closed caption information, and on the basis of the display time information for subtitle information, graphics information, text information, or the like.

The other elements of the bit stream processing unit 201C illustrated in Fig. 39 are configured in a manner similar to that of the bit stream processing unit 201 illustrated in Fig. 35, and operate in a similar manner although the detailed description is omitted.

### "Another Example Configuration of Bit Stream Processing Unit"

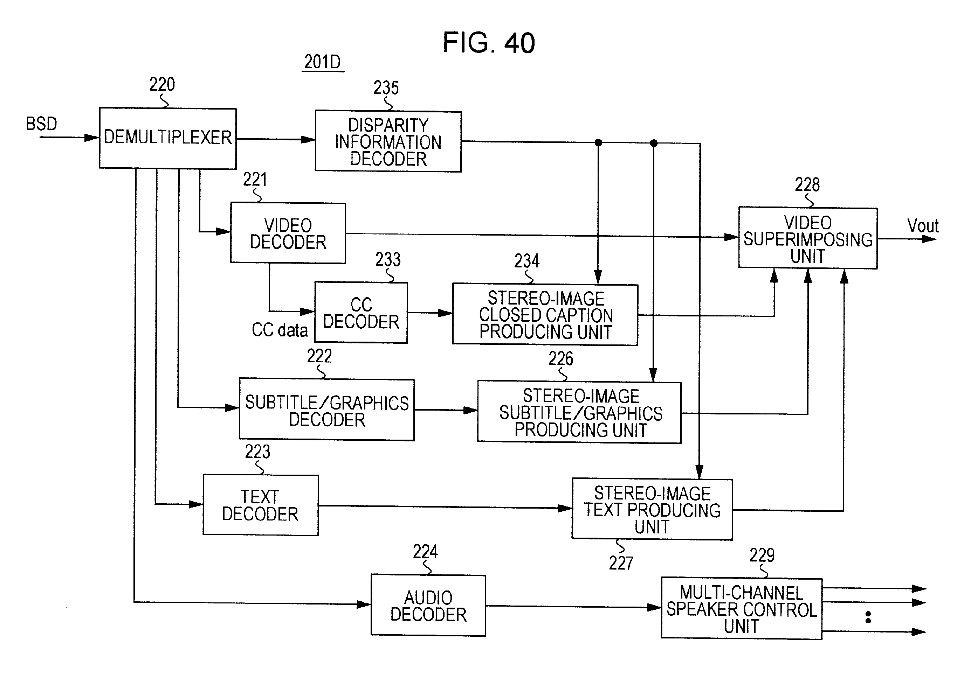

A bit stream processing unit 201D illustrated in Fig. 40 has a configuration that is made to correspond to that of the transmission data generation unit 110D described above illustrated in Fig. 25. In Fig. 40, portions corresponding to those in Figs. 35 and 9 are assigned the same numerals, and the detailed description thereof is omitted.

The bit stream processing unit 201D includes a disparity information decoder 235. In the transmission data generation unit 110D illustrated in Fig. 25, a disparity information elementary stream including disparity information is generated from the Z data unit 128 using the disparity information encoder 129. Then, in the multiplexer 122, the packets of the elementary streams supplied from the respective encoders including the disparity information encoder 129 are multiplexed, and bit stream data (transport stream) BSD serving as transmission data is obtained.

In the disparity information decoder 235, the elementary stream of the disparity information is reconfigured from the packets of the disparity information extracted from the demultiplexer 220, and is further subjected to a decoding process to obtain disparity information for each Region_id. The disparity information is the same as the disparity information retrieved by the disparity information retrieving unit 232 of the bit stream processing unit 201C in Fig. 39.

In the disparity information decoder 235, disparity information for each Region_id is retrieved from the video elementary stream obtained through the video decoder 221. Disparity information corresponding to closed caption information (which does not include superimposed position information or display time information) within the retrieved disparity information for each Region_id is supplied from the disparity information decoder 235 to the stereo-image closed caption producing unit 234.

Also, disparity information corresponding to subtitle information or graphics information (which includes superimposed position information and display time information) within the retrieved disparity information for each Region_id is supplied from the disparity information decoder 235 to the stereo-image subtitle/graphics producing unit 226. Furthermore, disparity information corresponding to text information (which includes superimposed position information and display time information) within the retrieved disparity information for each Region_id is supplied from the disparity information decoder 235 to the stereo-image text producing unit 227.

The other elements of the bit stream processing unit 201D illustrated in Fig. 40 are configured in a manner similar to that of the bit stream processing unit 201C illustrated in Fig. 39, and perform similar operations although the detailed description is omitted.

### "Another Example Configuration of Bit Stream Processing Unit"

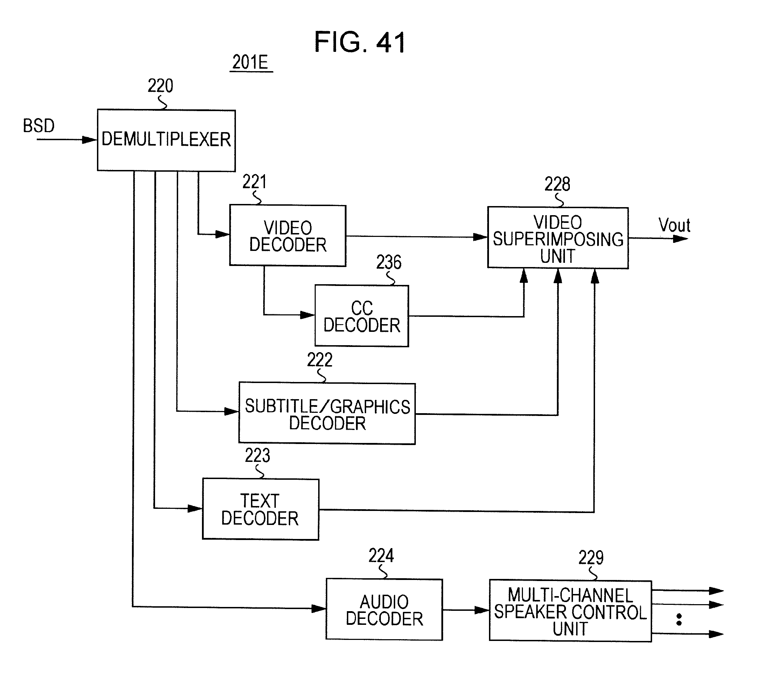

Also, a bit stream processing unit 201E illustrated in Fig. 41 has a configuration that is made to correspond to that of the transmission data generation unit 110E described above illustrated in Fig. 26. In Fig. 41, portions corresponding to those in Figs. 35 and 38 are assigned the same numerals, and the detailed description thereof is omitted.

The bit stream processing unit 201E includes a CC decoder 236. In the CC data processing unit 130 of the transmission data generation unit 110E illustrated in Fig. 26, data of left-eye closed caption information to be superimposed on the left-eye image and data of right-eye closed caption information to be superimposed on the right-eye image are generated on the basis of the CC data. Then, the CC data that has been processed by the CC data processing unit 130 is supplied to the stream formatter 113a of the video encoder 113, and is embedded as user data in a stream of video.

In the CC decoder 236, the CC data is retrieved from the video elementary stream obtained through the video decoder 221, and data of left-eye and right-eye closed caption information items for each Window is acquired from the CC data. Then, the data of the left-eye and right-eye closed caption information items acquired by the CC decoder 236 is supplied to the video superimposing unit 228.

In the video superimposing unit 228, the data produced by the CC decoder 236, the subtitle/graphics decoder 222, and the text decoder 223 is superimposed on the stereo image data (left-eye image data, right-eye image data), and display stereo image data Vout is obtained.

The other elements of the bit stream processing unit 201E illustrated in Fig. 41 are configured in a manner similar to that of the bit stream processing unit 201B illustrated in Fig. 38, and operate in a similar manner although the detailed description is omitted.

### [Description of Television Receiver]

Referring back to Fig. 1, the television receiver 300 receives stereo image data that is sent from the set-top box 200 via the HDMI cable 400. The television receiver 300 includes a 3D signal processing unit 301. The 3D signal processing unit 301 performs a process (decoding process) corresponding to the transmission method on the stereo image data, and generates left-eye image data and right-eye image data. That is, the 3D signal processing unit 301 performs a process reverse to that of the video framing unit 112 in the transmission data generation units 110, 110A, 110B, 110C, 110D, and 110E illustrated in Figs. 2, 13, 18, 19, 25, and 26. Then, the 3D signal processing unit 301 and acquires left-eye image data and right-eye image data that form the stereo image data.

### [Example Configuration of Television Receiver]

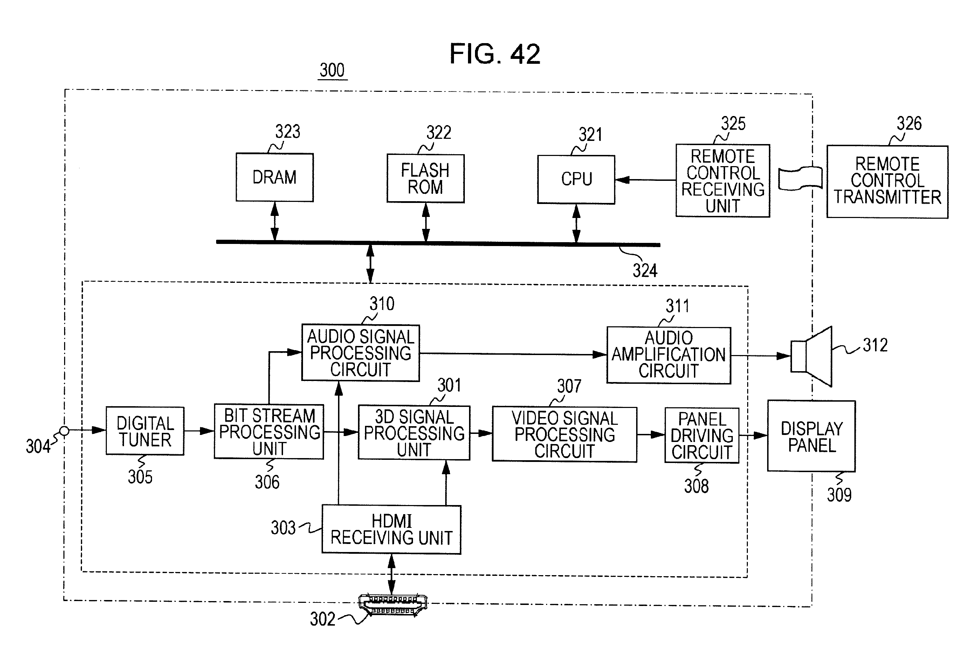

An example configuration of the television receiver 300 will be described. Fig. 42 illustrates an example configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306. Also, the television receiver 300 includes a video signal processing circuit 307, a panel driving circuit 308, a display panel 309, an audio signal processing circuit 310, an audio amplification circuit 311, and a speaker 312. Also, the television receiver 300 includes a CPU 321, a flash ROM 322, a DRAM 323, an internal bus 324, a remote control receiving unit 325, and a remote control transmitter 326.

The antenna terminal 304 is a terminal to which a television broadcast signal received by a receiving antenna (not illustrated) is input. The digital tuner 305 processes the television broadcast signal input to the antenna terminal 304, and outputs predetermined bit stream data (transport stream) corresponding to a channel selected by a user.

The bit stream processing unit 306 is configured to have a configuration similar to that of the bit stream processing unit 201 of the set-top box 200 illustrated in Fig. 34. The bit stream processing unit 306 extracts stereo image data (left-eye image data, right-eye image data), audio data, superimposition information data, disparity vectors (disparity information), and the like from the bit stream data. The superimposition information data includes closed caption data, subtitle data, graphics data, text data, and the like. Then, the bit stream processing unit 306 combines the superimposition information data with the stereo image data, and acquires display stereo image data. Also, the bit stream processing unit 306 outputs audio data.

The HDMI receiving unit 303 receives uncompressed image data and audio data supplied to the HDMI terminal 302 via the HDMI cable 400 using HDMI-compliant communication. It is assumed that the HDMI receiving unit 303 has a version of, for example, HDMI 1.4, and is in the state of being capable of handling stereo image data. The details of the HDMI receiving unit 303 will be described below.

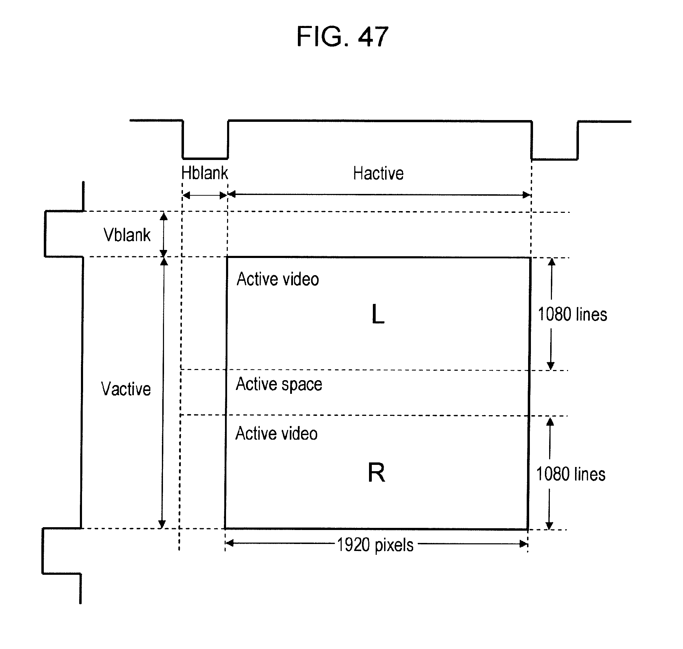

The 3D signal processing unit 301 performs a decoding process on the stereo image data received by the HDMI receiving unit 303 or obtained by the bit stream processing unit 306, and generates left-eye image data and right-eye image data. In this case, the 3D signal processing unit 301 performs a decoding process corresponding to the transmission method (see Fig. 4) on the stereo image data obtained by the bit stream processing unit 306. Also, the 3D signal processing unit 301 performs a decoding process corresponding to the TMDS transmission data structure (see Figs. 47 to 49) on the stereo image data received by the HDMI receiving unit 303.

The video signal processing circuit 307 generates image data for displaying a stereo image on the basis of the left-eye image data and right-eye image data generated by the 3D signal processing unit 301. Also, the video signal processing circuit performs an image quality adjustment process on the image data in accordance with necessity. The panel driving circuit 308 drives the display panel 309 on the basis of the image data output from the video signal processing circuit 307. The display panel 309 is composed of, for example, an LCD (Liquid Crystal Display), a PDP (Plasma Display Panel), or the like.

The audio signal processing circuit 310 performs a necessary process such as D/A conversion on the audio data received by the HDMI receiving unit 303 or obtained by the bit stream processing unit 306. The audio amplification circuit 311 amplifies the audio signal output from the audio signal processing circuit 310 and supplies a resulting signal to the speaker 312.

The CPU 321 controls the operation of each unit of the television receiver 300. The flash ROM 322 stores control software and holds data. The DRAM 323 forms a work area for the CPU 321. The CPU 321 expands the software and data read from the flash ROM 322 onto the DRAM 323 to start the software, and controls each unit of the television receiver 300.

The remote control receiving unit 325 receives a remote control signal (remote control code) transmitted from the remote control transmitter 326, and supplies the remote control signal to the CPU 321. The CPU 321 controls each unit of the television receiver 300 on the basis of the remote control code. The CPU 321, the flash ROM 322, and the DRAM 323 are connected to the internal bus 324.

The operation of the television receiver 300 illustrated in Fig. 42 will be described briefly. In the HDMI receiving unit 303, stereo image data and audio data, which are transmitted from the set-top box 200 connected to the HDMI terminal 302 via the HDMI cable 400, are received. The stereo image data received by the HDMI receiving unit 303 is supplied to the 3D signal processing unit 301. Also, the audio data received by the HDMI receiving unit 303 is supplied to the audio signal processing circuit 310.

The television broadcast signal input to the antenna terminal 304 is supplied to the digital tuner 305. In the digital tuner 305, the television broadcast signal is processed, and predetermined bit stream data (transport stream) corresponding to a channel selected by the user is output.

The bit stream data output from the digital tuner 305 is supplied to the bit stream processing unit 306. In the bit stream processing unit 306, stereo image data (left-eye image data, right-eye image data), audio data, superimposition information data, disparity vectors (disparity information), and the like are extracted from the bit stream data. Also, in the bit stream processing unit 306, data of superimposition information (closed caption information, subtitle information, graphics information, text information) is combined with the stereo image data, and display stereo image data is generated.

The display stereo image data generated by the bit stream processing unit 306 is supplied to the 3D signal processing unit 301. Also, the audio data obtained by the bit stream processing unit 306 is supplied to the audio signal processing circuit 310.

In the 3D signal processing unit 301, a decoding process is performed on the stereo image data received by the HDMI receiving unit 303 or obtained by the bit stream processing unit 306, and left-eye image data and right-eye image data are generated. The left-eye image data and the right-eye image data are supplied to the video signal processing unit circuit 307. In the video signal processing circuit 307, image data for displaying a stereo image is generated on the basis of the left-eye image data and the right-eye image data, and an image quality adjustment process is also performed in accordance with necessity. The image data obtained by the video signal processing circuit 307 in the above manner is supplied to the panel driving circuit 308. Thus, a stereo image is displayed by using the display panel 309.

Also, in the audio signal processing circuit 310, a necessary process such as D/A conversion is performed on the audio data received by the HDMI receiving unit 303 or obtained by the bit stream processing unit 306. The audio data is amplified by the audio amplification circuit 311, and is thereafter supplied to the speaker 312. Thus, audio is output from the speaker 312.

### [Example Configuration of HDMI Transmitting Unit and HDMI Receiving Unit]

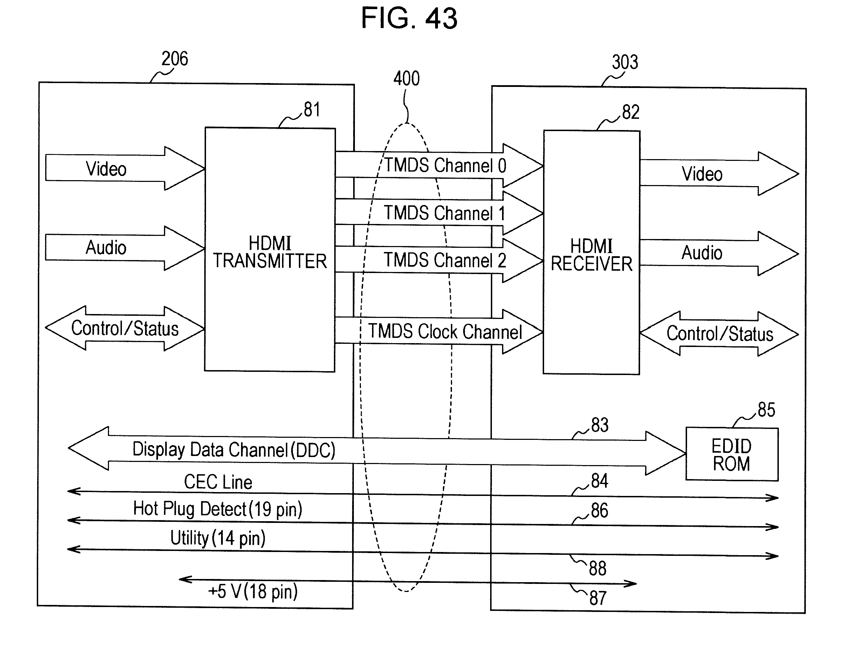

Fig. 43 illustrates an example configuration of the HDMI transmitting unit (HDMI source) 206 of the set-top box 200 and the HDMI receiving unit (HDMI sink) 303 of the television receiver 300 in the stereo image display system 10 in Fig. 1.

In an effective image interval (hereinafter, also referred to as an active video interval, as appropriate), the HDMI transmitting unit 206 transmits a differential signal corresponding to pixel data of an uncompressed image for one screen to the HDMI receiving unit 303 one-way through a plurality of channels. Here, the effective image interval is the interval from one vertical synchronization signal to the next vertical synchronization signal from which a horizontal blanking interval and a vertical blanking interval are removed. Also, in the horizontal blanking interval or the vertical blanking interval, the HDMI transmitting unit 206 transmits a differential signal corresponding to at least audio data to be attached to an image, control data, other auxiliary data, and the like to the HDMI receiving unit 303 one-way through a plurality of channels.

Transmission channels of an HDMI system formed of the HDMI transmitting unit 206 and the HDMI receiving unit 303 include the following transmission channels. That is, there are three TMDS channels #0 to #2 serving as transmission channels for one-way serial transmission of pixel data and audio data from the HDMI transmitting unit 206 to the HDMI receiving unit 303 in synchronization with pixel clocks. Also, there is a TMDS clock channel serving as a transmission channel that transmits a pixel clock.

The HDMI transmitting unit 206 includes an HDMI transmitter 81. The transmitter 81 converts, for example, pixel data of an uncompressed image into a corresponding differential signal, and serially transmits the differential signal one-way to the HDMI receiving unit 303, which is connected via the HDMI cable 400, through the three TMDS channels #0, #1, and #2 that are a plurality of channels.

Also, the transmitter 81 converts audio data to be attached to the uncompressed image and also necessary data, other auxiliary data, and the like to corresponding differential signals, and serially transmits the differential signals one-way to the HDMI receiving unit 303 through the three TMDS channels #0, #1, and #2.

Furthermore, the transmitter 81 transmits a pixel clock synchronized with the pixel data to be transmitted through the three TMDS channels #0, #1, and #2 to the HDMI receiving unit 303, which is connected via the HDMI cable 400, through the TMDS clock channel. Here, 10-bit pixel data is transmitted through one TMDS channel #i (i = 0, 1, 2) during one clock of the pixel clocks.

The HDMI receiving unit 303 receives a differential signal corresponding to pixel data that is transmitted one-way from the HDMI transmitting unit 206 through a plurality of channels in the active video interval. Also, the HDMI receiving unit 303 receives a differential signal corresponding to audio data or control data that is transmitted one-way from the HDMI transmitting unit 206 through a plurality of channels in the horizontal blanking interval or the vertical blanking interval.

That is, the HDMI receiving unit 303 includes an HDMI receiver 82. The HDMI receiver 82 receives a differential signal corresponding to pixel data and a differential signal corresponding to audio data or control data, which are transmitted one-way from the HDMI transmitting unit 206 through the TMDS channels #0, #1, and #2. In this case, the differential signals are received in synchronization with the pixel clocks transmitted from the HDMI transmitting unit 206 through the TMDS clock channel.

Transmission channels of an HDMI system include, in addition to the TMDS channels #0 to #2 and TMDS clock channel described above, transmission channels called a DDC (Display Data Channel) 83 and a CEC line 84. The DDC 83 is formed of two signal lines that are not illustrated in the figure, which are included in the HDMI cable 400. The DDC 83 is used for the HDMI transmitting unit 206 to read E-EDID (Enhanced Extended Display Identification Data) from the HDMI receiving unit 303 connected via the HDMI cable 400.

That is, the HDMI receiving unit 303 includes, in addition to the HDMI receiver 81, an EDID ROM (Read Only Memory) 85 having stored therein E-EDID that is performance information regarding the performance thereof (Configuration/capability). The HDMI transmitting unit 206 reads the E-EDID from the HDMI receiving unit 303 connected via the HDMI cable 400 via the DDC 83 in accordance with, for example, a request from the CPU 211 (see Fig. 34).

The HDMI transmitting unit 206 sends the read E-EDID to the CPU 211. The CPU 211 stores the E-EDID in the flash ROM 212 or the DRAM 213. The CPU 211 can recognize the setting of the performance of the HDMI receiving unit 303 on the basis of the E-EDID. For example, the CPU 211 recognizes the television receiver 300 including the HDMI receiving unit 303 is capable of handling stereo image data, further, if it is capable of handling stereo image data, what TMDS transmission data structure the television receiver 300 can support, and the like.

The CEC line 84 is formed of one signal line that is not illustrated in the figure, which is included in the HDMI cable 400, and is used for two-way communication of control-use data between the HDMI transmitting unit 206 and the HDMI receiving unit 303. The CEC line 84 forms a control data line.

Also, the HDMI cable 400 contains a line (HPD line) 86 to be connected to a pin called HPD (Hot Plug Detect). A source device can detect the connection of a sink device by utilizing the line 86. Note that, in Fig. 43, the HPD line 86 is indicated with an arrow so as to indicate one direction from the sink to the source. However, the HPD line 86 is also used as an HEAC- line forming a bidirectional communication path, and, in this case, serves as a bidirectional line. Also, the HDMI cable 400 contains a line (power line) 87 that is used for supplying power from the source device to the sink device. Furthermore, the HDMI cable 400 contains a utility line 88.

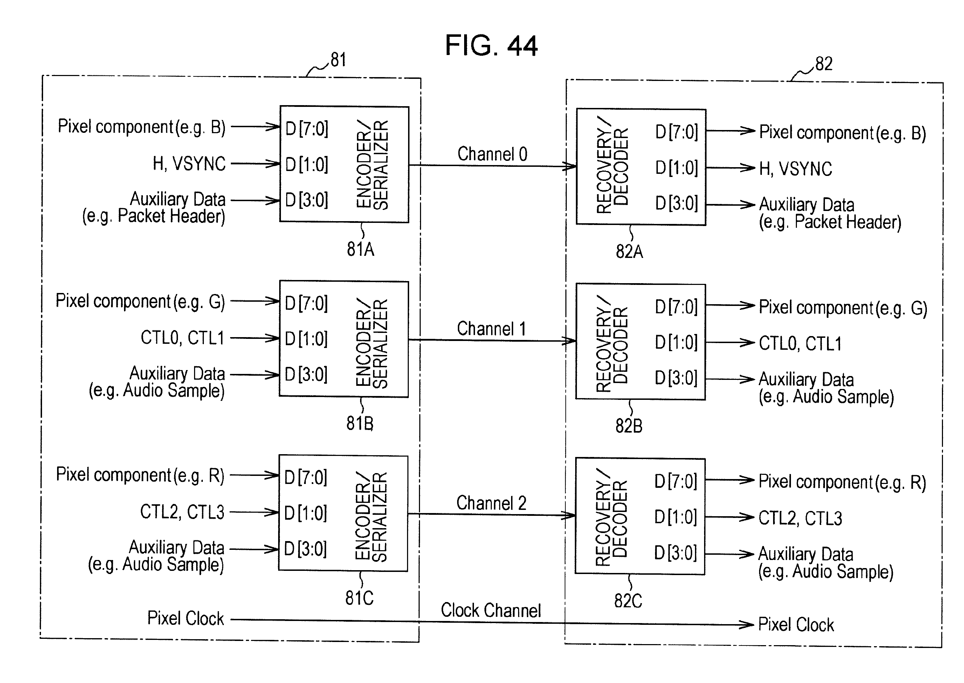

Fig. 44 illustrates an example configuration of the HDMI transmitter 81 and the HDMI receiver 82 in Fig. 43. The HDMI transmitter 81 includes three encoders/serializers 81A, 81B, and 81C corresponding to the three TMDS channels #0, #1, and #2, respectively. Then, each of the encoders/serializers 81A, 81B, and 81C encodes image data, auxiliary data, and control data supplied thereto, converts them from parallel data to serial data, and transmits resulting data using a differential signal. Here, in a case where the image data includes, for example, three R, G, and B components, the B component is supplied to the encoder/serializer 81A, the G component is supplied to the encoder/serializer 81B, and the R component is supplied to the encoder/serializer 81C.

Also, examples of the auxiliary data include audio data and a control packet. For example, the control packet is supplied to the encoder/serializer 81A, and the audio data is supplied to the encoders/serializers 81B and 81C. Furthermore, the control data includes a 1-bit vertical synchronization signal (VSYNC), a 1-bit horizontal synchronization signal (HSYNC), and 1-bit control bits CTL0, CTL1, CTL2, and CTL3. The vertical synchronization signal and the horizontal synchronization signal are supplied to the encoder/serializer 81A. The control bits CTL0 and CTL1 are supplied to the encoder/serializer 81B, and the control bits CTL2 and CTL3 are supplied to the encoder/serializer 81C.

The encoder/serializer 81A transmits the B component of the image data, the vertical synchronization signal, the horizontal synchronization signal, and the auxiliary data, which are supplied thereto, in a time division manner. That is, the encoder/serializer 81A sets the B component of the image data supplied thereto as parallel data in a unit of 8 bits, which is a fixed number of bits. Furthermore, the encoder/serializer 81A encodes the parallel data, converts it into serial data, and transmits the serial data through the TMDS channel #0.

Also, the encoder/serializer 81A encodes the vertical synchronization signal and horizontal synchronization signal, i.e., 2-bit parallel data, which are supplied thereto, converts the data into serial data, and transmits the serial data through the TMDS channel #0. Furthermore, the encoder/serializer 81A sets the auxiliary data supplied thereto as parallel data in a unit of 4 bits. Then, the encoder/serializer 81A encodes the parallel data, converts it into serial data, and transmits the serial data through the TMDS channel #0.

The encoder/serializer 81B transmits the G component of the image data, the control bits CTL0 and CTL1, and the auxiliary data, which are supplied thereto, in a time division manner. That is, the encoder/serializer 81B sets the G component of the image data supplied thereto as parallel data in a unit of 8 bits, which is a fixed number of bits. Furthermore, the encoder/serializer 81B encodes the parallel data, converts it into serial data, and transmits the serial data through the TMDS channel #1.

Also, the encoder/serializer 81B encodes the control bits CTL0 and CTL1, i.e., 2-bit parallel data, which are supplied thereto, converts the data into serial data, and transmits the serial data through the TMDS channel #1. Furthermore, the encoder/serializer 81B sets the auxiliary data supplied thereto as parallel data in a unit of 4 bits. Then, the encoder/serializer 81B encodes the parallel data, converts it into serial data, and transmits the serial data through the TMDS channel #1.

The encoder/serializer 81C transmits the R component of the image data, the control bits CTL2 and CTL3, and the auxiliary data, which are supplied thereto, in a time division manner. That is, the encoder/serializer 81C sets the R component of the image data supplied thereto as parallel data in a unit of 8 bits, which is a fixed number of bits. Furthermore, the encoder/serializer 81C encodes the parallel data, converts it into serial data, and transmits the serial data through the TMDS channel #2.

Also, the encoder/serializer 81C encodes the control bits CTL2 and CTL3, i.e., 2-bit parallel data, which are supplied thereto, converts the data into serial data, and transmits the serial data through the TMDS channel #2. Furthermore, the encoder/serializer 81C sets the auxiliary data supplied thereto as parallel data in a unit of 4 bits. Then, the encoder/serializer 81C encodes the parallel data into serial data, and transmits the serial data through the TMDS channel #2.

The HDMI receiver 82 includes three recovery/decoders 82A, 82B, and 82C corresponding to the three TMDS channels #0, #1, and #2, respectively. Then, each of the recovery/decoders 82A, 82B, and 82C receives the image data, the auxiliary data, and the control data which are transmitted using a differential signal through the corresponding one of the TMDS channels #0, #1, and #2. Furthermore, each of the recovery/decoders 82A, 82B, and 82C converts the image data, the auxiliary data, and the control data from serial data to parallel data, and further decodes and outputs them.

That is, the recovery/decoder 82A receives the B component of the image data, the vertical synchronization signal, the horizontal synchronization signal, and the auxiliary data, which are transmitted using a differential signal through the TMDS channel #0. Then, the recovery/decoder 82A converts the B component of the image data, the vertical synchronization signal, the horizontal synchronization signal, and the auxiliary data from serial data to parallel data, and decodes and outputs them.

The recovery/decoder 82B receives the G component of the image data, the control bits CTL0 and CTL1, and the auxiliary data, which are transmitted using a differential signal through the TMDS channel #1. Then, the recovery/decoder 82B converts the G component of the image data, the control bits CTL0 and CTL1, and the auxiliary data from serial data to parallel data, and decodes and outputs them.

The recovery/decoder 82C receives the R component of the image data, the control bits CTL2 and CTL3, and the auxiliary data, which are transmitted using a differential signal through the TMDS channel #2. Then, the recovery/decoder 82C converts the R component of the image data, the control bits CTL2 and CTL3, and the auxiliary data from serial data to parallel data, and decodes and outputs them.

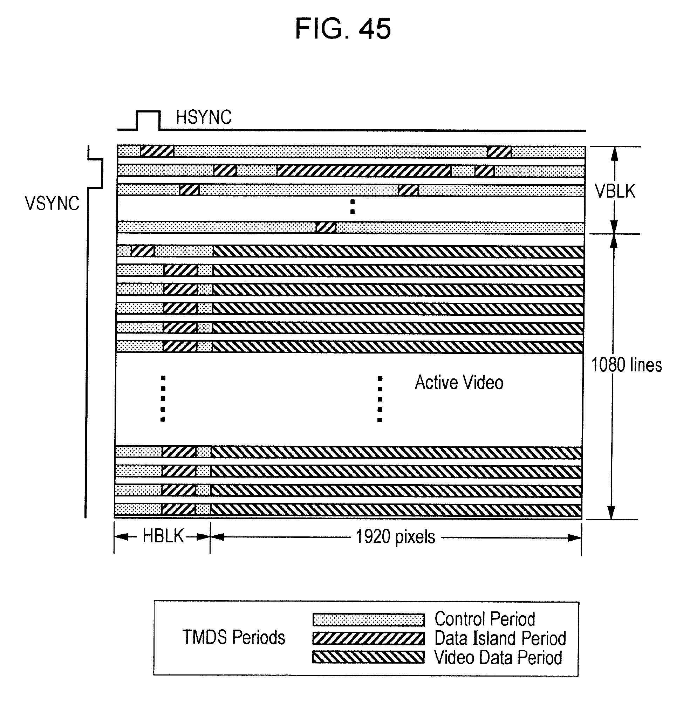

Fig. 45 illustrates an example structure of TMDS transmission data. Fig. 45 illustrates various transmission data intervals in a case where image data having 1920 pixels in the horizontal direction and 1080 lines in the vertical direction is transmitted through TMDS channels #0, #1, and #2.

A video field (Video Field) in which transmission data is transmitted through three TMDS channels #0, #1, and #2 of HDMI includes three types of intervals in accordance with the type of transmission data. The three types of intervals are a video data interval (Video Data period), a data island interval (Data Island period), and a control interval (Control period).

Here, a video field interval is an interval from the rising edge (active edge) of a certain vertical synchronization signal to the rising edge of the next vertical synchronization signal. This video field interval can be separated into a horizontal blanking period (horizontal blanking), a vertical blanking period (vertical blanking), and an active video interval (Active Video). The active video interval is an interval obtained by removing the horizontal blanking period and the vertical blanking period from the video field interval.

The video data interval is assigned in the active video interval. In the video data interval, data of effective pixels (Active pixels) having 1920 pixels x 1080 lines, which form uncompressed image data for one screen, is transmitted.

The data island interval and the control interval are assigned in the horizontal blanking period and the vertical blanking period. In the data island interval and the control interval, auxiliary data (Auxiliary data) is transmitted. That is, the data island interval is assigned in a portion of the horizontal blanking period and the vertical blanking period. In the data island interval, data that is not related to control within the auxiliary data, such as, for example, packets of audio data, is transmitted.

The control interval is assigned in the other portion of the horizontal blanking period and the vertical blanking period. In the control interval, data that is related to control within the auxiliary data, such as, for example, the vertical synchronization signal, the horizontal synchronization signal, and the control packet, is transmitted.

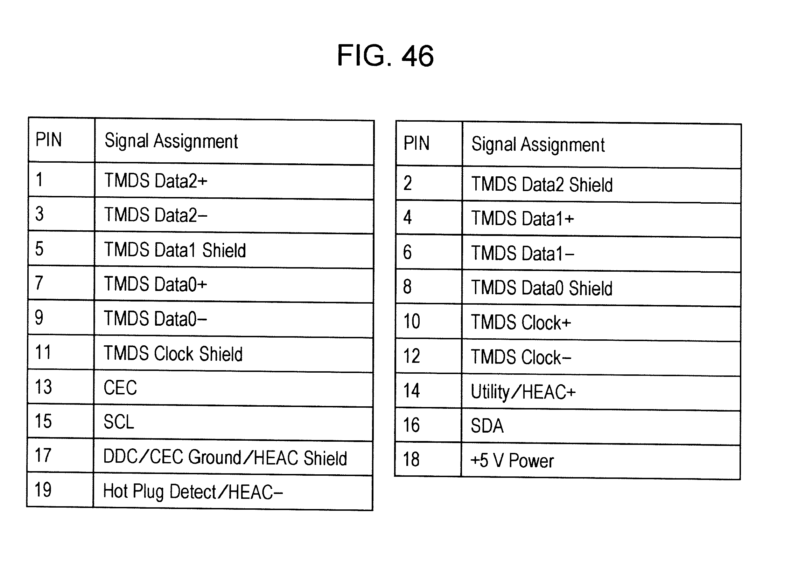

Fig. 46 illustrates an example pin array of HDMI terminals. The pin array illustrated in Fig. 46 is called type A (type-A). TMDS Data #i+ and TMDS Data #i-, which are differential signals on the TMDS channel #i, are transmitted via two lines that are differential lines. The two lines are connected to pins (pins with pin numbers 1, 4, and 7) to which the TMDS Data #i+ is assigned, and pins (pins with pin numbers 3, 6, and 9) to which the TMDS Data #i- is assigned.

Also, the CEC line 84 via which a CEC signal that is control-use data is transmitted is connected to a pin with pin number 13. Also, a line via which an SDA (Serial Data) signal such as E-EDID is transmitted is connected to a pin with pin number 16. A line via which an SCL (Serial Clock) signal that is a clock signal used for synchronization during transmission and reception of the SDA signal is transmitted is connected to a pin with pin number 15. The DDC 83 described above is composed of a line via which the SDA signal is transmitted and a line via which the SCL signal is transmitted.

Also, as described above, the HPD line (HEAC- line) 86 used by the source device to detect the connection of the sink device is connected to a pin with pin number 19. Also, the utility line (HEAC+ line) 88 is connected to a pin with pin number 14. Also, as described above, the line 87 via which power is supplied is connected to a pin with pin number 18.

### [TMDS Transmission Data Structure of Stereo Image Data]

Fig. 47 illustrates a 3D video format (3D Video Format) in the frame packing (Frame packing) method that is one TMDS transmission data structure of stereo image data. The 3D video format is a format for transmitting progressive left-eye (L) and right-eye (R) image data as stereo image data.

In the 3D video format, image data in a 1920 x 1080p or 1080 x 720p pixel format is transmitted as left-eye (L) and right-eye (R) image data. Note that in Fig. 47, an example in which each of left-eye (L) image data and right-eye (R) image data has 1920 lines x 1080 pixels is illustrated.

With the 3D video format, transmission data in which a video field period including a horizontal blanking period (Hblank), a vertical blanking period (Vblank), and an active video period (Hactive × Vactive) is used as a unit, which is sectioned by a vertical synchronization signal, is generated. In the 3D video format, the active video period has two active video areas (Active video) and one active space area (Active space) therebetween. Left-eye (L) image data is placed in the first active video area, and right-eye (R) image data is placed in the second active video area.

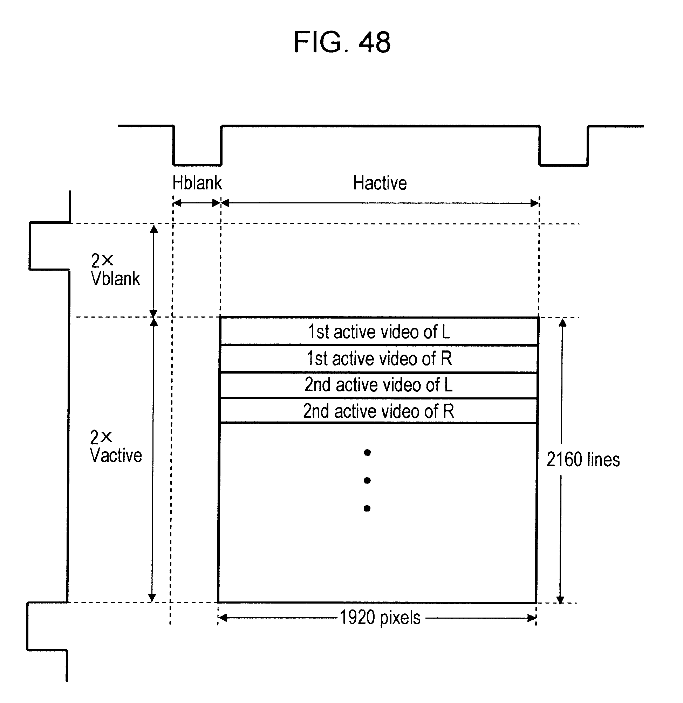

Fig. 48 illustrates a 3D video format (3D Video Format) in the line alternative (Line alternative) method that is one TMDS transmission data structure of stereo image data. The 3D video format is a format for transmitting progressive left-eye (L) and right-eye (R) image data as stereo image data. In the 3D video format, image data in a 1920 × 1080p pixel format is transmitted as left-eye (L) and right-eye (R) image data.

With the 3D video format, transmission data in which a video field period including a horizontal blanking period (Hblank), a vertical blanking period (2 × Vblank) and an active video period ((Hactive × 2Vactive) is used as a unit, which is sectioned by a vertical synchronization signal, is generated. In the 3D video format, in the active video period, one line of left-eye image data and one line of right-eye image data are alternately arranged.

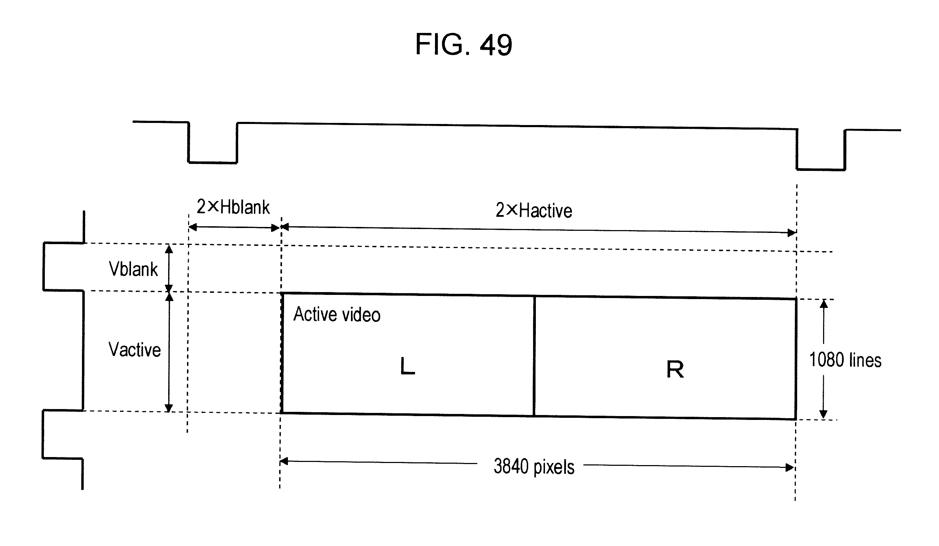

Fig. 49 illustrates a 3D video format (3D Video Format) in the side-by-side (side-bay-side) (Full) method that is one TMDS transmission data structure of stereo image data. The 3D video format is a format for transmitting progressive left-eye (L) and right-eye (R) image data as stereo image data. In the 3D video format, image data in a 1920 × 1080p pixel format is transmitted as left-eye (L) and right-eye (R) image data.

With the 3D video format, transmission data in which a video field period including a horizontal blanking period (2 × Hblank), a vertical blanking period (Vblank) and an active video period ((2Hactive × Vactive) is used as a unit, which is sectioned by a vertical synchronization signal, is generated. In the 3D video format, in the active video period, left-eye (L) image data is placed in the first half in the horizontal direction, and right-eye (R) image data is placed in the second half in the horizontal direction.

Note that, in HDMI 1.4, in addition to the 3D video format illustrated in Figs. 47 to 49 described above, a 3D video format serving as a TMDS transmission data structure of stereo image data is defined, although the detailed description is omitted. For example, the frame packing (Frame packing for interlaced format) method, the field alternative (Field alternative) method, the side-by-side (side-bay-side) (Half) method, and the like are defined.

### [HDMI Vendor Specific InfoFrame]

Information indicating whether the image data transmitted from the HDMI transmitting unit 206 to the HDMI receiving unit 303 is two-dimensional image data or three-dimensional (3D) image data (stereo image data) is included in an HDMI Vendor Specific InfoFrame packet. Furthermore, in the case of 3D image data, information indicating the TMDS transmission data structure is also included in this packet. This packet is arranged and transmitted in a data island interval in a blanking period.

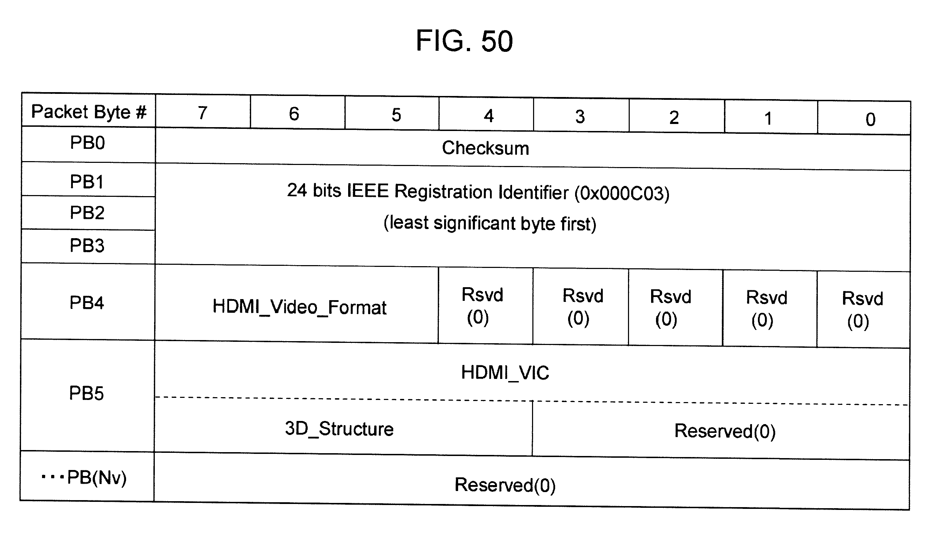

Fig. 50 illustrates an HDMI Vendor Specific InfoFrame packet structure. HDMI Vendor Specific InfoFrame is defined in CEA-861-D, the detailed description of which will be omitted.

Information "HDMI_Video_Format" of 3 bits indicating the type of image data is arranged in the fifth to seventh bits of the fourth byte (PB4). In a case where the image data is 3D image data, the information of 3 bits is set to "010". Also, in a case where the image data is 3D image data in this manner, information "3D_Structure" of 4 bits indicating the TMDS transmission data structure is arranged in the seventh to fourth bits of the fifth byte (PB5). For example, a the case of the frame packing method (see Fig. 47), the information of 4 bits is set to "0000". Also, for example, in a case of the line alternative method (see Fig. 48), the information of 4 bits is set to "0010". Also, for example, in the case of ide-by-side (Full) method (see Fig. 49), the information of 4 bits is set to "0011".

### [E-EDID Structure]

As described above, the HDMI transmitting unit 206 reads the E-EDID via the DDC 83 from the HDMI receiving unit 303 connected via the HDMI cable 400, in accordance with, for example, a request from the CPU 211 (see Fig. 34). Then, the CPU 211 recognizes, on the basis of the E-EDID, the setting of the performance of the HDMI receiving unit 303, for example, whether the HDMI receiving unit 303 is capable of handling stereo image data or not.

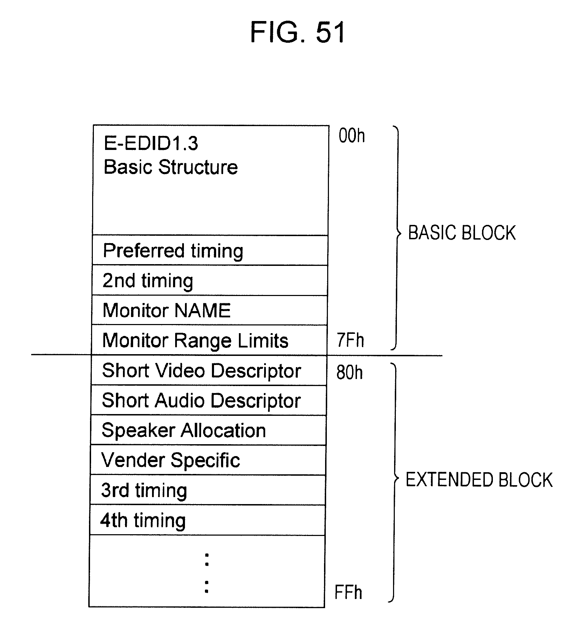

Fig. 51 illustrates an example data structure of E-EDID. The E-EDID is formed of a basic block and an extended block. In the basic block, data defined in the E-EDID 1.3 standard represented by "E-EDID 1.3 Basic Structure" is arranged at the beginning. In the basic block, timing information for ensuring the compatibility with conventional EDID represented by "Preferred timing" is subsequently arranged. Also, in the basic block, subsequently, timing information for ensuring the compatibility with conventional EDID represented by "2nd timing", which is different from "Preferred timing", is arranged.

Also, in the basic block, information indicating the name of a display apparatus represented by "Monitor NAME" is arranged subsequent to "2nd timing". In the basic block, subsequently, information indicating the number of pixels displayable in a case where the aspect ratio is 4:3 and 16:9, which is represented by "Monitor Range Limits".

At the beginning of the extended block, "Short Video Descriptor" is arranged. This is information indicating whether displayable image size (resolution), frame rate, and interlaced or progressive. Subsequently, "Short Audio Descriptor" is arranged. This is information such as reproducible audio codec method, sampling frequency, cut-off band, the number of codec bits. Subsequently, information regarding left and right speaker, which is indicated by "Speaker Allocation", is arranged.

Also, in the extended block, subsequently to the "Speaker Allocation", data defined uniquely for each vendor, which is represented by "Vender Specific", is arranged. In the extended block, subsequently, timing information for ensuring the compatibility with conventional EDID represented by "3rd timing" is arranged. In the extended block, further subsequently, timing information for ensuring the compatibility with conventional EDID represented by "4th timing" is arranged.

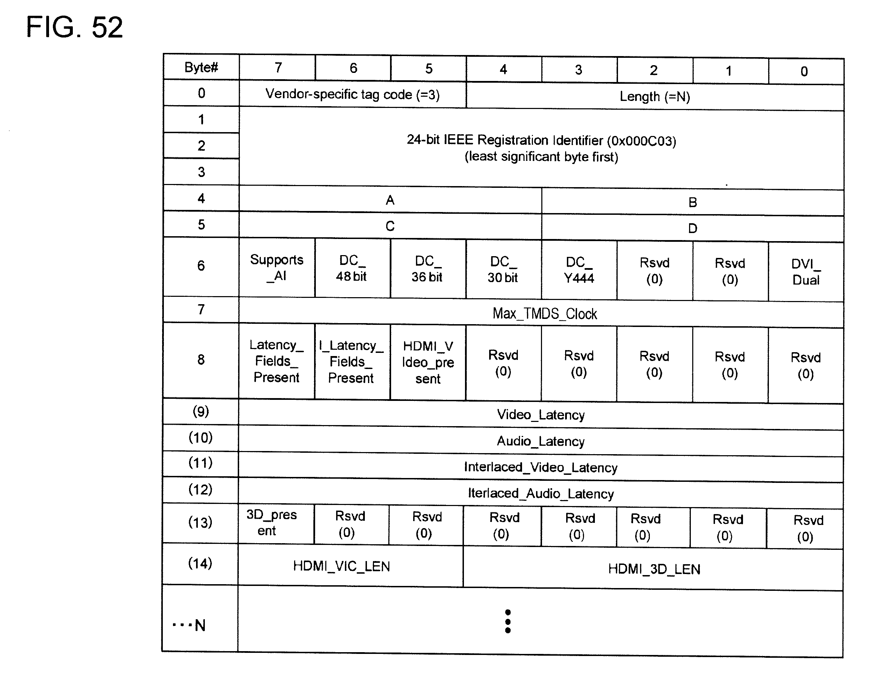

Fig. 52 illustrates an example data structure of Vender Specific area (HDMI Vendor Specific Data Block). In the Vender Specific area, the 0th block to the N-th block that are 1-byte blocks are provided.

In the 0th block, a header representing the data area of the data "Vender Specific", which is represented by "Vendor-Specific tag code (= 3)", is arranged. Also, in the 0th block, information indicating the length of the data "Vender Specific", which is represented by "Length (= N)", is arranged. Also, in the first to third blocks, information indicating number "0×000C03" registered for HDMI (R), which is represented by "24bit IEEE Registration Identifier(0×000C03)LSB first", is arranged. Furthermore, in the fourth and fifth blocks, information indicating the 24-bit physical addresses of the sink devices, which are represented by "A", "B", "C", and "D".

In the sixth block, a flag indicating the functionality corresponding to the sink devices, which is represented by "Supports-AI", is arranged. Also, in the sixth block, pieces of information specifying the number of bits per pixel, which are represented by "DC-48bit", "DC-36bit", and "DC-30bit", are arranged. Also, in the sixth block, a flag indicating whether the sink device supports the transmission of an image of YCbCr 4:4:4, which are represented by "DC-Y444", is arranged. Furthermore, in the sixth block, a flag indicating whether the sink device supports dual DVI (Digital Visual Interface), which is represented by "DVI-Dual", is arranged.

Also, in the seventh block, information indicating the maximum frequency of the TMDS pixel clock, which is represented by the "Max-TMDS-Clock", is arranged. Also, in the sixth bit and the seventh bit in the eighth block, a flag indicating the presence/absence of delay information for video and audio, which is represented by "Latency", is arranged. Also, in the fifth bit in the eighth block, a flag indicating whether or not handling of additional HDMI video format (3D, 4k × 2k) is enabled, which is represented by "HDMI_Video__present", is arranged.

Also, in the ninth block, delay time data of progressive video, which is represented by "Video Latency", is arranged, and, in the tenth block, delay time data of audio accompanying the progressive video, which is represented by "Audio Latency", is arranged. Also, in the eleventh block, delay time data of interlaced video, which is represented by "Interlaced Video Latency", is arranged. Furthermore, in the twelfth block, delay time data of audio accompanying the interlaced video, which is represented by "Interlaced Audio Latency", is arranged.

Also, in the seventh bit in the thirteenth block, a flag indicating whether or not handling of 3D image data is enabled, which is represented by "3D_present", is arranged. Also, in the seventh to fifth bits in the fourteenth block, size information of the block indicating the data structure that can be handled in addition to the mandatory 3D data structure arranged in the fifteenth block (not illustrated in the figure) or after that, which is represented by "HDMI_VIC_LEN", is arranged. Also, in the fourth to zeroth bits in the fourteenth block, size information of the block indicating a video format of 4k × 2k that can be handled in the fifteenth block (not illustrated in the figure) or after that, which is represented by "HDMI_3D_LEN", is arranged.

### [Another Example Configuration of Set-Top Box]

In the set-top box 200 illustrated in Fig. 34 described above, it is assumed that the HDMI transmitting unit 206 has a version of, for example, HDMI 1.4, and is in the state of being capable of handling stereo image data. Thus, the set-top box 200 can transmit stereo image data (3D image data) received from a broadcast signal to the television receiver 300 using an HDMI digital interface.

A set-top box having an HDMI transmitting unit that has a version of, for example, HDMI 1.3 or less and that is in the state of being incapable of handling stereo image data exists. In this set-top box, it is not possible to transmit stereo image data (3D image data) received from a broadcast signal to, as it is, a monitor device such as a television receiver using an HDMI digital interface. Even in this case, the capable to change the version of the HDMI transmitting unit to HDMI 1.4 using a certain method makes it possible to transmit stereo image data (3D image data) received from a broadcast signal to a monitor device using an HDMI digital interface.

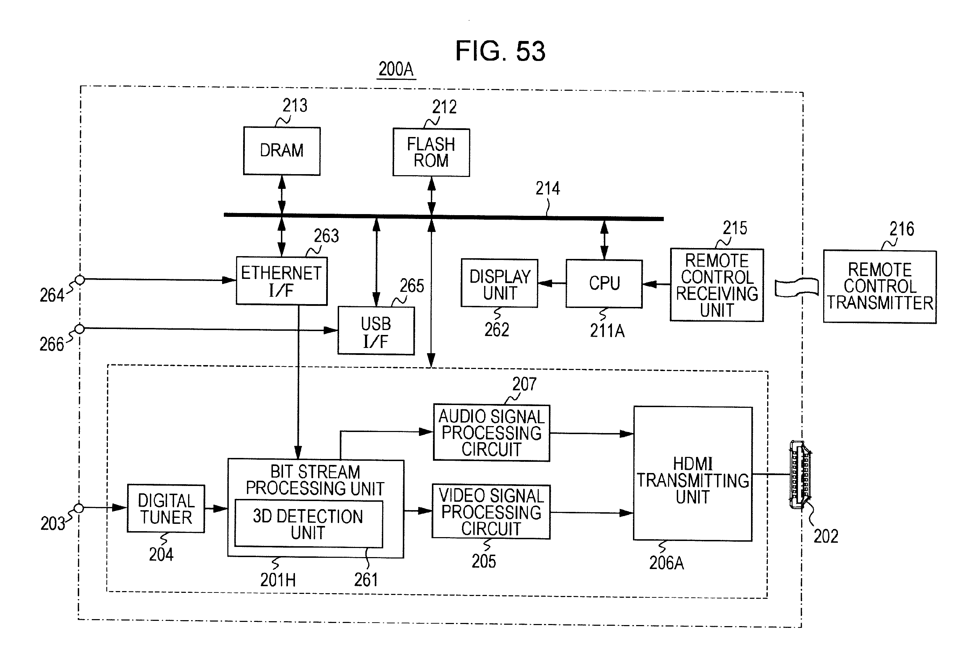

Fig. 53 illustrates an example configuration of a set-top box 200A. In Fig. 53, portions corresponding to those in Fig. 34 are assigned the same numerals. The set-top box 200A includes a bit stream processing unit 201H, an HDMI terminal 202, an antenna terminal 203, a digital tuner 204, a video signal processing circuit 205, an HDMI transmitting unit 206A, and an audio signal processing circuit 207.

Also, the set-top box 200A includes a CPU 211A, a flash ROM 212, a DRAM 213, an internal bus 214, a remote control receiving unit 215, and a remote control transmitter 216. Also, the set-top box 200A includes a 3D detection unit 261, a display unit 262, an Ethernet interface 263, a network terminal 264, a USB (Universal Serial Bus) interface 265, and a USB terminal 266. Note that "Ethernet" is a registered trademark.

The CPU 211A controls the operation of each unit of the set-top box 200A. The flash ROM 212 stores control software and holds data. The DRAM 213 forms a work area for the CPU 211A. The CPU 211A expands the software and data read from the flash ROM 212 onto the DRAM 213 to start the software, and controls each unit of the set-top box 200A. The display unit 262 forming a user interface is connected to the CPU 211A. The display unit 262 is composed of, for example, an LCD (Liquid Crystal Display) or the like. The display unit 262 displays, a user operation status, the operation state of the set-top box 200A, and the like.

The remote control receiving unit 215 receives a remote control signal (remote control code) transmitted from the remote control transmitter 216, and supplies the remote control signal to the CPU 211A. The CPU 211A controls each unit of the set-top box 200A on the basis of the remote control code. The CPU 211A, the flash ROM 212, the DRAM 213, the Ethernet interface 263, and the USB interface 265 are connected to the internal bus 214. Note that the network terminal 264 is connected to the Ethernet interface 263 and that the USB terminal 266 is connected to the USB interface 265.

The antenna terminal 203 is a terminal to which a television broadcast signal received by a receiving antenna that is not illustrated in the figure is input. The digital tuner 204 processes the television broadcast signal input to the antenna terminal 203, and acquires broadcast data (transport stream) corresponding to a channel selected by the user. The image data included in the broadcast data is two-dimensional image data or three-dimensional image data depending on the channel selected.

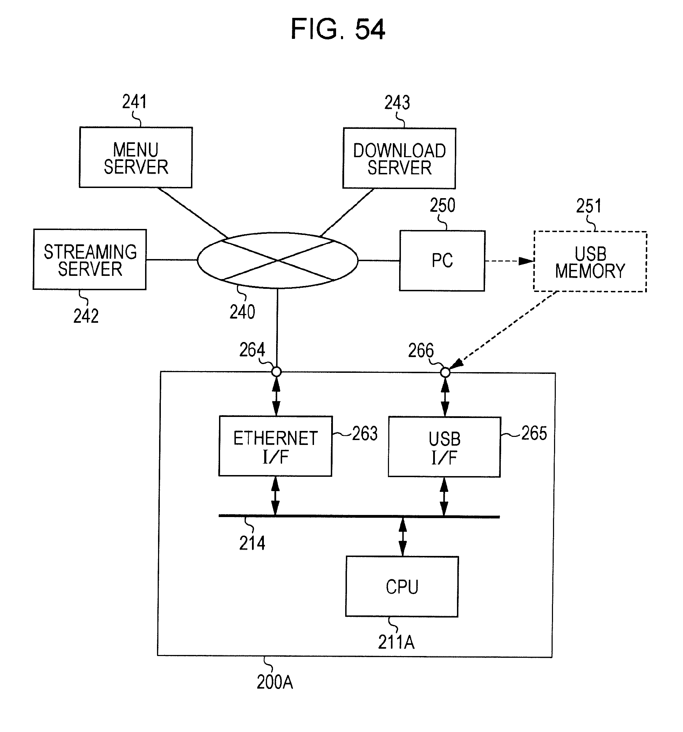

3D identification information is inserted in a header portion of broadcast data, i.e., private information of a transport stream, or in a compressed stream order to identify whether or not the image data is 3D image data. Also, when the image data included in the trasport stream is 3D image data, URL (Uniform Resource Locator) information for establishing a connection with a download server 243 (see Fig. 54) for downloading update digital interface control software is also inserted in the private information.

As illustrated in Fig. 54, the Ethernet interface 263 is connected to a network 240 such as the Internet via the network terminal 264. The Ethernet interface 263 acquires content information (such as meta-information or thumbnails) that can be received from a menu server 241 in accordance with a user operation. The content information is sent from the Ethernet interface 263 to the CPU 211A, and the content information thereof is displayed on the display unit 262 for allowing the user to perform a content selection operation.

Information about each content item contains, when the image data included in the content item is 3D image data (stereo image data), in other words, when the content item is 3D content, information indicating this fact. Furthermore, information about each content item also contains, when the content item is 3D content, URL (Uniform Resource Locator) information for establishing a connection with the download server 243 (see Fig. 54) for downloading digital interface control software.

Also, the Ethernet interface 263 receives distribution data corresponding to the content selected by the user from a streaming server 242 (see Fig. 54). The image data included in the distribution data (transport stream) serves as two-dimensional image data or 3D image data depending on the content selected. 3D identification information is inserted in a header portion of the distribution data, i.e., header information of a system container, or in a compressed stream in order to provide the capability to identify whether or not the image data is 3D image data.

The bit stream processing unit 201H acquires image data, audio data, and the like from the broadcast data obtained by the digital tuner 204 or the distribution data obtained by the Ethernet interface 263. The bit stream processing unit 201H includes the 3D detection unit 261. As described above, the 3D detection unit 261 identifies whether or not the image data is 3D image data on the basis of the 3D identification information inserted in the header portion or the like of the broadcast data or the distribution data. The 3D detection unit 261 sends the identification information to the CPU 211A.

The video signal processing circuit 205 performs an image quality adjustment process and the like, in accordance with necessity, on the image data obtained by the bit stream processing unit 201H, and supplies processed image data to the HDMI transmitting unit 206. In this case, in a case where the image data is 3D image data (stereo image data), for example, left-eye image data and right-eye image data are supplied from the video signal processing circuit 205 to the HDMI transmitting unit 206A. The audio signal processing circuit 207 performs an audio quality adjustment process and the like, in accordance with necessity, on the audio data obtained by the bit stream processing unit 201H, and sends processed audio data to the HDMI transmitting unit 206A.

The HDMI transmitting unit 206A delivers data of a baseband image and audio from the HDMI terminal 202 using HDMI-compliant communication. The HDMI transmitting unit 206A packs the data of the image and audio and outputs the data of the image and audio to the HDMI terminal 202 for transmission through an HDMI TMDS channel. The HDMI transmitting unit 206A forms a digital interface unit.

The operation of the set-top box 200A will be described briefly. The received data (broadcast data) obtained by the digital tuner 204 or the received data (distribution data) obtained by the Ethernet interface 263 is supplied to the bit stream processing unit 201H. In the bit stream processing unit 201H, image data, audio data, and the like are acquired from the received data.

The image data obtained by the bit stream processing unit 201H is subjected to an image quality adjustment process and the like in accordance with necessity by the video signal processing circuit 205, and is thereafter supplied to the HDMI transmitting unit 206A. Also, the audio data obtained by the bit stream processing unit 201H is subjected to an audio quality adjustment process and the like in accordance with necessity by the audio signal processing circuit 207, and is thereafter supplied to the HDMI transmitting unit 206A. In the HDMI transmitting unit 206A, the data of the image and audio is packed and is output to the HDMI terminal 202.

It is assumed that, initially, the HDMI transmitting unit 206A has a version of, for example, HDMI 1.3. Thus, the HDMI transmitting unit 206A is in the state of being incapable of handling 3D image data. The version of the HDMI transmitting unit 206A is changed to HDMI 1.4 in which 3D image data can be handled at a predetermined timing under control of the CPU 211A.

For example, when the image data included in the received data described above is 3D image data and when the television receiver 300 is capable of handling 3D image data, the CPU 211A performs an update process for changing the version of the HDMI transmitting unit 206A to HDMI 1.4. In this sense, the CPU 211A performs to-be-said control of the controls state changing unit. The CPU 211A determines, based on the identification information from the 3D detection unit 261, whether or not the image data included in the received data is 3D image data. Also, the CPU 211A determines, based on a flag represented by "3D_present" in the Vender Specific area of E-EDID read from the HDMI receiving unit 303 of the television receiver 300, whether or not the television receiver 300 is capable of handling 3D image data (see Fig. 52).

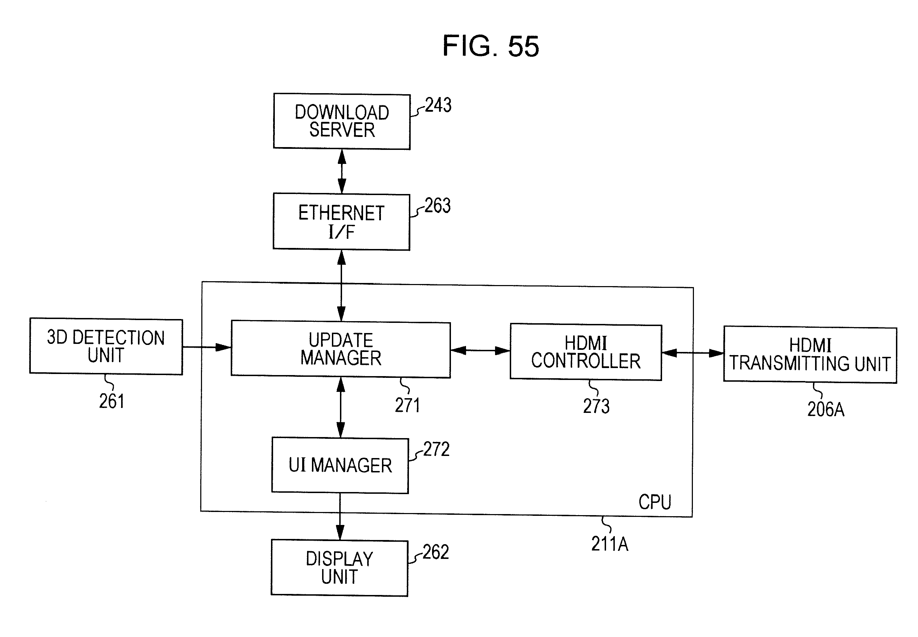

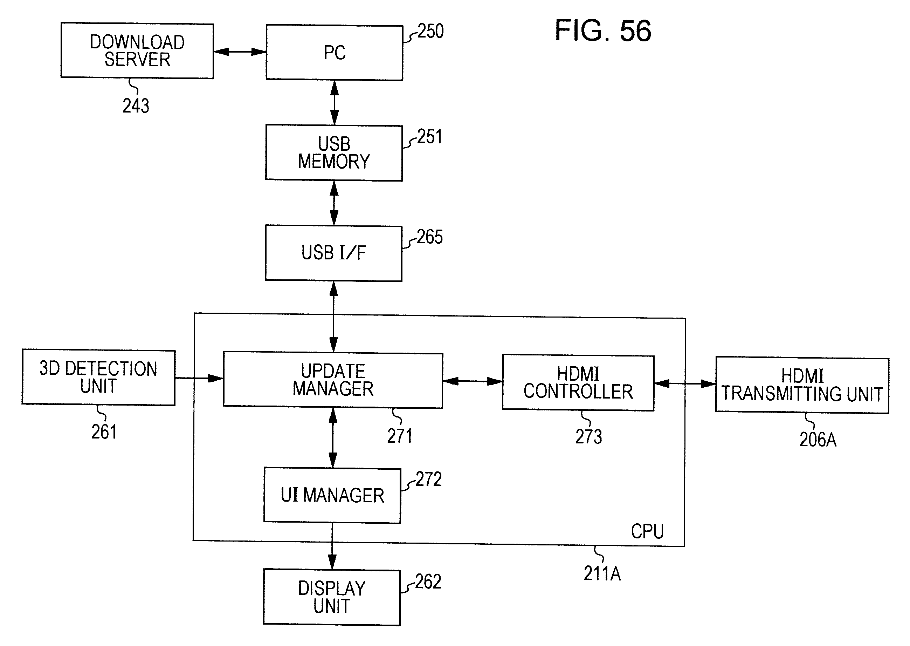

As illustrated in Figs. 55 and 56, the CPU 211A includes an update manager 271, and a UI (User Interface) manager 272, and an HDMI controller 273. The HDMI controller 273 controls the operation of the HDMI transmitting unit 206A. The HDMI controller 273 forms a digital interface control unit. The update manager 271 performs a process for determining whether or not to perform an update process for changing the version of the HDMI transmitting unit 206A to HDMI 1.4.

Also, during the update process, the update manager 271 installs update digital interface control software (including update of the Vendor Specific InfoFrame definition portion) into the HDMI controller 273 for update. Note that in a case where this update is not successful, the software storage memory (not illustrated) of the HDMI controller 273 has at least a two-bank configuration in order to allow the previous control software to be continuously used. During the update process, the UI manager 272 displays necessary information on the display unit 262.

In a case where the CPU 211A is in a network-connected state (on-line state) when performing an update process, update digital interface control software is downloaded from the download server 243 (see Fig. 54). Fig. 55 illustrates an update process in the on-line state. In this case, the update manager 271 is connected to the download server 243 via the Ethernet interface 263, downloads update digital interface control software from the download server 243, and installs it into the HDMI controller 273.

For example, in order to establish a connection with the download server 243, as described above, the update manager 271 uses the URL information included in the 3D content information obtained from the menu server 241. Also, for example, in order to establish a connection with the download server 243, as described above, the update manager 271 uses the URL information inserted in the private information of the broadcast data.

Note that the update manager 271 sends, when downloading update digital interface control software from the download server 243, a download request including user identification information to the download server 243. Upon acknowledgement of authorized use on the basis of, for example, the user identification information, the download server 243 transmits the update digital interface control software to the set-top box 200A. It is assumed that the user identification information can be acquired in advance through, for example, user registration in the set-top box 200A via a network.

In a case where the CPU 211A is in a network-unconnected state (off-line state) when performing an update process, update digital interface control software is read from an external memory, or in this embodiment, a USB memory 251 (see Fig. 54). The USB memory 251 stores, in advance, update digital interface control software downloaded by a PC (Personal Computer) 250 from the download server 243.

Note that the PC 250 sends, when downloading update digital interface control software from the download server 243, a download request including user identification information to the download server 243. Upon acknowledgement of authorized use on the basis of, for example, the user identification information, the download server 243 transmits the update digital interface control software to the PC 250. It is assumed that the user identification information can be acquired in advance through, for example, user registration of the set-top box 200A in the PC 250 via a network.

Fig. 56 illustrates an update process in the off-line state. In this case, the update manager 271 reads update digital interface control software from the USB memory 251 via the USB interface 265, and installs it into the HDMI controller 273.

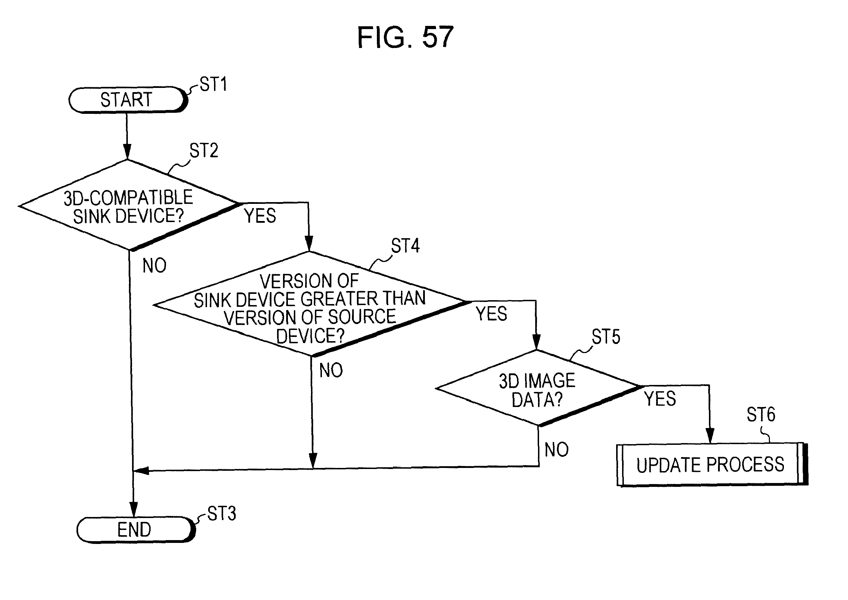

A flowchart of Fig. 57 illustrates an example of an update-related process of the CPU 211A. The update manager 271 performs the process at the timing when, for example, the set-top box 200A is in a power-on state and when the connection of the television receiver 300 is confirmed using an HPD line.

In step ST1, the update manager 271 starts the process, and thereafter proceeds to the processing of step ST2. In step ST2, the update manager 271 determines whether or not the sink device is 3D-compatible, i.e., whether or not the television receiver 300 is capable of handling 3D image data. The update manager 271 determines whether or not the television receiver 300 is capable of handling 3D image data by using a flag represented by "3D_present" in the Vender Specific area of E-EDID read from the HDMI receiving unit 303 of the television receiver 300 (see Fig. 52).

Note that, as described above, when the connection of the television receiver 300 is confirmed using an HPD line, in accordance with a request from the CPU 211A (see Fig. 53), the HDMI transmitting unit 206A reads E-EDID from the HDMI receiving unit 303 of the television receiver 300, and sends it to the CPU 211A. The CPU 211A stores the E-EDID in the flash ROM 212 or the DRAM 213. Thus, in the determination of step ST2, the update manager 271 can refer to the flag represented by "3D_present" in the Vender Specific area of the E-EDID.

When the sink device is not 3D-compatible, the update manager 271 immediately advances to step ST3, and terminates the process without performing an update process. Note that in a case where the process is terminated in this manner, in a case where the user thereafter selects 3D content on the basis of menu display based on the content information from the menu server 241, the connection of a monitor incapable of supporting 3D display may be displayed on the display unit 262 to remind the user to pay attention.

When in step ST2, the sink device is 3D-compatible, the update manager 271 proceeds to the processing of step ST4. In step ST4, the update manager 271 determines whether or not the version of the sink device is greater than the version of the source device. In order to obtain knowledge about the version of the sink device, specifically, the update manager 271 checks the 3D_Ext_data of Vendor Specific InfoFrame Extension of the E-EDID to confirm the increase of the 3D_structure. In this case, the update manager 271 determines whether or not the version of the HDMI transmitting unit 206A is HDMI 1.3 in which 3D image data cannot be handled while the version of the television receiver 300 is HDMI 1.4.

When the version of the HDMI transmitting unit 206A has already been changed to HDMI 1.4 in which 3D image data can be handled, the update manager 271 immediately advances to step ST3, and terminates the process without performing an update process. On the other hand, when the version of the HDMI transmitting unit 206A is HDMI 1.3, the update manager 271 proceeds to the processing of step ST5.

In step ST5, the update manager 271 determines whether or not the image data included in the received data (broadcast data or distribution data) to be processed by the bit stream processing unit 201H is 3D image data. The update manager 271 determines whether or not the image data is 3D image data on the basis of the identification information about the 3D detection unit 261 included in the bit stream processing unit 201H. Note that, as described above, the 3D detection unit 261 identifies whether or not the image data is 3D image data on the basis of the 3D identification information inserted in the header portion or the like of the broadcast data or the distribution data.

When the image data is not 3D image data, the update manager 271 immediately advances to step ST3, and terminates the process without performing an update process. On the other hand, when the image data is 3D image data, the update manager 271 advances to step ST6, and proceeds to an update process.

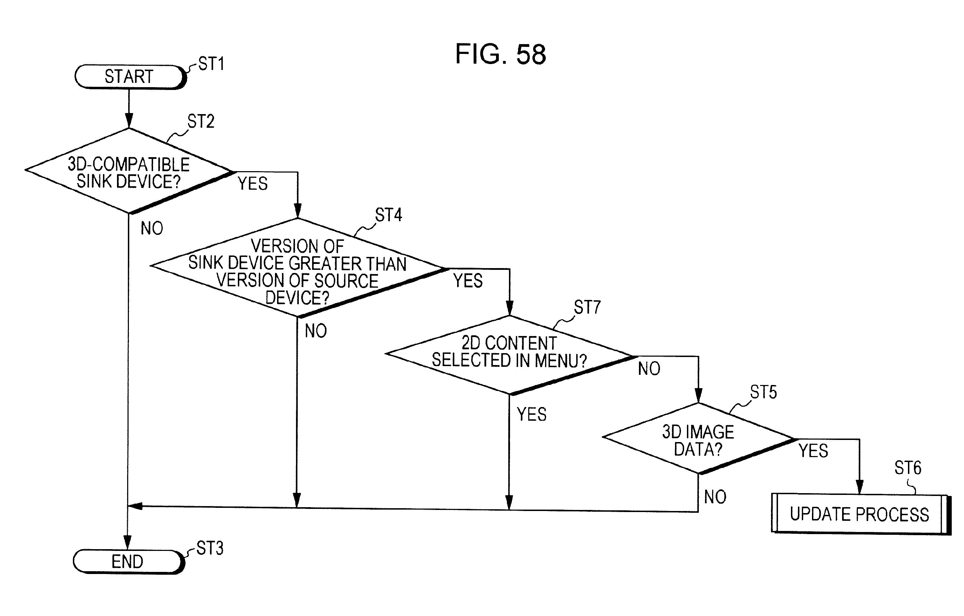

Note that the CPU 211A may perform the process according to the flowchart of Fig. 58 in place of the flowchart of Fig. 57. In Fig. 58, portions corresponding to those in Fig. 57 are assigned the same numerals. When in step ST4, the version of the sink device is not greater than the version of the source device, i.e., the version of the HDMI transmitting unit 206A is HDMI 1.3, the update manager 271 proceeds to the processing of step ST7.

In step ST7, the update manager 271 determines whether or not 2D content (content whose image data is two-dimensional image data) has been selected on the basis of menu display based on the content information from the menu server 241. When 2D content has been selected, the update manager 271 immediately advances to step ST3, and terminates the process without performing an update process. On the other hand, when 2D content has not been selected, the update manager 271 proceeds to the processing of step ST5.

In the flowchart of Fig. 58, the other portions are similar to those in the flowchart of Fig. 57. As in the flowchart of Fig. 58, the determination processing of step ST7 is included, thus allowing the process to be terminated immediately, when 2D content has been selected, without performing the determination processing of step ST5.

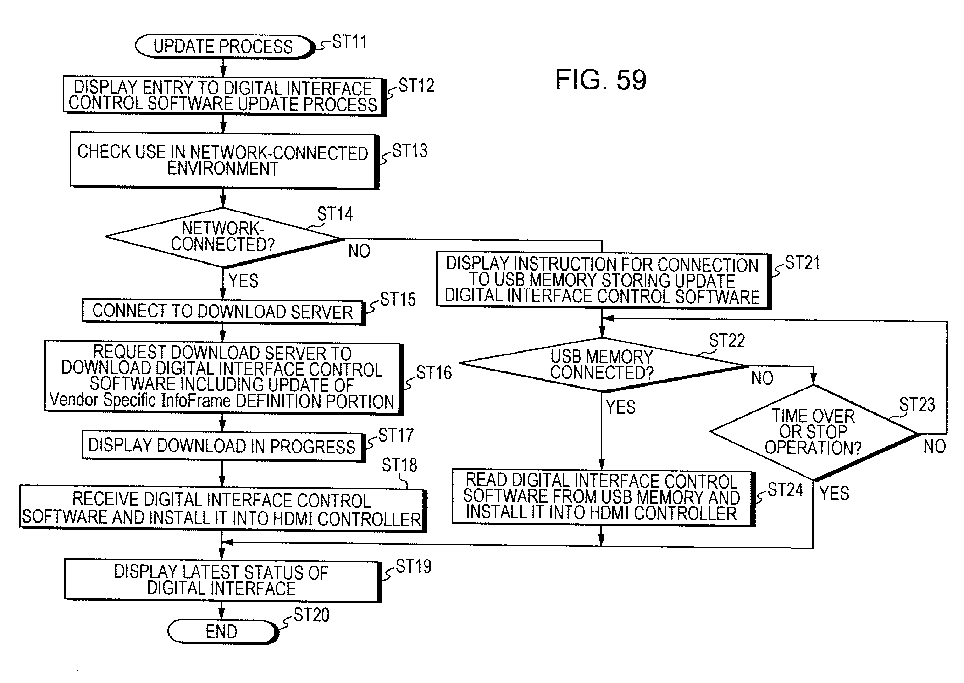

A flowchart of Fig. 59 illustrates an example of an update process (processing of step ST6 in Figs. 58 and 59) in the CPU 211A. In step ST11, the CPU 211A starts the update process, and thereafter proceeds to the processing of step ST12.

In step ST12, the UI manager 272 displays the entry to a digital interface control software update process on the display unit 262. Also, in step ST13, the update manager 271 checks whether the current environment is a network-connected environment (on-line state). Then, in step ST14, the update manager 271 determines whether or not a network connection has been established.

When a network connection has been established, in step ST15, the update manager 271 is connected to the download server 243 via the Ethernet interface 263. Then, in step ST16, the update manager 271 requests the download server 243 to download update digital interface control software including the Vendor Specific InfoFrame definition portion. Information about the request includes user identification information. Upon acknowledgement of authorized use on the basis of, for example, the user identification information, the download server 243 transmits the update digital interface control software to the set-top box 200A.

Next, in step ST17, the UI manager 272 displays an indication on the display unit 262 that the update digital interface control software is currently being downloaded. Then, in step ST18, the update manager 271 receives the update digital interface control software from the download server 243, and installs it into the HDMI controller 273.

Next, in step ST19, the UI manager 272 displays the latest status of the HDMI digital interface on the display unit 262. For example, when an update is set up in the processing of step ST18, an indication is displayed that the version is HDMI 1.4, whereas, when an update is not set up due to a certain problem in the processing of step ST18, an indication is displayed that the version is HDMI 1.3. After the processing of step ST19, in step ST20, the CPU 211A terminates the process.

Also, when in step ST14, no network connection has been established, in step ST21, the UI manager 272 displays an instruction on the display unit 262 for connecting a USB memory (external memory) 251 storing the update digital interface control software. Then, in step ST22, the update manager 271 determines whether or not the USB memory 251 has been connected.

When the USB memory 251 has not been connected, in step ST23, the update manager 271 determines whether a time over occurs or whether a stop operation has been performed by a user. When a time over occurs or a stop operation has been performed by a user, the UI manager 272 immediately advances to step ST19, and displays the latest status of the HDMI digital interface. In this case, the digital interface control software of the HDMI controller 273 has not been updated, and no update has been set up. Thus, an indication is displayed that the version is HDMI 1.3. After the processing of step ST19, in step ST20, the CPU 211A terminates the process.

Also, when in step ST22, the USB memory 251 has been connected, in step ST24, the update manager 271 reads the update digital interface control software from the USB memory 251 via the USB interface 265, and installs it into the HDMI controller 273.

Then, in step ST19, the UI manager 272 displays the latest status of the HDMI digital interface on the display unit 262. For example, when an update is set up in the processing of step ST24, an indication is displayed that the version is HDMI 1.4, whereas, an update is not set up due to a certain problem in the processing of step ST24, an indication is displayed that the version is HDMI 1.3. After the processing of step ST19, in step ST20, the CPU 211A terminates the process.

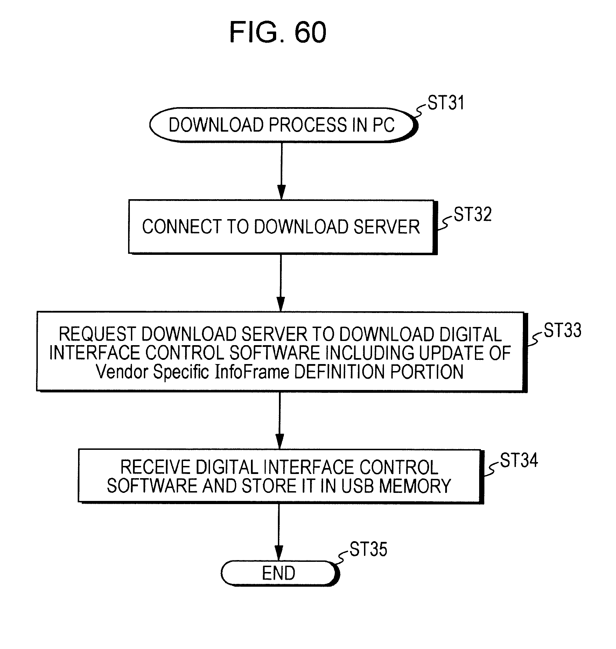

Note that a flowchart of Fig. 60 illustrates an example of a download process in the PC 250. In step ST31, the PC 250 starts the download process, and thereafter proceeds to the processing of step ST32.

In step ST32, the PC 250 is connected to the download server 243. Then, in step ST33, the PC 250 requests the download server 243 to download update digital interface control software including the Vendor Specific InfoFrame definition portion. Information about the request includes user identification information. Upon acknowledgement of authorized use on the basis of, for example, the user identification information, the download server 243 transmits the update digital interface control software to the PC 250.

Next, in step ST34, the PC 250 receives the update digital interface control software from the download server 243, and stores it in the USB memory 251. After the processing of step ST34, in step ST35, the PC 250 terminates the process.

As described above, in the stereo image display system 10 illustrated in Fig. 1, disparity is given to the same superimposition information (such as closed caption information or subtitle information) to be superimposed on a left-eye image and a right-eye image on the basis of disparity information. Thus, superimposition information that has been subjected to disparity adjustment in accordance with the perspective of each object in an image can be used as the same superimposition information to be superimposed on the left-eye image and the right-eye image, and it is possible to maintain the consistency in perspective, in the display of the superimposition information, between the superimposition information and each object in the image.

Also, in the set-top box 200A illustrated in Fig. 53, even in a state where 3D image data cannot be handled due to the version of the HDMI transmitting unit 206A being initially HDMI 1.3, the version can be changed to HDMI 1.4 in accordance with necessity. Therefore, the necessity of transmission of 3D image data that is received image data to the television receiver 300 capable of handling 3D image data can be favorably dealt with using an HDMI digital interface.

### <2. Example Modifications>

Note that in the foregoing embodiment, a disparity vector at a predetermined position in an image is transmitted from the broadcast station 100 side to the set-top box 200. In this case, the set-top box 200 does not require the obtaining of the disparity vector based on left-eye image data and right-eye image data included in received stereo image data, and the process of the set-top box 200 is made easy.

However, it is also conceivable that a disparity vector detection unit equivalent to the disparity vector detection unit 114 in the transmission data generation unit 110 in Fig. 2 is arranged on the receiving side of stereo image data, in the embodiment described above, in the set-top box 200. In this case, even if no disparity vector is sent, it is possible to perform a process using a disparity vector.

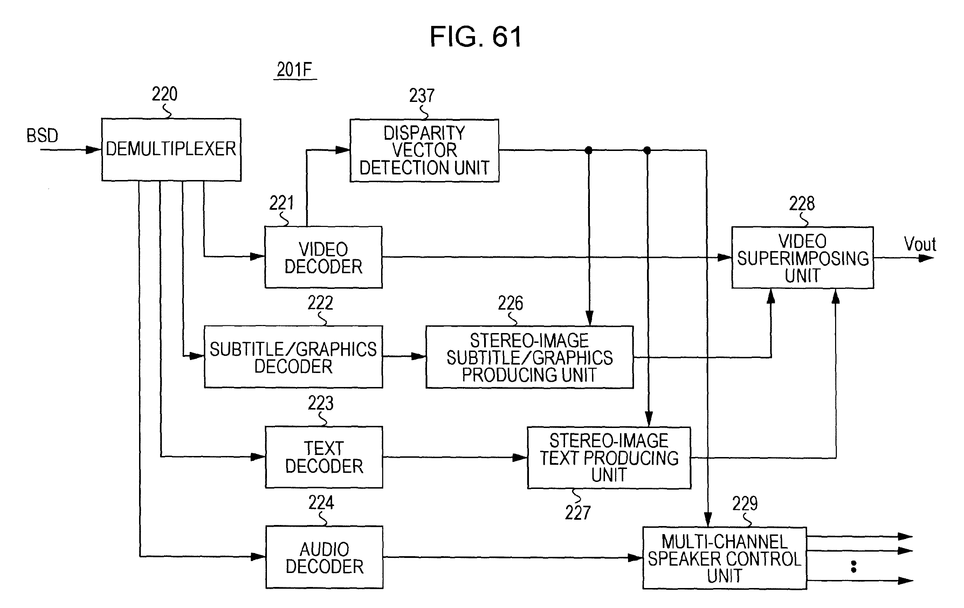

Fig. 61 illustrates an example configuration of a bit stream processing unit 201F provided in, for example, the set-top box 200. In Fig. 61, portions corresponding to those in Fig. 35 are assigned the same numerals, and the detailed description thereof is omitted. In the bit stream processing unit 201F, a disparity vector detection unit 237 is arranged in place of the disparity vector decoder 225 in the bit stream processing unit 201 illustrated in Fig. 35.

The disparity vector detection unit 237 detects a disparity vector at a predetermined position in an image on the basis of left-eye image data and right-eye image data that form stereo image data obtained by the video decoder 221. Then, the disparity vector detection unit 237 supplies the detected disparity vector to the stereo-image subtitle/graphics producing unit 226, the stereo-image text producing unit 227, and the multi-channel speaker output control unit 229.

The other elements of the bit stream processing unit 201F illustrated in Fig. 61 are configured in a manner similar to that of the bit stream processing unit 201 illustrated in Fig. 35, and operate in a similar manner although the detailed description is omitted.

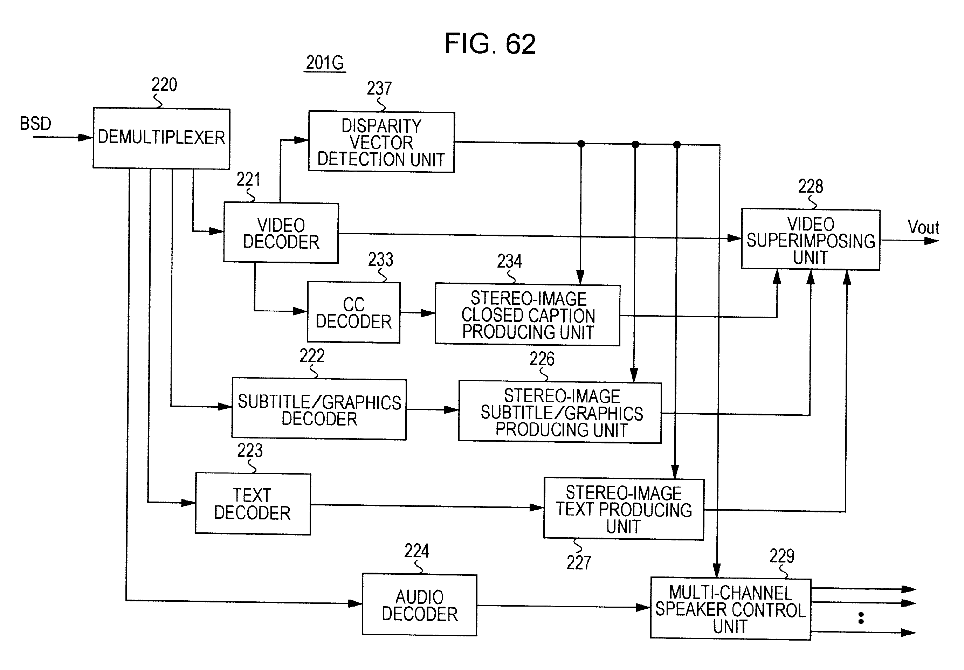

Also, Fig. 62 illustrates another example configuration of a bit stream processing unit 201G provided in, for example, the set-top box 200. In Fig. 62, portions corresponding to those in Figs. 35 and 39 are assigned the same numerals, and the detailed description thereof is omitted. In the bit stream processing unit 201G, a disparity vector detection unit 237 is arranged in place of the disparity information retrieving unit 232 the disparity vector decoder 225 in the bit stream processing unit 201C illustrated in Fig. 39.

The disparity vector detection unit 237 detects a disparity vector at a predetermined position in an image on the basis of left-eye image data and right-eye image data that form stereo image data obtained by the video decoder 221. The disparity vector detection unit 237 supplies the detected disparity vector to the stereo-image closed caption producing unit 234, the stereo-image subtitle/graphics producing unit 226, the stereo-image text producing unit 227, and the multi-channel speaker control unit 229.

The other elements of the bit stream processing unit 201G illustrated in Fig. 62 are configured in a manner similar to that of the bit stream processing unit 210C illustrated in Fig. 39, and operate in a similar manner although the detailed description is omitted.

Also, in the foregoing embodiment, the stereo image display system 10 that is composed of the broadcast station 100, the set-top box 200, and the television receiver 300 has been illustrated. However, as illustrated in Fig. 42, the television receiver 300 includes the bit stream processing unit 306 that functions in a manner equivalent to that of the bit stream processing unit 201 in the set-top box 200. Therefore, as illustrated in Fig. 63, a stereo image display system 10A composed of a broadcast station 100 and a television receiver 300 is also conceivable.

Also, in the foregoing exemplary embodiment, an example in which a data stream (bit stream data) including stereo image data is broadcast from the broadcast station 100 has been illustrated. However, of course, the present invention can also be similarly applied to a system having a configuration in which the data stream is distributed to a receiving terminal by utilizing a network such as the Internet.

Note that in the set-top box 200A illustrated in Fig. 53 described above, it is determined whether or not it is necessary to update the digital interface control software of the HDMI controller 273 at the timing when the set-top box 200A is in a power-on state and when the connection of the television receiver 300 is confirmed using an HPD line. Then, when received image data is 3D image data and when the television receiver (monitor device) 300 is capable of handling 3D image data, an update process is performed. However, the timing and condition of the update process are not limited to the above. For example, an update process may be performed immediately at the stage where 3D content is selected on the basis of menu information from the menu server 241.

Also, in the set-top box 200A illustrated in Fig. 53 described above, the configuration in which update digital interface control software downloaded thereby or by the PC 250 from the download server 243 is used when an update process is performed has been illustrated. However, the update digital interface control software may be acquired using any other method and an update process may be performed. For example, the update digital interface control software may be stored in advance in the flash ROM 212. Also, for example, an external memory storing the update digital interface control software, such as a USB memory or a memory card, may be purchased.

Also, in the set-top box 200A illustrated in Fig. 53 described above, the UI manager 272 displays necessary information on the display unit 262 of the set-top box 200A at the time of an update process. However, the UI manager 272 may produce image data for UI display for displaying the necessary information, and the image data may be transmitted to the television receiver 300 side via an HDMI digital interface and may be displayed on the display panel 309 (see Fig. 42).

Also, in the foregoing description, as illustrated in Fig. 53, the set-top box 200A is illustrated as an example of a source device that changes the version of the HDMI transmitting unit from HDMI 1.3 to HDMI 1.4 at a predetermined timing. However, a source device having the above function is not limited to a set-top box, and, for example, a disk player such as a BD or DVD player, further, a game console, or the like is also conceivable. Even in the above source devices, if the version of the HDMI transmitting unit is initially set to HDMI 1.3, after that, in a case where the handling of 3D image data is performed, it is possible to transmit the 3D image data to a sink device by performing an update process.

Also, in the foregoing description, the illustration is made of the application of an update process of a digital interface to an HDMI digital interface. However, of course, the present invention can also be applied to a similar digital interface (also including a wireless interface in addition to a wired interface).

Note that this application refers to Japanese Patent Application No. 2009-153686.

### Industrial Applicability

The present invention can be applied to an image display system that transmits image data using, for example, a digital interface such as an HDMI digital interface. Reference Signs List

10, 10A stereo image display system, 100 broadcast station, 110, 110A to 100E transmission data generation unit, 111L, 111R camera, 112 video framing unit, 113 video encoder, 113a stream formatter, 114 disparity vector detection unit, 115 disparity vector encoder, 116 microphone, 117 audio encoder, 118 subtitle/graphics producing unit, 119 subtitle/graphic encoder, 120 text producing unit, 121 text encoder, 122 multiplexer, 124 subtitle·graphics processing unit, 125 text processing unit, 126 controller, 127 CC encoder, 128 Z data unit, 129 disparity information encoder, 130 CC data processing unit, 200, 200A set-top box, 201, 201A to 201G, 201H bit stream processing unit, 202 HDMI terminal, 203 antenna terminal, 204 digital tuner, 205 video signal processing circuit, 206, 206A HDMI transmitting unit, 207 audio signal processing circuit, 211, 211A CPU, 212 flash ROM, 213 DRAM, 214 internal bus, 215 remote control receiving unit, 216 remote control transmitter, 220 demultiplexer, 221 video decoder, 222 subtitle/graphics decoder, 223 text decoder, 224 audio decoder, 225 disparity vector decoder, 226 stereo-image subtitle/graphics producing unit, 227 stereo-image text producing unit, 228 video superimposing unit, 229 multi-channel speaker control unit, 231 disparity vector retrieving unit, 232 disparity information retrieving unit, 233 CC decoder, 234 stereo-image closed caption producing unit, 235 disparity information retrieving unit, 236 CC decoder, 237 disparity vector detection unit, 240 network, 241 menu server, 242 streaming server, 243 download server, 250 PC, 251 USB memory, 261 3D detection unit, 262 display unit, 263 Ethernet interface, 264 network terminal, 265 USB interface, 266 USB terminal, 271 update manager, 272 UI manager, 273 HDMI controller, 300 television receiver, 301 3D signal processing unit, 302 HDMI terminal, 303 HDMI receiving unit, 304 antenna terminal, 305 digital tuner, 306 bit stream processing unit, 307 video signal processing circuit, 308 panel driving circuit, 309 display panel, 310 audio signal processing circuit, 311 audio amplification circuit, 312 speaker, 321 CPU, 322 flash ROM, 323 DRAM, 324 internal bus, 325 remote control receiving unit, 326 remote control transmitter, 400 HDMI cable

## Claims

1. An image data transmitting apparatus comprising:
a digital interface unit that transmits image data to an external device; and
a state changing unit that changes a state of the digital interface unit at a predetermined timing from a state of being incapable of handling stereo image data to a state of being capable of handling the stereo image data.

2. The image data transmitting apparatus according to Claim 1, further comprising a data receiving unit that receives the image data,
wherein the state changing unit changes the state of the digital interface unit from a state of being incapable of handling stereo image data to a state of being capable of handling the stereo image data when the image data received by the data receiving unit is stereo image data and when the external device is capable of handling the stereo image data.

3. The image data transmitting apparatus according to Claim 2,
wherein the data receiving unit receives the image data from a streaming server via a network.

4. The image data transmitting apparatus according to Claim 2,
wherein the data receiving unit receives the image data from a broadcast signal.

5. The image data transmitting apparatus according to Claim 1 or 2, further comprising a digital interface control unit that controls an operation of the digital interface unit,
wherein the state changing unit changes the state of the digital interface unit from a state of being incapable of handling stereo image data to a state of being capable of handling the stereo image data by installing update digital interface control software into the digital interface control unit.

6. The image data transmitting apparatus according to Claim 5, further comprising a network interface unit to which a download server is connected via a network,
wherein the chanting unit installs the update digital interface control software downloaded from the download server via the network interface unit into the digital interface control unit.

7. The image data transmitting apparatus according to Claim 5, further comprising an external memory interface unit to which an external memory is connected,
wherein the state changing unit installs the update digital interface control software read from the external memory via the external memory interface unit into the digital interface control unit.

8. The image data transmitting apparatus according to Claim 1,
wherein when the state of the digital interface unit is changed to a state of being capable of handling the stereo image data and when stereo image data is transmitted as the image data, identification information indicating stereo image data is inserted in a blanking period of the image data.

9. A control method for controlling a digital interface unit that transmits image data to an external device, comprising:
a state changing step of changing a state of the digital interface unit at a predetermined timing from a state of being incapable of handling stereo image data to a state of being capable of handling the stereo image data.

10. A program for causing a computer that controls a digital interface unit that transmits image data to an external device to function as:
state changing means for changing a state of the digital interface unit at a predetermined timing from a state of being incapable of handling stereo image data to a state of being capable of handling the stereo image data.
